(19) Europäisches Patentamt
European Patent Office
Office européen des brevets

(11) EP 1 858 943 B1

(12) EUROPEAN PATENT SPECIFICATION

(45) Date of publication and mention of the grant of the patent:
**16.02.2011 Bulletin 2011/07**

(21) Application number: **06738468.5**

(22) Date of filing: **15.03.2006**

(51) Int Cl.:
***C08F 297/08*** (2006.01) ***C08F 4/646*** (2006.01)
***C08F 2/38*** (2006.01) ***C08L 23/00*** (2006.01)

(86) International application number:
**PCT/US2006/009406**

(87) International publication number:
**WO 2006/101928 (28.09.2006 Gazette 2006/39)**

(54) **THERMOPLASTIC VULCANIZATE COMPRISING INTERPOLYMERS OF ETHYLENE/ -OLEFINS**

THERMOPLASTISCHES VULKANISAT MIT INTERPOLYMEREN VON ETHYLEN/-OLEFINEN

VULCANISAT THERMOPLASTIQUE COMPRENANT DES INTERPOLYMERES D'ETHYLENE/-OLEFINES

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.03.2005 US 8917 P**
**16.09.2005 US 718186 P**

(43) Date of publication of application:
**28.11.2007 Bulletin 2007/48**

(73) Proprietor: **DOW GLOBAL TECHNOLOGIES INC.**
**Midland, MI 48674 (US)**

(72) Inventors:
- **WALTON, Kim, Louis**
  **Lake Jackson, Texas 77566 (US)**
- **HUGHES, Morgan, Mark**
  **Angleton, Texas 77515 (US)**
- **RATH, Gary, L.**
  **Pearland, Texas 77584 (US)**
- **CHEUNG, Yunwa, Wilson**
  **Pittsford, NY 14534 (US)**

(74) Representative: **Hatzmann, Martin et al**
**Vereenigde**
**Johan de Wittlaan 7**
**2517 JR Den Haag (NL)**

(56) References cited:

| | |
|---|---|
| **EP-A1- 0 287 282** | **EP-A1- 0 741 164** |
| **EP-A2- 1 288 256** | **WO-A-2005/090425** |
| **WO-A-2005/090426** | **WO-A-2005/090427** |
| **US-A- 6 087 431** | **US-A- 6 143 828** |
| **US-B1- 6 433 090** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

This invention relates to thermoplastic vulcanizates with improved mechanical properties.

### BACKGROUND OF THE INVENTION

Elastomers are defined as materials which experience large reversible deformations under relatively low stress. Elastomers are typically characterized as having structural irregularities, non-polar structures, or flexible units in the polymer chain. Some examples of commercially available elastomers include natural rubber, ethylene/propylene (EPM) copolymers, ethylene/propylene/diene (EPDM) copolymers, styrene/butadiene copolymers, chlorinated polyethylene, and silicone rubber.

Thermoplastic elastomers are elastomers having thermoplastic properties. That is, thermoplastic elastomers are optionally molded or otherwise shaped and reprocessed at temperatures above their melting or softening point. One example of thermoplastic elastomers is styrene-butadiene-styrene (SBS) block copolymer. SBS block copolymers exhibit a two phase morphology consisting of glassy polystyrene domains connected by rubbery butadiene segments.

In contrast, thermoset elastomers are elastomers having thermoset properties. That is, thermoset elastomers irreversibly solidify or "set" when heated, generally due to an irreversible crosslinking reaction. A gel content of at least about 20 weight percent based on total elastomer as measured by xylene extraction is considered thermoset. Two examples of thermoset elastomers are crosslinked ethylene-propylene monomer rubber (EPM) and crosslinked ethylene-propylene-diene monomer rubber (EPDM). EPM materials are made by copolymerization of ethylene and propylene. EPM materials are typically cured with peroxides to give rise to crosslinking, and thereby induce thermoset properties. EPDM materials are linear interpolymers of ethylene, propylene, and a nonconjugated diene such as 1,4-hexadiene; dicyclopentadiene, or ethylidene norbornene. EPDM materials are typically vulcanized with sulfur to induce thermoset properties, although they also can be cured with peroxides. While EPM and EPDM materials are advantageous in that they have applicability in higher temperature applications, EPM and EPDM elastomers have relatively low green strength (at lower ethylene contents), relatively low oil resistance, and relatively low resistance to surface modification.

Thermoplastic vulcanizates (TPV's) comprises thermoplastic matrices, preferably crystalline, through which thermoset elastomers are generally uniformly distributed. Examples of thermoplastic vulcanizates include ethylene-propylene monomer rubber and ethylene-propylene-diene monomer rubber thermoset materials distributed in a crystalline polypropylene matrix. One example of a commercial TPV is Satoprene® thermoplastic rubber which is manufactured by Advanced Elastomer Systems and is a mixture of crosslinked EPDM particles in a crystalline polypropylene matrix. These materials have found utility in many applications which previously used vulcanized rubber, e.g., hoses, gaskets, and the like.

Commercial TPVs are typically based on vulcanizes rubbers in which a phenolic resin or sulfur cure system is used to vulcanize, that is to crosslink, a diene (or more generally, a polyene) copolymer rubber by way of dynamic vulcanization, that is crosslinking while mixing (typically vigorously), in a thermoplastic matrix.

Although numerous types of thermoplastic vulcanizates are known, there is still a need for improved thermoplastic materials having elastomeric properties. Specifically, there is a need for a method to produce thermoplastic vulcanizates having improved tensile properties, elongation, compression set, and/or oil resistance. The improved properties would benefit not only current applications of thermoplastic vulcanizates but also new applications which require high melt strength, including blow molding, foams and wire cables.

### SUMMARY OF THE INVENTION

The aforementioned needs are met by various aspects of the invention. In one aspect, the invention relates to a thermoplastic vulcanizate comprising or obtainable from a reaction mixture comprising: (i) a vulcanizable elastomer; (ii) a thermoplastic polyolefin; (iii) a crosslinking agent; and (iv) an ethylene/$\alpha$-olefin interpolymer as defined hereinbelow. In another aspect, the invention relates to a thermoplastic vulcanizate comprising or obtainable from a reaction mixture comprising: (i) a thermoplastic polyolefin, (ii) a crosslinking agent; and (iii) a vulcanizable elastomer which is an ethylene/propylene/diene block interpolymer as defined herein-after. The ethylene/$\alpha$-olefin block interpolymer or the ethylene/$\alpha$-olefin/diene block interpolymer is characterized by one or more of the following properties:

(a) having a Mw/Mn from 1.7 to 3.5, at least one melting point, Tm, in degrees Celsius, and a density, d, in grams/cubic centimeter, wherein the numerical values of Tm and d correspond to the relationship:

$$T_m > -2002.9 + 4538.5(d) - 2422.2(d)^2;$$

or

(b) having a Mw/Mn from 1.7 to 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationship:

$$\Delta T > -0.1299(\Delta H) + 62.81 \text{ for } \Delta H \text{ greater than zero and up to 130 J/g,}$$

$$\Delta T \geq 48°C \text{ for } \Delta H \text{ greater than 130 J/g ,}$$

wherein the CRYSTAF peak is determined using at least 5 percent of the cumulative polymer, and if less than 5 percent of the polymer has an identifiable CRYSTAF peak, then the CRYSTAF temperature is 30°C; or

(c) having an elastic recovery, Re, in percent at 300 percent strain and 1 cycle measured with a compression-molded film of the interpolymer, and has a density, d, in grams/cubic centimeter, wherein the numerical values of Re and d satisfy the following relationship when the interpolymer is substantially free of a cross-linked phase:

$$Re > 1481-1629(d);$$

(d) having a comonomer content of a TREF fraction which elutes between 40°C and 130°C greater than or equal to the quantity (-0.2013)T+21.07, where T is the numerical value of the peak elution temperature, measured in °C; or

(e) having a storage modulus at 25°C, G'(25°C), and a storage modulus at 100°C, G'(100°C), wherein the ratio of G'(25°C) to G'(100°C) is from 1:1 to 10:1; or

(g) having an average block index from 0.1-0.3 and a molecular weight distribution, Mw/Mn, greater than 1.3.

In some embodiments, the block interpolymer satisfies the following relationship:

$$Re > 1491-1629(d);$$

or

$$Re > 1501-1629(d)$$

or

$$Re > 1511-1629(d)$$

In other embodiments, the block interpolymer has a melt index from 0.1 to 2000 g/10 minutes, from 1 to 1500 g/10 minutes, from 2 to 1000 g/10 minutes, from 5 to 500 g/10 minutes measured according to ASTM D-1238, Condition 190°C/2.16 kg. In some embodiments, the block interpolymer is present in the thermoplastic vulcanizate from 5% to

95%, from 55% to 90% or from 5% to 45% by weight of the total composition.

The "α-olefin" in "ethylene/α-olefin interpolymer" or "ethylene/a-olefin/diene interpolymer" herein refers to $C_3$ and higher α-olefins. In some embodiments, the α-olefin is styrene, propylene, 1-butene,1-hexene,1-octene, 4-methyl-1-pentene, 1-decene, or a combination thereof and the diene is norbornene, 1,5-hexadiene, or a combination thereof.

Preferably, the polyolefin used in the thermoplastic vulcanizate is a homopolymer, such as polyethylene or polypropylene. Preferably, the vulcanizable elastomer is an ethylene/higher alpha-olefin copolymer or a terpolymer, such as ethylene-higher alpha-olefin-polyene (BPDM) polymer.

The thermoplastic vulcanizate can optionally comprise one or more additives, such as a slip agent, an anti-blocking agent, a plasticizer, an antioxidant, a UV stabilizer, a colorant or pigment, a filler, a lubricant, an antifogging agent, a flow aid, a coupling agent, a cross-linking agent, a nucleating agent, a surfactant, a solvent, a flame retardant, an antistatic agent, or a combination thereof. A variety of articles can be manufactured from the thermoplastic vulcanizate compositions disclosed herein. Moreover, methods of making the thermoplastic vulcanizate composition and methods of manufacture are disclosed herein.

Additional aspects of the invention and characteristics and properties of various embodiments of the invention become apparent with the following description.

BRIEF DESCRIPTION OF THE DRAWINGS

Figure 1 shows the melting point/density relationship for the inventive polymers (represented by diamonds) as compared to traditional random copolymers (represented by circles) and Ziegler-Natta copolymers (represented by triangles).

Figure 2 shows plots of delta DSC-CRYSTAF as a function of DSC Melt Enthalpy for various polymers. The diamonds represent random ethylene/octene copolymers; the squares represent polymer examples 1-4; the triangles represent polymer examples 5-9; and the circles represent polymer examples 10-19. The "X" symbols represent polymer examples A*-F*.

Figure 3 shows the effect of density on elastic recovery for unoriented films made from inventive interpolymers (represented by the squares and circles) and traditional copolymers (represented by the triangles which are various Dow AFFINITY® polymers). The squares represent inventive ethylene/butene copolymers; and the circles represent inventive ethylene/octene copolymers.

Figure 4 is a plot of octene content of TREF fractionated ethylene/ 1-octene copolymer fractions versus TREF elution temperature of the fraction for the polymer of Example 5 (represented by the circles) and comparative polymers E and F (represented by the "X" symbols). The diamonds represent traditional random ethylene/octene copolymers.

Figure 5 is a plot of octene content of TREF fractionated ethylene/ 1-octene copolymer fractions versus TREF elution temperature of the fraction for the polymer of Example 5 (curve 1) and for comparative F (curve 2). The squares represent Example F*; and the triangles represent Example 5.

Figure 6 is a graph of the log of storage modulus as a function of temperature for comparative ethylene/ 1-octene copolymer (curve 2) and propylene/ ethylene-copolymer (curve 3) and for two inventive ethylene/ 1-octene block copolymers made with differing quantities of chain shuttling agent (curves 1).

Figure 7 shows a plot of TMA (1mm) versus flex modulus for some inventive polymers (represented by the diamonds), as compared to some known polymers. The triangles represent various Dow VERSIFY® polymers; the circles represent various random ethylene/styrene copolymers; and the squares represent various Dow AFFINITY® polymers.

DESCRIPTION OF EMBODIMENTS OF THE INVENTION

General Definitions

"Polymer" means a polymeric compound prepared by polymerizing monomers, whether of the same or a different type. The generic term "polymer" embraces the terms "homopolymers," "copolymer." "terpolymer" as well as "interpolymer."

"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.

The term "ethylene/α-olefin interpolymer" generally refers to polymers comprising ethylene and an α -olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other Comonomer that is preferably an α-olefin having 3 or more carbon atoms. For many ethylene/octene copolymers, the preferred composition comprises an ethylene content greater than 80 mole percent of the whole polymer and an octene content of from 10 to 15, preferably from 15 to 20 mole percent of the whole polymer. In some embodiments, the ethylene/α-olefin interpolymers do not include those produced in low yields of in a minor amount or as a by-product of a chemical process. While the ethylene/α-olefin interpolymers can be blended with one or more polymers, the as-produced ethylene/α-olefin interpolymers are substantially pure and often comprise a major component of the reaction product of a polymerization process.

The ethylene/α-olefin interpolymers comprise ethylene and one or more copolymerizable α-olefin comonomers in polymerized form, characterized by multiple blacks or segments of two or more polymerized monomer units differing in chemical or physical properties. That is, the ethylene/α-olefin interpolymers are block interpolymers, preferably multi-block interpolymers or copolymers. The terms "interpolymer" and copolymer" are used interchangeably herein. In some the multi-block copolymer can be represented by the following formula:

(AB)n

where n is at least 1, preferably an integer greater than 1, such as 2, 3, 4. 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or subblocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 60,199,930, entitled "Ethylene/α-Olefin Block Interpolymers", filed on March 15, 2006, in the name of Colin L.P. Shan, Lonnie Hazlitt, et al. and assigned to Dow Global Technologies Inc.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity; the amount of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 22, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

The term "thermoplastic vulcanizate" (TPV) refers to an engineering thermoplastic elastomer in which a cured elastomeric phase is dispersed in a thermoplastic matrix. It typically comprises at least one thermoplastic material and at least one cured (i.e., cross-linked) elastomeric material. Preferably, the thermoplastic material forms the continuous phase, and the cured elastomer forms the discrete phase; that is, domains of the cured elastomer are dispersed in the thermoplastic matrix. Preferably, the domains of the cured elastomer are fully and uniformly dispersed with the average domain size in the range from 0.1μm (micron) to 100 μm (micron), from 1 μm (micron) to 50 μm (micron); from 1 μm (micron) to 25 μm (micron); from 1 μm (micron) to 10 μm (micron), or from 1 μm (micron) to 5 μm (micron). In some embodiments, the matrix phase of the TPV is present by less than 50% by volume of the TPV, and the dispersed phase is present by at least 50% by volume of the TPV. In other words, the crosslinked elastomeric phase is the major phase in the TPV, whereas the thermoplastic polymer is the minor phase. TPVs with such phase composition have good compression set However, TPVs with the major phase being the thermoplastic polymer and the minor phase being the cross-linked elastomer may also be made. Generally, the cured elastomer has a portion that is insoluble in cyclohexane at 23 °C. The amount of the insoluble portion is preferably more than 75% or 85%. In some cases, the insoluble amount is more than 90%, more than 93%, more than 95% or more than 97% by weight of the total elastomer.

The branching index quantifies the degree of long chain branching in a selected thermoplastic polymer. Preferably, the branching index is less than 0.9, 0.8, 0.7, 0.6 or 0.5. In some embodiments, the branching index is in the range from 0.01 to 0.4. In other embodiments, the branching index is less than 0.01, less than 0.001, less than 0.0001, less than 0.00001, or less than 0.000001. It is defined by the following equation:

$$g' = \left.\frac{IV_{Br}}{IV_{Lin}}\right|_{M_w}$$

where g' is the branching index, $IV_{Br}$ is the intrinsic viscosity of the branched thermoplastic polymer (e.g., polypropylene) and $IV_{Lin}$ is the intrinsic viscosity of the corresponding linear thermoplastic polymer having the same weight average molecular weight as the branched thermoplastic polymer and, in the case of copolymers and terpolymers, substantially the same relative molecular proportion or proportions of monomer units.

Intrinsic viscosity, also known as the limiting viscosity number, in its most general sense is a measure of the capacity of a polymer molecule to enhance the viscosity of a solution. This depends on both the size and the shape of the dissolved polymer molecule. Hence, in comparing a nonlinear polymer with a linear polymer of substantially the same weight average molecular weight, it is an indication of configuration of the nonlinear polymer molecule. Indeed, the above ratio of intrinsic viscosities is a measure of the degree of branching of the nonlinear polymer. A method for determining intrinsic viscosity of propylene polymer material is described by Elliott et al., J. App. Poly. Sci.,14, pp 2947-2963 (1970). In this specification the intrinsic viscosity in each instance is determined with the polymer dissolved in decahydronaphthalene at 135.degree. C. Another method for measuring the intrinsic viscosity of a polymer is ASTM D5225-98 - *Standard Test Method for Measuring Solution Viscosity of Polymers with a Differential Viscometer.*

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically

disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent,..., 50 percent, 51 percent, 52 percent,..., 95 percent, 96 percent, 97 percent, 98 percent, 99 percent, or 100 percent. Moreover, any numerical range defined by two R numbers as defined in the above is also specifically disclosed.

Embodiments of the invention provide two kinds of thermoplastic vulcanizate (TPV) compositions. Such TPVs have a lower compression set, lower tensile set, higher tensile strength, elongation, tear strength, abrasion resistance, better dynamic properties and/or oil resistance. First, a thermoplastic vulcanizate composition comprises a mixture or reaction product of (1) a thermoplastic polyolefin, preferably a branched polyolefin having a branching index of less than 1.0; (2) a vulcanizable elastomer, and (3) a cross-linking agent capable of vulcanizing the elastomer. Preferably, the cross-linking agent does not substantially degrade or cross-link the thermoplastic polyolefin. A class of inventive ethylene/α-olefin block interpolymers in EPDM form is used as the vulcanizable elastomer, alone or in combination with a traditional elastomer. Alternatively, a thermoplastic vulcanizate composition comprises a mixture or reaction product of (1) a thermoplastic polyolefin, preferably a branched polyolefin having a branching index of less than 1.0; (2) a vulcanizable elastomer; (3) a compatibilizer, and (4) a cross-linking agent capable of vulcanizing the elastomer, wherein the ethylene/α-olefin block interpolymers in any chemical form are used as a compatibilizer between the thermoplastic polyolefin and the vulcanizable elastomer as an additional component. When used as compatibilizer, the ethylene/α-olefin block interpolymer is present in the TPV by less than 50 percent but greater than zero percent by weight of the total composition. Preferably, the ethylene/α-olefin block interpolymer is in an amount of less than 40 percent but greater than zero percent by weight, less than 30 percent but greater than zero percent by weight, less than 20 percent but greater than zero percent by weight, less than 10 percent but greater than zero percent by weight, less than 8 percent by weight but greater than zero percent, less than 6 percent but greater than zero percent by weight, or less than 5 percent but greater than zero percent by weight. In some embodiments, the compatibilizer is in an amount from 1 percent by weight to 10 percent by weight, from 2 percent by weight to 9 percent by weight, from 3 percent by weight to 8 percent by weight, from 4 percent by weight to 7 percent by weight, or from 5 percent by weight to 8 percent by weight.

Ethylene/α-Olefin Block Interpolymers

The ethylene-α-olefin block interpolymers used in embodiments of the invention (also referred to as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene-α-olefin block interpolymers are characterized by one or more of the aspects described

In one aspect, the ethylene-α-olefin block interpolymers have a $M_w/M_n$ from 1.7 to 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

$$T_m \geq -6288.1 + 13141(d) - 6720.3(d)^2,$$

and more preferably

$$T_m \geq 858.91 - 1825.3(d) + 1112.8(d)^2;$$

Such melting point/density relationship is illustrated in Figure 1. Unlike the traditional random copolymers of ethylen-α-olefins whose melting points decrease with decreasing densities, the inventive interpolymers (represented by diamonds) exhibit melting points substantially independent of the density, particularly when density is between 0.87 g/cc to 0.95 g/cc. For example, the melting point of such polymers are in the range of 110 °C to 130 °C when density ranges from 0.875 g/cc to 0.945 g/cc. In some embodiments, the melting point of such polymers are in the range of 115 °C to 125 °C when density ranges from 0.875 g/cc to 0.945 g/cc.

In another aspect, the ethylene-α-olefin block interpolymers comprise in polymerized form of ethylene and one or more α-olefins and is characterized by a Δt, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔT satisfy the following relationships:

$$\Delta T > -0.1299(\Delta H) + 62.81,$$

$$\Delta T \geq -0.1299(\Delta H) + 64.38,$$

and more preferably

$$\Delta T \geq -0.1299(\Delta H) + 65.95,$$

for ΔH up to 130 J/g. Moreover, ΔT is equal to or greater than 48°C for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAL temperature is 30°C, and ΔH is the numerical value of the heat of fusion in J/g. More preferably, the highest CRYSTAF peak comprises at least 10 percent of the cumulative polymer. Figure 2 shows plotted data for inventive polymers as well as comparative examples. Integrated peak areas and peak temperatures are calculated by the computerized drawing program supplied by the instrument maker. The diagonal line shown for the random ethylene octene comparative polymers corresponds to the equation ΔT = -0.1299 (ΔH) + 62.81.

In yet another aspect, the ethylene-α-olefin block interpolymers have a molecular fraction which elutes between 40°C and 130°C when fractionated using Temperature Rising Elution Fractionation ("TREF"), characterized in that the comonomer content of said fraction is greater than or equal to the quantity (-0.2013) T+21.07, wherein T is the numerical value of the peak elution temperature measured in °C.

In still another aspect, the ethylene/α-olefin block interpolymers are characterized by an elastic recovery, Re, in percent at 300 percent strain and 1 cycle measured on a compression-molded film of an ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481 - 1629(d);$$

and preferably

$$Re \geq 1491 - 1629(d);$$

and more preferably

$$Re \geq 1501 - 1629(d);$$

and even more preferably

$$Re \geq 1511 - 1629(d);.$$

Figure 3 shows the effect of density on elastic recovery for unoriented films made from certain inventive interpolymers and traditional random copolymers. For the same denisty, the inventive interpolymers have substantially higher elastic recoveries

In some embodiments, the ethylene/α-olefin block interpolymers have a tensile strength above 10 MPa, preferably a tensile strength≥ 11 MPa, more preferably a tensile strength≥ 13MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin block interpolymers have a storage modulus ratio, G'(25°C)/G'(100°C), of from 1:1 to 10:1. Preferably, the storage modulus ratio, G'(25°C)/G'(100°C), ranges from 1:1 to 9:1, from 1:1 to 8:1, from 1:1 to 7:1, from 1:1 to 6:1, from 1:1 to 5:1, or from 1:1 to 4:1.

In still other embodiments, the ethylene/α-olefin block interpolymers have a 70°C compression set of less than 80 percent, less than 70 percent, less than 60 percent, or less than 50 percent Preferably, the 70°C compression set of the interpolymers is less than 40 percent, less than 30 percent, less than 20 percent, and may go down to about 0 percent.

In some embodiments, the ethylene/α-olefin block interpolymers have a heat of fusion of less than 85 J/g and/or a pellet blocking strength of equal to or less than 100 pounds/foot$^2$ (4800 Pa), preferably equal to or less than 50 lbs/ft$^2$ (2400 Pa), especially equal to or less than 5 lbs/ft$^2$ (240 Pa), and as low as 0 lbs/ft$^2$ (0 Pa).

In other embodiments, the ethylene/α-olefin interpolymers comprise in polymerized form at least 50 mole percent ethylene and have a 70°C compression set of less than 80 percent, preferably less than 70 percent or less than 60 percent, most preferably less than 40 to 50 percent and down to close zero percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

Comonomer content may be measured using any suitable technique, with techniques based on nuclear magnetic resonance ("NMR") spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said block interpolymers have at least one such fraction having a higher molar comonomer content than a corresponding fraction of the comparable interpolymer.

As previously noted herein-above, the inventive block interpolymer has a comonomer content of the TREF fraction eluting between 40 and 130°C greater than or equal to the quantity (-0.2013) T+ 21.07, where T is the numerical value of the peak elution temperature of the TREF fraction being compared, measured in °C.

Figure 4 graphically depicts an embodiment of the block interpolymers of ethylene and 1-octene where a plot of the comonomer content versus TREF elution temperature for several comparable ethylene/1-octene interpolymers (random copolymers) are fit to a line representing (- 0.2013) T + 20.07 (solid line). The line for the equation (-0.2013) T + 21.07 is depicted by a dotted line. Also depicted are the comonomer contents for fractions of several block ethylene/1-octene interpolymers of the invention (multi-block copolymers). All of the block interpolymer fractions have significantly higher 1-octene content than either line at equivalent elution temperatures. This result is characteristic of the inventive interpolymer and is believed to be due to the presence of differentiated blocks within the polymer chains, having both crystalline and amorphous nature.

Figure 5 graphically displays the TREF curve and comonomer contents of polymer fractions for Example 5 and comparative Example F* to be discussed below. The peak eluting from 40 to 130°C, preferably from 60°C to 95°C for both polymers is fractionated into tbree parts, each part eluting over a temperature range of less than 10°C. Actual data for Example 5 is represented by triangles. The skilled artisan can appreciate that an appropriate calibration curve may be constructed for interpolymers comprising different comonomers and a line used as a comparison fitted to the TREF values obtained from comparative interpolymers of the same monomers, preferably random copolymers made using a metallocene or other homogeneous catalyst composition. Inventive interpolymers are characterized by a molar comonomer content at least 5 percent greater, more preferably at least 10 percent greater than the value determined from the calibration curve at the same TREF elution temperature.

In addition to the above aspects and properties described herein, the inventive polymers can be characterized by one or more additional characteristics. In one aspect, the inventive polymer is an olefin interpolymer, comprising ethylene and one or more copolymerizable α-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that said fraction has a molar comonomer content at least 5 percent, higher, more preferably at least 10, 15, 20 or 25 percent higher, than that of a comparable random ethylene interpolymer fraction eluting between the same temperatures, wherein said comparable random ethylene interpolymer has the same comonomer(s), and a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer.

Preferably, the above interpolymers are those interpolymers having a whole polymer density from 0.855 to 0.935 g/cm$^3$, and more especially those polymers having more than about 1 mole percent comonomer, where the blocked interpolymer has a comonomer content of the TREF fraction eluting between 40 and 130°C greater than or equal to the

quantity (-0.2013)T + 21.07, where T is the numerical value of the peak ATREF elution temperature of the TREF fraction being compared, measured in °C.

Comonomer content may be measured using any suitable technique, with techniques based on nuclear magnetic resonance (NMR) spectroscopy preferred. Moreover, for polymers or blends of polymers having relatively broad TREF curves, the polymer desirably is first fractionated using TREF into fractions each having an eluted temperature range of 10°C or less. That is, each eluted fraction has a collection temperature window of 10°C or less. Using this technique, said blocked interpolymers have at least one such fraction having a higher molar comonomer content than a corresponding fraction of the comparable interpolymer.

In another aspect, the inventive polymer is an olefin interpolymer, comprising ethylene and one or more copolymeizable α-olefin comonomers in polymerized form, characterized by multiple blocks or segments of two or more polymerized monomer units differing in chemical or physical properties (blocked interpolymer), most preferably a multi-block copolymer, said block interpolymer having a peak (but not just a molecular fraction) which elutes between 40°C and 130°C (but without collecting and/or isolating individual fractions), characterized in that said peak, has a comonomer content estimated by infra-red spectroscopy when expanded using a full width/half maximum (FWHM) area calculation, has an average molar comonomer content at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the Mw/Mn of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area [CH3/CH2] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve. A calibration curve for comonomer content is made using random ethylene/alpha-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl : methylene area ratio [CH3/CH2] of the TREF peak.

Comonomer content may be measured using any suitable technique, with techniques based on nuclear magnetic resonance (NMR) spectroscopy preferred. Using this technique, said blocked interpolymers has higher molar comonomer content than a corresponding comparable interpolymer.

In still another aspect, the inventive polymer is an olefin interpolymer, comprising ethylene and one or more copolymerizable α-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction having a comonomer content of at least about 6 mole percent, has a melting point greater than about 100°C. For those fractions having a comonomer content from about 3 mole percent to about 6 mole percent, every fraction has a DSC melting point of about 110°C or higher. More preferably, said polymer fractions, having at least 1 mol percent comonomer, has a DSC melting point that corresponds to the equation:

$$Tm \geq (-5.5926)(\text{mol percent comonomer in the fraction}) + 135.90.$$

In yet another aspect, the inventive polymer is an olefin interpolymer, comprising ethylene and one or more copolymerizable α-olefin comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40°C and 130°C, when fractionated using TREF increments, characterized in that every fraction that has an ATREF elution temperature greater than or equal to about 76°C, has a melt enthalpy (heat of fusion) as measured by DSC, corresponding to the equation:

$$\text{Heat of fusion (J/gm)} \leq (3.1718)(\text{ATREF elution temperature in Celsius}) - 136.58$$

Block interpolymers having a molecular fraction which elutes between 40°C and 130°C, when fractionated using TREF increments, characterized in that every fraction that has an ATREF elution temperature between 40°C and less than about 76°C, has a melt enthalpy (heat of fusion) as measured by DSC, corresponding to the equation:

$$\text{Heat of fusion (J/gm)} \leq (1.1312)(\text{ATREF elution temperature in Celsius}) + 22.97.$$

**ATREF Peak Comonomer Composition Measurement by Infra-Red Detector**

The comonomer composition of the TREF peak can be measured using an IR4 infra-red detector available from Polymer Char, Valencia, Spain (http://www.polymerchar.com/).

The "composition mode" of the detector is equipped with a measurement sensor (CH2) and composition sensor (CH3) that are fixed narrow band infra-red filters in the region of 2800-3000 $cm^{-1}$. The measurement sensor detects the methylene (CH2) carbons on the polymer (which directly relates to the polymer concentration in solution) while the composition sensor detects the methyl (CH3) groups of the polymer. The mathematical ratio of the composition signal (CH3) divided by the measurement signal (CH2) is sensitive to the comonomer content of the measured polymer in solution and its response is calibrated with known ethylene alpha-olefin copolymer standards.

The detector when used with an ATREF instrument provides both a concentration (CH2) and composition (CH3) signal response of the eluted polymer during the TREF process. A polymer specific calibration can be created by measuring the area ratio of the CH3 to CH2 for polymers with known comonomer content (preferably measured by NMR). The comonomer content of an ATREF peak of a polymer can be estimated by applying a the reference calibration of the ratio of the areas for the individual CH3 and CH2 response (i.e. area ratio CH3/CH2 versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [CH3/CH2] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determine, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this ATREF-infra-red method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P.J.; Rohlfing, D.C.; Shieh, E.T.; Quantifying short chain branching microstructures in ethylene-1-olefin copolymers using size exclusion chromatography and Fourier transform infrared spectroscopy (SEC-FTIR), Polymer (2002), 43, 59-170.

In yet another aspect, the inventive ethylene/α-olefin block interpolymer is characterized by an average block index, ABI, which is from 0.1-0.3 and a molecular weight distribution, $M_w/M_n$, greater than 1.3. The average block index, ABI, is the weight average of the block index for each of the polymer fractions obtained in preparative TREF from 20°C and 110°C, with an increment of 5°C :

$$ABI = \sum (w_i BI_i)$$

where $BI_i$ is the block index for the ith fraction of the inventive ethylene/α-olefin interpolymer obtained in preparative TREF, and $w_i$ is the weight percentage of the ith fraction.

For each polymer fraction, BI is defined by one of the two following equations (both of which give the same BI value):

$$BI = \frac{1/T_X - 1/T_{XO}}{1/T_A - 1/T_{AB}} \text{ or } BI = -\frac{LnP_X - LnP_{XO}}{LnP_A - LnP_{AB}}$$

where $T_x$ is the preparative TREF elution temperature for the ith fraction (preferably expressed in Kelvin), $P_x$ is the ethylene mole fraction for the ith fraction, which can be measured by NMR or IR as described above. $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As first order approximation, the $T_A$ and $P_A$ values are set to those for high density polyethylene homopolymer, if the actual values for the "hard segments" are not available. For calculations performed herein, $T_A$ is 372°K, $P_A$ is 1.

$T_{AB}$ is the ATREF temperature for a random copolymer of the same composition and having an ethylene mole fraction of $P_{AB}$. $T_{AB}$ can be calculated from the following equation:

$$\mathbf{Ln\ P_{AB} = \alpha/T_{AB} + \beta}$$

where α and β are two constants which can be determined by calibration using a number of known random ethylene copolymers. It should be noted that a and β may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$\mathbf{Ln\ P = -237.83/T_{ATREF} + 0.639}$$

$T_{xo}$ is the ATREF temperature for a random copolymer of the same composition and having an ethylene mole fraction of $P_x$. $T_{xo}$ can be calculated from $LnP_x = \alpha/T_{xo} + \beta$. Conversely, $P_{xo}$ is the ethylene mole fraction for a random copolymer of the same composition and having an ATREF temperature of Tx, which can be calculated from Ln $P_{XO} = \alpha/T_X + \beta$.

Once the block index for each preparative TREF fraction is obtained, the weight average block index, ABI, for the whole polymer can be calculated. In preferred embodiments, ABI is from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylene/α-olefin block interpolymer is that the inventive ethylene/α-olefin block interpolymer comprises at least one polymer fraction which can be obtained by preparative. TREF, wherein the fraction has a block index of at least 0.5 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0.

The inventive polymers, unless specified otherwise, preferably possess (1) a PDI of greater than 1.3, more preferably at least 1.5, at least 1.7, or at least 2.0, and most preferably at least 2.6, up to a maximum value of 5.0, more preferably up to a maximum of 3.5, and especially up to a maximum of 2.7; (2) a heat of fusion of 80 J/g or less; (3) an ethylene content of at least 50 weight percent; (4) a glass transition temperature, $T_g$, of less than -25°C, more preferably less than -30°C, and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100°C. Moreover, the inventive polymers possess a relatively flat storage modulus as a function of temperature in the range from 0 to 100°C (illustrated in Figure 6) that is characteristic of block copolymers, and heretofore unknown for an olefin copolymer, especially a copolymer of ethylene and one or more $C_{3-8}$ aliphatic α-olefins. (By the term "relatively flat" in this context is meant that log G' (in Pascals) decreases by less than one order of magnitude between 50 and 100°C, preferably between 0 and 100°C).

The inventive interpolymers may be further characterized by a thermomechanical analysis penetration depth

of 1 mm at a temperature of at least 90°C as well as a flexural modulus of from 3 kpsi (20 MPa) to 13 kpsi (90 MPa). Alternatively, the inventive interpolymers can have a thermomechanical analysis penetration depth of 1 mm at a temperature of at least 104°C as well as a flexural modulus of at least 3 kpsi (20 MPa). They may be characterized as having an abrasion resistance (or volume loss) of less than 90 $mm^3$. Figure 7 shows the TMA (1 mm) versus flex modulus for the inventive polymers, as compared to other known polymers. The inventive polymers have significantly better flexibility-heat resistance balance than the other polymers.

Additionally, the inventive interpolymers can have a melt index, $I_2$, from 0.01 to 2000 g/10 minutes, preferably from 0.01 to 1000 g/10 minutes, more preferably from 0.01 to 500 g/10 minutes, and especially from 0.01 to 100 g/10 minutes. The polymers can have molecular weights, $M_w$, from 1,000 g/mole to 5,000,000 g/mole, preferably from 1000 g/mole to 1,000,000, more preferably from 10,000 g/mole to 500,000 g/mole, and especially from 10,000 g/mole to 300,000 g/mole. The density of the inventive polymers can be from 0.80 to 0.99 $g/cm^3$ and preferably from 0.85 $g/cm^3$ to 0.97 $g/cm^3$.

The process of making the polymers has been disclosed in the following patent applications: U.S. Provisional Application No. 60/553,906, filed March 17, 2004; U.S. Provisional Application No. 60/662,937, filed March 17, 2005; U.S. Provisional Application No. 60/662,939, filed March 17,2005; U.S. Provisional Application No. 60/5662938, filed March 17,2005; PCT Application No. PCT/US2005/008916, filed March 17, 2005; PCT Application No. PCT/US2005/008915, filed March 17, 2005; and PCT Application No. PCT/US2005/008917, filed March 17,2005. For example, one such method comprises contacting ethylene and one or more addition polymerizable α-olefin monomers other than ethylene under addition polymerization conditions with a catalyst composition comprising:

the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Representative catalysts and chain shuttling agent are as follows.

**Catalyst (A1)** is [N-(2,6-di(1-methylethyl)phenyl)amido)(2-isopropylphenyl)(α-naphthalen-2-diyl(6-pyridin-2-diyl)methane)]hafnium dimethyl, prepared according to the teachings of WO 03/40195, 2003US0204017, USSN 10/429,024, filed May 2, 2003, and WO 04/24740.

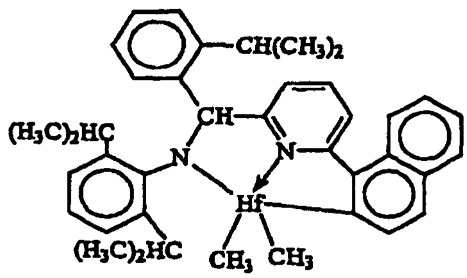

**Catalyst (A2)** is [N-(2,6-di(1-methylethyl)phenyl)amido)(2-methylphenyl)(1,2-phenylene-(6-pyridin-2-diyl) methane)]hafnium dimethyl, prepared according to the teachings of WO 03/40195, 2003US0204017, USSN 10/429,024, tiled May 2, 2003, and WO 04/24740.

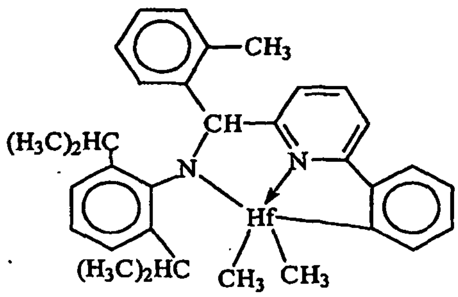

**Catalyst (A3)** is bis[N,N'''-(2,4,6-tri(methylphenyl)amido)ethylenediamine]hafnium dibenzyl:

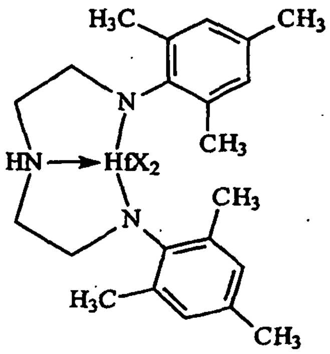

X= $CH_2C_6H_5$

**Catalyst (A4)** is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of US-A-2004/0010103.

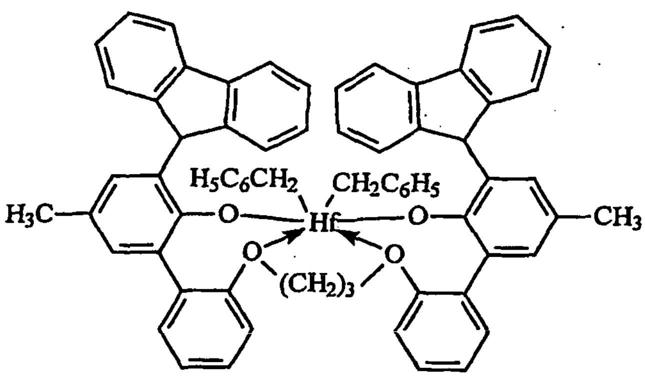

**Catalyst (B1)** is 1,2-bis-(3,5-di-t-butylphenylene)(1-(N-(1-methytethyl)immino)methyt)(2-oxoyl) zirconium dibenzyl:

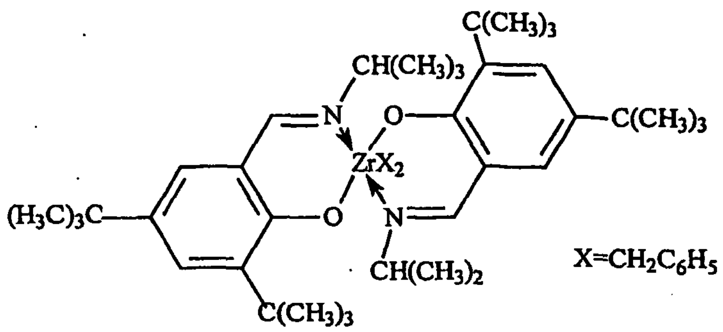

**Catalyst (B2)** is 1,2-bis-(3,5-di-t-butylphenylene)(1-(N-(2-methylcyclohexyl)-immino)methyl)(2-oxoyl) zirconium dibenzyl:

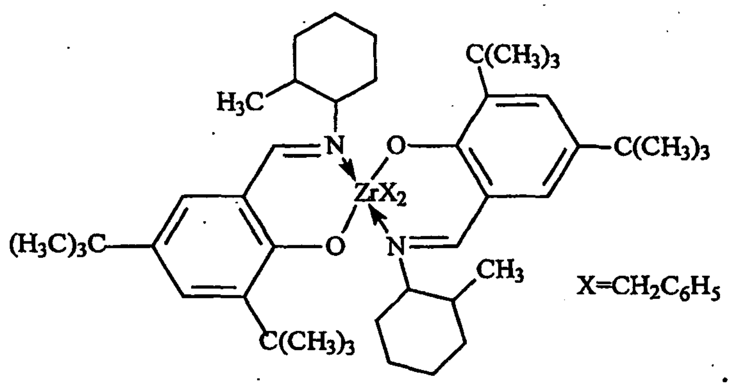

**Catalyst (C1)** is (t-butylamido)dimethyl(3-N-pyrrolyl-1,2,3,3a,7a-η-inden-1-yl)silanetitanium dimethyl prepared substantially according to the techniques of USP 6,268,444:

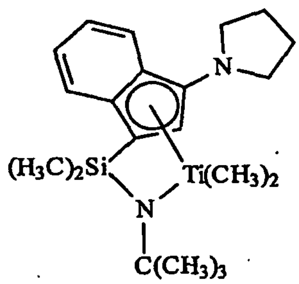

**Catalyst (C2)** is (t-butylamido)di(4-methylphenyl)(2-methyl-1,2,3,3a,7a-η-inden-1-yl)silanetitanium dimethyl prepared substantially according to the teachings of US-A-2003/004286:

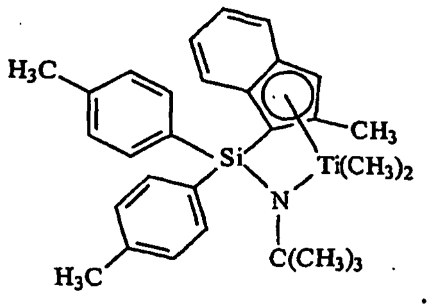

**Catalyst (C3)** is (t-butylamido)di(4-methylphenyl)(2-methyl-1,2,3,3a,8a-η-s-indacen-1-yl)silanetitanium dimethyl prepared substantially according to the teachings of US-A-2003/004286:

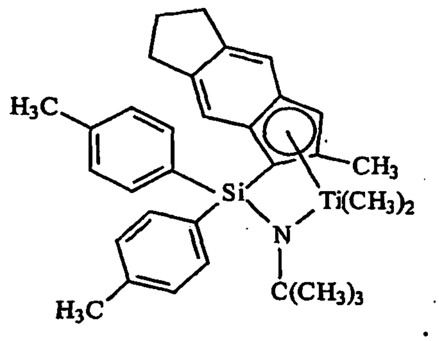

**Catalyst (D1)** is bis(dimethyldisiloxane)(indene-1-yl)zirconium dichloride available from Sigma-Aldrich:

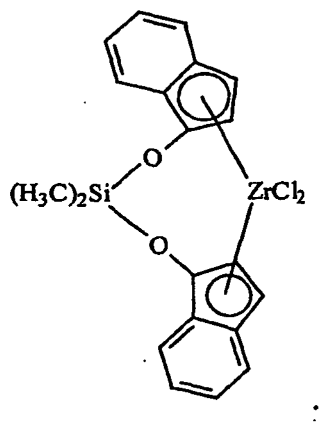

**Shuttling Agents** The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptancamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{4-20}$ α-olefin, using multiple catalysts that are incapable of interconversion. That is the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially

linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer comprising the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAL and DSC as a function of heat of fusion, especially as compared to random copolymers comprising the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymers blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene/α-olefin block interpolymers used in the embodiments of the invention are preferably interpolymers of ethylene with at least one $C_3$-$C_{20}$ α-olefin. Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, $C_3$-$C_{20}$ α -olefins such as propylene, isobutylene, 1-buteno, 1 -hexene, 1-pentene, 4-methyl-1-pentene, 1-heptene, 1-octene, 1-nonene, 1-decene, and the like. 1-butene and 1-octene are especially preferred. Other suitable monomers include styrene, halo- or alkyl-substituted styrenes, vinylbenzocyclobutane, 1,4-hexadiene, and 1,7-octadiene.

Also included are mixtures of such olefins as well as mixtures of such olefins with $C_{4-40}$ diolefin compounds.

Examples of suitable α-olefin monomers include, but are not limited to propylene, isobutylene, 1-butene, 1-pentene, 1-hexene, 1-heptene, 1-octene, 1-octene, 1-decene, and 1-dodecene,1-tetradecene, 1-hexadecene, 1-octadecene, 1-eicosene, 3-methyl-1-butene, 3-methyl-1 pentene, 4-methyl-1-pentene, 4,6-dimethyl-1-heptene, 4-vinylcyclohexene, vinylcyclohexane, norbornadiene, ethylidene norbornene, $C_{4-40}$ dienes, including but not limited to 1,3-butadiene, 1,3-pentadiene, 1,4-hexadiene, 1,5-hexadiene, 1,7-octadiene, 1,9-decadiene, other $C_{4-40}$ α-olefins, and the like. Although any hydrocarbon containing an α-vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$_{20}$ alpha olefin, optionally comprising a $C_{4-20}$ diene, having improved properties can be prepared.

A particular class of block interpolymers having the properties disclosed herein is obtained from polymerization of ethylene, propylene, and a non-conjugated diene to make an EPDM elastomer. Such EPDM elastomers can be used in embodiments of the invention as a vulcanizable elastomer or as a compatibilizer between the vulcanizable elastomer and the thermoplastic polyolefin. Suitable non-conjugated diene monomers can be a straight chain, branched chain or cyclic hydrocarbon diene having from 6 to 15 carbon atoms. Examples of suitable non-conjugated dienes include, but are not limited to, straight chain acyclic dienes, such as 1,4-hexadiene, 1,6-octadiene, 1,7-octadione, 1,9-decadiene, branched chain acyclic dienes, such as 5-methyl-1,4-hexadiene; 3,7-dimethyl-1,6-octadiene; 3,7-dimethyl-1,7-octadiene and mixed isomers of dihydromyricene and dihydroocinene, single ring alicyclic dienes, such as 1,3-cyclopeatadiene; 1,4-cyclohexadicae; 1.5-cyrloactaffiene and 1,5-cyclododecadiene, and multi-ring alicyclic fused and bridged ring dienes, such as tetrahydroindene, methyltetrahydroindene, dicyclopentadiene, bicyclo-(2,2,1)-hepta-2,5-diene; alkenyl, alkylidene, cycloalkenyl and cycloalkylidene norbornenes, such as 5-methylene-2-norbomene (MNB); 5-propenyl-2-norbomene, 5-isopropylidene-2-norbornene, 5-(4-cyclopentenyl)-2-norbomene, 5-cyolohexylidene-2-norbomene, 5-vinyl-2-norbomene, and norbornadiene. Of the dienes typically used to prepare EPDMs, the particularly preferred dienes are 1,4-hexadiene (HD), 5-ethylidene-2-norbornene (BNB), 5-vinylidene-2-norbornene (VNH), 5-methylene-2-norbornene (MNB), and dicyclopentadiene (DCPD). The especially preferred dienes are 5-ethylidene-2-norbomene (ENB) and 1,4-hexadiene (HD).

One class of desirable polymers that can be made for use in embodiments of the invention are elastomeric block interpolymers of ethylene, a $C_{3-20}$ α-olefin, especially propylene, and optionally one or more diene monomers. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers. Suitable dienes for use in preparing such polymers, especially multi-block EPDM type polymers include conjugated or non-conjugated, straight or branched chain-, cyclic- or polycyclic- dienes containing from 4 to 20 carbons. Preferred dienes include 1,4-pentadieno, 1,4-hexadiene, 5-ethylidene-2-norbornene, dicyclopentadiene, cyclohexadiene, and 5-butylidene-2-norbornene. A particularly preferred diene is 5-ethylidene-2-norbornene.

Because the diene containing polymers contain alternating segments or blocks containing greater or lesser quantities of the diene (including none) and α-olefin, the total quantity of diene and α-olefin may be reduced without loss of subsequent polymer properties. That is, because the diene and α-olefin monomers are preferentially incorporated into one type of block of the polymer rather than uniformly or randomly throughout the polymer, they are more efficiently utilized and subsequently the crosslink density of the polymer can be better controlled. Such crosslinkable elastomers and the cured products have advantaged properties, including higher tensile strength and better elastic recovery.

In some embodiments, the inventive interpolymers made with two catalysts incorporating differing quantities of comonomer have a weight ratio of blocks formed thereby from 95:5 to 5:95. The elastomeric polymers desirably have an ethylene content of from 20 to 90 percent, a diene content of from 0.1 to 10 percent, and an α-olefin content of from 10 to 80 percent, based on the total weight of the polymer. Further preferably, the multi-block elastomeric polymers have an ethylene content of from 60 to 90 percent, a diene content of from 0.1 to 10 percent, and an α-olefin content of from 10 to 40 percent, based on the total weight of the polymer. Preferred polymers are high molecular weight polymers, having a weight average molecular weight (Mw) from 10,000 to about 2,500,000, preferably from 20,000 to 500,000, more preferably from 20,000 to 350,000, and a polydispersity less than 3.5, more preferably less than 3.0, and a Mooney viscosity (ML (1+4) 125°C.) from 1 to 250.
More preferably, such polymers have an ethylene content from 65 to 75 percent, a diene content from 0 to 6 percent, and an α-olefin content from 20 to 35 percent.

The ethylene/α-olefin block interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/α-olefin interpolymer, or it may be copolymerized with ethylene and an optional additional comonomer to form an interpolymer of ethylene, the functional comonomer and optionally other comonomer(s). Means for grafting functional groups onto polyethylene are described for example in

U.S. Parents Nos. 4,762,890, 4,927,888, and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferable at least 7 weight percent. The functional group will typically be present in a copolymer-type functionalized interpolymer in an amount less than 40 weight percent preferably less than 30 weight percent, and more preferably less than 25 weight percent.

The amount of the ethylene/α-olefin block interpolymer in the polymer blend giving rise to the TPVs disclosed herein can be from 5 to 95 wt%, from 10 to 90 w%, from 20 to 80 wt%, from 30 to 70 wt%, from 10 to 50 wt%, from 50 to 90 wt%, from 60 to 90 wt%, or from 70 to 90 w% of the total weight of the polymer blend.

<u>Themoplastic Polyolefins</u>

As discussed above, the TFVs comprise at least a thermoplastic polyolefin as the matrix phase. Suitable thermoplastic polyolefins include, but are not limited to, blanched polyethylene (such as high density polyethylene), branched polypropylene, branched polycarbonate, branched polystyrene, and branched polyethylene terephthalate. Branched polyloefins, are preferred.

Preferably, the polyolefin should have a melt strength ("MS'') of at least 6 cN. In some embodiments, the MS of the polyolefin is at least 7 cN, at least 8 cN, at least 9 cN, at least 10 cN, at least 13 cN, at least 15 cN, at least 17 cN, or at least 20 cN. Generally, the MS of the polyolefin is less than 200 cN, preferably less than 150 cN, less than 100 cN, or less than 50 cN. Typically, the compression set at 70 °C of such polyoelfins is great than 50 percent. In some embodiments, the compression, set at 70 °C is great than 60 percent, great than 70 percent, great than 80 percent, or great than 90 percent.

Suitable polyolefins are a polymer derived from one or more olefins. An olefin (*i.e.*, alkene) is a hydrocarbon which contains at least one carbon-carbon double bond. Some non-limiting examples of olefins include linear or branched, cyclic or acyclic, alkenes having from 2 to about 20 carbon atoms. In some embodiments, the alkene has between 2 and about 10 carbon atoms. In other embodiments, the alkene contains at least two carbon-carbon double bonds, such as butadiene and 1,5-hexadiene. In further embodiments, at least one of the hydrogen atoms of the alkene is substituted with an alkyl or aryl. In particular embodiments, the alkene is ethylene, propylene, 1-butene. 1-hexene,1-actene,1-decene, 4-methyl-1-pentene, norbornene, 1-decene, butadiene, 1,5-hexadiene, styrene or a combination thereof

Any polyolefin meeting the various criteria disclosed herein may be used to prepare the polymer blend giving rise to the TPVs disclosed herein. Non-limiting examples of polyolefins include polyethylenes (*e.g.*, ultralow, low, linear low, medium, high and ultrahigh density polyethylene); polypropylenes (*e.g.*, low and high density polypropylene); polybutylenes (*e.g*, polybutene-1); polypentene-1; polyhexene-1; polyoctene-1; polydecene-1; poly-3-methylbutene-1; poly-4-methylpentene-1; polyisoprene; polybutadiene; poly-1,5-hexadiene; interpolymers derived from olefins; interpolymers derived from olefins and other polymers such as polyvinyl chloride, polystyrene, polyurethane, and the like; and mixtures thereof. In some embodiments, the polyolefin is a homopolymer such as polyethylene, polypropylene, polybutylene, polypeatene-1, poly-3-methylbutene-1, poly-4-methylpentene-1, polyisoprene, polybutadiene, poly-1,5-hexadiene, polyhexene-1, polyoctene-1 and polydecene-1. In other embodiments, the polyolefin is polypropylene or high density polyethylene (HDPE).

The amount of the polyolefin in the polymer blend giving rise to the TPVs of the invention can be from 5 to 95 wt%, from 10 to 90 wt%, from 20 to 80 wt%, from 30 to 70 wt%, from 10 to 50 wt%, from 50 to 80 wt%, from 60 to 90 wt%, or from 10 to 30 wt% of the total weight of the polymer blend.

A preferred class of polyolefins is high MS ethylene polymers. Any ethylene polymers with a MS of at least 6 cN can be used. An ethylene polymer is any polymer comprising greater than fifty mole percent of-$CH_2$-$CH_2$- repeating units as derived from an ethylene monomer or comonomer. Suitable ethylene polymers for use in embodiments of the invention include any ethylene-containing polymers, both homopolymers and copolymers. Examples of ethylene polymers include, but are not limited to, ethylene homopolymers and ethylene interpolymers, such as low density polyethylene (LDPE), heterogeneously branched ethylene/alpha-olefin interpolymer (i.e., linear low density polyethylene (LLDPE), ultra low density polyethylene (ULDPE)), substantially linear ethylene polymers (SLEP), and homogeneously branched ethylene polymer.

In some embodiments, the ethylene polymers are homogeneously branched ("homogeneous") ethylene polymers, such as homogeneously branched linear ethylend/α-olefin interpolymers as described by Elston in U.S. Pat No. 3,645,992 or homogeneously branched substantially linear ethylene polymers as described by Lai et al. in U.S. Pat.Nos. 5,272,236, 5,278,272, 5,665,800 and 5,783,638.

In other embodiments, polypropylene polymers are used as the thermoplastic polyolefin. The polypropylene may be branched or unbranched. One class of branched polypropylene is coupled impact propylene polymer. As used herein, "coupling" refers to modifying the rheology of a polymer by reacting the polymer with a suitable coupling agent A "coupled polymer" is a rheology modified polymer resulting from a coupling reaction. A coupled polymer is characterized

by an increase in melt strength of at least about 25% and a decrease in melt flow rate, compared to the polymer before coupling. A coupled polymer differs from a heavily crosslinked polymer in that the coupled polymer is thermoplastic and has a low gel level, i.e., a gel content of less than 50% by weight, preferably less than 30%, less than 20%, less than 10%, or less than 5% by weight. In contrast, heavy crosslinking (otherwise known as "vulcanization") results in a thermoset polymer characterized by high gel levels, i.e., a gel content of more than 50% by weight, preferably more than 70%, more than 80%, more than 90%, or more than 95% by weight.

One class of suitable coupled propylene polymers include those known as "Coupled Impact Polypropylene Polymers." Such polymers and their manufacture are disclosed in U.S. Patent No. 6,359,073, U.S. Patent Application Serial No. 09/017,230 filed on June 23, 2000 and in PCT Application No. WO 00/78858 A2, filed on June 23, 2000. The process to produce a coupled impact propylene copolymer involves coupling of a impact propylene copolymer by a coupling agent. The coupling reaction is implemented via reactive extrusion or any other method which is capable of mixing the coupling agent with the impact propylene copolymer and adding sufficient energy to cause a coupling reaction between the coupling agent and the impact propylene copolymer. Preferably, the process is carried out in a single vessel such as a melt mixer or a polymer extruder, such as described in U.S. Patent Application 09/133,576 filed August 13,1998 which claims the benefit of U.S. Provisional Application No. 60/057,713 filed August 27, 1997.

The term "impact propylene copolymer" is used herein to refer to heterophasic propylene copolymers where polypropylene is the continuous phase and an elastomeric phase is dispersed therein. Those of skill in the art recognize that this elastomeric phase may also contain crystalline regions, which for purposes of current embodiments of the invention are considered part of the elastomeric phase. The impact propylene copolymers result from an in-reactor process rather than physical blending. Usually the impact propylene copolymers are formed in a dual or multi-stage process, which optionally involves a single reactor with at least two process stages taking place therein, or optionally multiple reactors. Impact propylene copolymers are commercially available and are well known within the skill in the art, for instance, as described by E.P. Moore, Jr in Polypropylene Handbook, Hanser Publishers, 1996, page 220-221 and U.S. Patents 3,893,989 and 4,113.802. Additional suitable impact propylene copolymers are disclosed in the following US patents: 4,434,264; 4,459,385; 4,489,195; 4,493,923; 4,508,872; 4,535,125; 4,588,775; 4,843,129; 4,966,944; 5,011,891; 5,034,449; 5,066,723; 5,177,147; 5,314,746; 5,336,721; 5,367,022; 6,207,754; 6,268,064.

A suitable coupling agent is a poly(sulfonyl azide), more preferably a bis(sulfonyl azide). The term "poly(sulfonyl azide)" used herein refers to any compound having at least two sulfonyl azide groups (-SO2N3) reactive with a -C-H group, preferably a primary or secondary -C-H group, and/or an unsaturated group (such as a -C=C-). Preferably, it is capable of reacting with a primary or secondary -C-H group of a polyolefin or an elastomer. The poly(sulfonyl azide) can be used as a coupling agent or a cross-linking agent in embodiments of the invention. Preferably the poly(sulfonyl azide) s have a structure X-R-X wherein each X is SO2N3 and R represents an unsubstituted or inertly substituted hydrocarbyl, hydrocarbyl ether or silicon-containing group, preferably having sufficient carbon, oxygen or silicon, preferably carbon, atoms to separate the sulfonyl azide groups sufficiently to permit a facile reaction between the polyolefin and the sulfonyl azide, more preferably at least 1, more preferably at least 2, most preferably at least 3 carbon, oxygen or silicon, preferably carbon atoms between functional groups. The term "inertly substituted" refers to substitution with atoms or groups which do not undesirably interfere with the desired reaction(s) or desired properties of the resulting crosslinked polymers. Such groups include fluorine, aliphatic or aromatic ether, siloxanes, as well as sulfonyl azide groups when more than two polyolefin chains are to be joined. Suitable structures include R as aryl, alkyl? aryl alkaryl, arylalkyl silane, or heterocyclic, groups and other groups which are inert and separate the sulfonyl azide groups as described. More preferably, R includes at least one aryl group between the sulfonyl groups, most preferably at least two aryl groups (such as when R is 4,4' diphenylether or 4,4'-biphenyl). When R is one aryl group, it is preferred that the group have more than one ring, as in the case of naphthylene bis(sulfonyl azides). Poly(sulfonyl)azides include such compounds as 1,5-pentane bis(sulfontlazide), 1,8-octane bis(sulfonyl azide),1,10-decane bis(sulfonyl azide),1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from about 2 to 5 sulfonyl azide groups per molecule, and mixtures thereof. Preferred poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and mixtures thereof.

Examples of poly(sulfonyl azides) useful in the thermoplastic vulcanizate are described in WO 99/10424. Poly (sulfonyl)azides include such compounds as 1, 5-pentane bis(sulfonyl azide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from 2 to 5 sulfonyl azide groups per molecule, and mixtures thereof. Preferred poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and mixtures thereof.

Sulfonyl azides are commercially available or are conveniently prepared by the reaction of sodium azide with

the corresponding sulfonyl chloride, although oxidation of sulfonyl hydrazines with various reagents (nitrous acid, dinitrogen tetroxide, nitrosonium tetrafluoroborate) has been used.

When a bis(sulfonyl azide) is used for the coupling agent, preferably at least about 100 ppm of azide is used for coupling the impact propylene copolymer, based on the total weight of the impact propylene copolymer, more preferably at least about 150 ppm of azide, most preferably at least about 200 ppm of azide is used. In some instances, such as where a large reduction in the ductile-to-brittle transition temperature is desirable as compared with the base comparable non-coupled impact propylene copolymer, at least about 300 ppm of bis(sulfonyl azide), preferably at least about 450 ppm of bis(sulfonyl azide) based on the total weight of the impact propylene copolymer is used for coupling the impact propylene copolymer. It is important in choosing the impact propylene copolymer to be coupled, that a polymer is chosen that has a high enough melt flow rate, so that after coupling with the desired amount of coupling agent, the coupled impact propylene copolymer has a sufficiently high melt flow rate to be readily processed.

In some embodiments, the coupled impact propylene copolymer is characterized by the following formula:

$$X = [(A-C)/(B-D)] \leq 0.75;$$

$$Y \geq 1.25;$$

$$A \leq B-10$$

where A is the ductile-to-brittle transition temperature calculated from notched Izod values (Measured in accordance with ASTM D-256) measured with the notch perpendicular to the polymer injection flow direction for an article made from the coupled impact propylene copolymer resin; B is the ductile-to-brittle transition temperature calculated from notched Izod values (Measured in accordance with ASTM D-256) measured with the notch perpendicular to the polymer injection flow direction for an article made from the corresponding non-coupled impact propylene copolymer resin; C is the ductile-to-brittle transition temperature calculated from notched Izod values (Measured in accordance with ASTM D-256) measured with the notch parallel to the polymer injection flow direction for an article made from the coupled impact propylene copolymer resin; D is the ductile-to-brittle transition temperature calculated from notched Izod (Measured in accordance with ASTM D-256) measured with the notch parallel to the polymer injection flow direction for an article made from the corresponding non-coupled impact propylene copolymer resin.

Y is the ratio of the melt strength of the coupled impact propylene copolymer resin to the melt strength of the corresponding non-coupled impact propylene copolymer resin. In some embodiments, Y is at least 1.5, at least 2, at least 5; or at least 10. In other embodiments, X is less than 0.5, less than 0.33, or less than 0.25.

The coupled impact propylene copolymer has improved impact properties when compared to those of a non-coupled impact propylene copolymer and also increases the melt strength of the resulting coupled impact propylene copolymer resin to a level of at least 1.25 times, preferably at least 1.5 times, that of a corresponding non-coupled impact propylene copolymer. The corresponding non-coupled impact propylene copolymer is the same polymer used to make the coupled impact propylene copolymer, but has not been coupled. Preferably, the coupled impact propylene copolymer resins have a melt strength of at least 8, at least 15 cN, at least 30 cN, at least 50 cN, or at least 60 cN. In some embodiments, the melt flow rate of the coupled impact propylene polymer may range from 0.01 to 100 g/10 min, as measured according to ASTM 1238 at 230 °C and 2.16 kg. Preferably, the melt flow rate is in the range from 0.05 to 50 g/10 min, 0.1 to 10 g/10 min, or 0.5 to 5 g/10 min.

Examples of impact properties that are improved in the coupled impact propylene copolymer compared to the corresponding non-coupled impact propylene copolymers include, for example, higher impact strength at low temperatures as exhibited by articles formed from the coupled impact propylene copolymer and an improvement in the ductile-to-brittle transition temperature, which is reduced in articles formed from the coupled impact propylene copolymer.

"Impact properties" refer to properties of articles such as impact strength, which is measured by any means within the skill in the art, for instance, Izod impact energy as measured in accordance with ASTM D 256, MTS Peak Impact Energy (dart impact) as measured in accordance with ASTM D 3763-93, and MTS total Impact Energy as measured in accordance with ASTM D-3763. The ductile-to-brittle transition temperature (DBTT) is also an impact property of an article made from a polymer. The ductile-to-brittle transition Temperature defines, for a given set of conditions, the temperature at which an object transitions from a predominantly ductile mode of failure to a predominantly brittle mode of failure. The ductilo-to-brittle transition temperature can be calculated using techniques known to one of

skill in the art.

Any amount of coupled impact propylene polymer may be used to make a TPV so long as the amount is sufficient for the coupled impact propylene polymer to be the thermoplastic matrix. Typically, the coupled impact propylene polymer is present in an amount of at least 10% by volume of the total TPV composition, preferably from 15% to 65%, from 20% to 50%, from 25% to 45% or from 30% to 45%. Preferably, the coupled impact propylene polymer is the minor phase, i.e., it is present by less than 50% by volume of the TPV composition.

Examples of representative branched propylene polymers include Profax™ 814 and Profax™ 611 by Basell Polyolefins, the Netherlands or comparable polypropylene from The Dow Chemical Company, Midland, Michigan.

In addition to the branched propylene polymer described herein, suitable branched propylene polymers also include those disclosed in the following US patents: 4,311,628; 4,521,566; 4,916,198; 5,047,446; 5,047,485; 5,414,027; and 5,849,409 and in the following PCT patent applications: WO 01/53078; WO 97/20888; WO 97/20889; WO 99/10423; WO 99/10424; and WO 99/16797.

## Vulcanizable Elastomers

Any vulcanizable elastomer may be used to form a TPV, provided that it can be cross-linked (i.e., vulcanized) by a cross-linking agent. Vulcanizable elastomers, although thermoplastic in the uncured state, are normally classified as thermosets because they undergo an irreversible process of thermosetting to an unprocessable state. Preferably, the vulcanized elastomers is dispersed in a matrix of the thermoplastic polyolefin as domains. The average domain size may range from 0.1 micron to 100 micron, from 1 micron to 50 microns; from 1 micron to 25 micron; from 1 micron to 10 microns, or from 1 micron to 5 microns. Preferred elastomers are ethylene-higher alpha-olefin copolymers and terpolymers

One class of peferred elastomers includes, but is not limited to, an ethylene-higher alpha-olefin-polyene (EPDM) polymer. Any EPDM rubber which can be completely cured (cross-linked) with a phenolic curative or other cross-linking agent is satisfactory. In some embodiments, the ethylene/$\alpha$-olefin block interpolymer in the EPDM form is used as the vulcanizable elastomer. Suitable monoolefin terpolymer rubber comprises essentially non-crystalline, rubbery terpolymer of two or more alpha monoolefins, preferably copolymerized with at least one polyene, usually a non-conjugated diene. Suitable EPDM rubbers comprise the products from the polymerization of monomers comprising two monoolefins, generally ethylene and propylene, and a lesser quantity of non-conjugated diene. The amount of non-conjugated diene is usually from 2 to 10 weight percent of the rubber. Any EPDM rubber which has sufficient reactivity with phenolic curative to completely cure is suitable. The reactivity of EPDM rubber varies depending upon both the amount of unsaturation and the type of unsaturation present in the polymer. For example, BPDM rubbers derived from ethylidene norbornene are more reactive toward phenolic curatives than EPDM rubbers derived from dicyclopentadiene and EPDM rubbers derived from 1,4-hexadiene are less reactive toward phenolic curatives than BPDM rubbers derived from dicyclopentadiene. However, the differences in reactivity can be overcome by polymerizing larger quantities of less active diene into the rubber molecule. For example, 2.5 weight percent of ethylidene norbornene or dicyclopentadiene may be sufficient to impart sufficient reactivity to the EPDM to make it completely curable with phenolic curative comprising conventional cure activators, whereas, at least 3.0 weight percent or more is required to obtain sufficient reactivity in an EPDM rubber derived from 1,4-hexadiene. Grades of EPDM rubbers suitable for embodiments of the invention are commercially available; Rubber World Blue Book 1975 Edition, Materials and Compounding Ingredients for Rubber, pages 406-410.

Generally, an EPDM elastomer has an ethylene content of from 10% to 90% by weight, a higher alpha-olefin content of 10% to 80% by weight, and a polyene content of 0.5% to 20% by weight, all weights based on the total weight of the polymer. The higher alpha-olefin contains from 3 to 14 carbon atoms. Examples of these are propylene, isobutylene, butene,1-pentene,1-octene. 2-ethyl-1-hexene,1-dodecene, and the like. The polyene can be a conjugated diene such as isoprene, butadiene, chloroprene, and the like; a nonconjugated diene; a triene, or a higher enumerated polyene. Examples oftrienes are 1,4,9-decatriene, 5,8-dimethyl-1,4,9-decatriene, 4,9-dimethyl-1,4,9-decatriene, and the like. The nonconjugated dienes are more preferred. The nonconjugated dienes contain from 5 to 25 carbon atoms. Examples are nonconjugated diolefins such as 1,4-pentadiene,1,4-hexadiene, 1,5-hexadiene, 2,5-dimethyl-1,5-hexadiene, 1,4-octadiene, and the like; cyclic dienes such as cyclopentadiene, cyclohexadiene, cyclooctadiene, dicyclopentadiene, and the like; vinyl cyclicenes such as 1-vinyl-1-cyclopentene, 1-vinyl-1-cyclohexene, and the like; alkylbicyclo nondienes such as 3-methyl-bicyclo (4,2,1) nona-3,7-diene, 3-ethylbicyclanondiene, and the like; indenes such as methyl tetrahydroindene and the like; alkenyl norbornenes such as 5-ethylidene-2 norbornene, 5-butylidene-2-norbornene, 2-methallyl-5-norbornene, 2-isopropenyl-5-norbornene, 5-(1,5-hexadienyl)-2-norbomene, 5-(3,7-octadieneyl)-2-norbornene, and the like; and tricyclo dienes such as 3-metllyl-tricyclo-(5,2,1,0.sup2,6)-3,8-decadiene and the like.

In some embodiments, the EPDM polymers contain from 20% to 80% by weight of ethylene, 19% to 70% by weight of a higher alpha-olefin, and 1% to 10% by weight of a nonconjugated diene. The more preferred higher alpha-olefins are propylene and 1-butene. The more preferred polyenes are ethylidene norbomene,1,4-hexadiene, and dicyclopentadiene.

In other embodiments, the EPDM polymers have an ethylene content of from 50% to 70% by weight, a propylene content of from 20% to 49% by weight, and a nonconjugated diene content from 1% to 10% by weight, all weights based upon the total weight of the polymer.

Examples of representative EPDM polymers for use include Nordel IP 4770R, Nordel 3722 IP available from DuPont Dow Elastomers, Wilmington, DE and Keltan 5636A available from DSM Elastomers Americas, Addis, LA.

The EPDM polymers, also known as elastomeric copolymers of ethylene, a higher-alpha-olefin and a polyene, have molecular weights from 20,000 to 2,000,000 or more. Their physical form varies from waxy mateials to rubbers to bard plastic-like polymers. They have dilute solution viscosities (DSV) from 0.5 to 10, measured at 30°C on a solution of 0.1 gram of polymer in 100 cc of toluene.

Ethylene-alpha-olefin copolymers are also suitable for use in thermoplastic vulcanizates provided that the cure system does not require the presence of a non-conjugated diene.

Additional suitable elastomers are disclosed in the following U.S. patents: 4,130,535; 4,111,897; 4,311,628; 4,594,390; 4,645,793; 4,808,643; 4,894,408; 5,393,796; 5,936,038, 5,985,970; and 6,277,916.

## Cross-linking Agents

Any cross-linking agent which is capable of curing an elastomer without substantially degrading and/or curing the thermoplastic polymer used in a TPV can be used in embodiments of the invention. A preferred cross-linking agent is phenolic resin. Other curing agents include, but are not limited to, peroxides, azides, aldehyde-amine reaction products, vinyl silane grafted moieties, hydrosilylation, substituted ureas, substituted guanidines; substituted xanthates; substituted dithiocarbamates; sulfur-containing compounds, such as thiazoles, imidazoles, sulfenamides, thiuramidisulfides, paraquinonedioxime, dibenzoparaquinonedioxime, sulfur; and combinations thereof. *See* Encyclopedia of Chemical Technology, Vol. 17, 2nd edition, Interscience Publishers, 1968; also Organic Peroxides, Daniel Seem, Vol.1, Wiley-Interscience, 1970). Unless stated otherwise, the cure systems described below require an elastomer containing a conjugated or non-conjugated diene

Any phenolic curative system which can fully cure EPDM rubber is suitable. While it is preferred to fully cure the elastomer, it is not always necessary. In some embodiments, the elastomer is partially cured or substantially cured. A basic ingredient of such system is a phenolic curing resin made by condensation of halogen substituted phenol, $C_1$-$C_{10}$ alkyl substituted phenol or unsubstituted phenol with an aldehyde, preferably, formaldehyde, in an alkaline medium or by condensation of bifunctional phenoldialcohols. Dimethylol phenols substituted in the para-position with $C_5$ -$C_{10}$ alkyl groups are preferred. Halogenated alkyl substituted phenol curing resins prepared by halogenation of alkyl substituted phenol curing resin are also especially suitable. Phenolic curative systems comprising methylol phenolic resins, halogen donor and metal compound are especially recommended, details of which are described in Giller, U.S. Pat. No. 3,287,440 and Gerstin et al, U.S. Pat. No. 3,709,840.

Another suitable of phenolic curative system is disclosed in U.S. Patent No. 5,952,42.

Non-halogenated phenol curing resins are used in conjunction with halogen donors, preferably, along with a hydrogen halide scavenger. Ordinarily, halogenated, preferably brominated, phenolic resins containing from 2 to 10 weight percent bromine, do not require a halogen donor but are used in conjunction with a hydrogen halide scavenger such as metal oxides such as iron oxide, titanium oxide, magnesium oxide, magnesium silicate, silicon dioxide and preferably zinc oxide, the presence of which promotes the cross-linking function of the phenolic resin; however, with rubbers which do not readily cure with phenolic resins, the conjoint use of a halogen donor and zinc oxide is recommended. The preparation of halogenated phenol resins and their use in a curative system with zinc oxide are described in U.S. Pat. Nos. 2,972,600 and 3,093,613. Examples of suitable halogen donors are stannous chloride, ferric chloride, or halogen donating polymers such as chlorinated paraffin, chlorinated polyethylene, chlorosulfonated polyethylene, and polychlorobutadiene (neoprene rubber). The term "activator" as used herein means any material which materially increases the cross-linking efficiency of the phenolic curing resin and includes metal oxides and halogen donors either used alone or conjointly. For further details of phenolic curative systems see "vulcanization and Vulcanizing Agents," W. Hoffman, Palmerton Publishing Company. Suitable phenolic curing resins and brominated phenolic curing resins are commercially available, for example, such resins may be purchased under the trade names SP-1045, CRJ-352, SP-1055 and SP-1056 from Schenectady Chemicals, Inc. Similar functionally equivalent phenolic curing resins may be obtained from other suppliers. As explained above, sufficient quantities of curatives are used to achieve essentially complete cure of the rubber.

Of course, it is understood that enough of phenolic curative is preferably used to fully cure the rubber. The minimum quantity of phenolic curative necessary to cure the rubber varies depending upon the type of rubber, phenolic curing agent, type of cure promoter and curing conditions such as temperature. Typically, the quantity of phenolic curing agent used to fully cure the EPDM rubber is from about 5 parts to about 20 parts by weight phenolic curing agent per 100 parts by weight of EPDM rubber. Preferably, the quantity of phenolic curing agent is from 7 parts to 14 parts by weight phenolic curing agent per 100 parts by weight EPDM rubber. In addition, an appropriate quantity of cure activator

is used to assure full cure of the rubber. Satisfactory amounts of cure activator varies from 0.01 parts by weight to 10 parts by weight per 100 parts by weight EPDM rubber, although, higher amounts may be used, if desired and satisfactory cure is obtained. The term "phenolic curative" includes a phenolic curing agent (resin) and a cure activator. However, it should not be assumed, from the fact that the amount of phenolic curative is based on the EPDM rubber content of the blend that the phenolic curative does not react with the thermoplastic polymer resin or that there is no reaction between the thermoplastic polymer resin and EPDM rubber. There may be highly significant reactions involved but of limited extent, i.e., there is no substantial quantity of graft formation between the thermoplastic polymer resin and the EPDM rubber. Essentially all of the cured EPDM rubber and thermoplastic polymer resin can be separated and isolated from the blend by high temperature solvent extraction, for example, boiling xylene extraction and infrared analysis of the isolated fractions indicated that little, if any, graft copolymer is formed between the EPDM rubber and thermoplastic polymer resin.

In addition to phenolic curatives, azides may also be used as cross-linking agents. Suitable azides include, but are not limited to, azidoformates, such as tetramethylenebis(azidoformate) (see also U.S. Pat. No. 3,284,421, Breslow, Nov. 8, 1966); aromatic polyazides, such as 4,4'-diphenylmethane diazide (see, also, U.S. Pat. No. 3,297,674, Breslow et al., Jan. 10, 1967); and sulfonazides, such as p,p'-oxybis(benzene sulfonyl azide). Either ethylene-alpha-olefin copolymers or ethylene-alpha-olefin-polyene terpolymers are suitable vulcanizing elastomers for this cure system.

A preferred class of azides is the poly(sulfonyl azide) described above. To crosslink, a poly(sulfonyl azide) is used in a crosslinking amount, that is an amount effective to crosslink the elastomer as compared with the starting material, that is sufficient poly(sulfonyl azide) to result in the formation of at least 10 weight percent gels as evidenced by insolubility of the gels in boiling xylene when tested according to ASTM D-2765A-84. The amount is preferably at least 0.5, more preferably at least 1.0, most preferably 2.0 weight percent poly(sulfonyl azide) based on total weight of the elastomer, with these values depending on the molecular weight of the azide and the molecular weight or melt index of the elastomer. To avoid uncontrolled heating and unnecessary cost, degradation of physical properties, the amount of poly(sulfonyl azide) is preferably less than 10 weight percent, more preferably less than 5.

Suitable peroxides as a cross-linking agent include, but are not limited to, aromatic diacyl peroxides; aliphatic diacyl peroxides; dibasic acid peroxides; ketone peroxides; alkyl peroxyesters; alkyl hydroperoxides (for example, diacetylperoxide; dibenzoylperoxide; bis-2,4-dichlorobenzoyl peroxide; di-tert-butyl peroxide; dicumylperoxode; tert-butylperbeazoate; tert-butylcumylperoxide; 2,5-bis (t-butylperoxy)-2,5-dimethylhexane; 2,5-bis (t-butylperoxy)-2,5-dimethylhexyne-3; 4,4,4',4-tetra-(t-butylperoxy)-2,2-dicyclohexylpropane; 1,4-bis-(t-butylperoxyisopropyl)-benzene; 1,1-bis-(t-butylperoxy)-3,3,5-trimethylcyclohexane; lauroyl peroxide; succinic acid peroxide; cyclohexanone peroxide; t-butyl peracetate; butyl hydroperoxide; etc. Either ethylene-alpha-olefin copolymers or ethylene-alpha olefin-polyene terpolymers are suitable vulcanizing elastomers for this cure system

The vulcanizing elastomer may be grafted to a vinyl silane monomer in the presence of a low level of peroxide via a separate reactive extrusion process. Suitable vinyl silanes include, but are not limited to, vinyl trimethoxysilane, vinyl triethoxysilane. The grafted elastomer may then be reacted with water to cure the polymer in the presence of a catalyst such as dibutyl tin dilaurate during the dynamic vulcanization process. Suitable water sources include, but are not limited to, steam, water/ethylene glycol mixtures, aluminum trihydrate, and magnesium hydroxide. Either ethylene-alpba-olefin copolymers or ethylene-alpha-olefin-polyene terpolymers are suitable vulcanizing elastomers for this cure system.

Silicon hydride having at least two SiH groups in the molecule may be reacted with the carbon-carbon multiple bonds of the the unsaturated rubber component in the presence of a hydrosilylation catalyst to form useful crosslinks during dynamic vulcanization. Suitable silicon hydride compounds include, but are not limited to, methylhydrogen polysiloxanes, methylhydrogen dimethyl-siloxane copolymers, methylhydrogen alkyl methyl polysiloxanes, bis(dimethylsiyl) alkanes and bis(dimethylsilyl)benzene. The amount of silicon hydride compound useful in the process of the composition can range from 0.1 to 10.0 mole equivalents of SiH per carbon-carbon double bond in the rubber, and preferably is in the range of 0.5 to 5.0 mole equivalents of SiH per carbon-carbon double bond in the rubber component of the thermoplastic elastomer. Suitable catalysts for the hydrosilylation vulcanization reaction include transition metals of Group VIII such as palladium, rhodium, platinum and the like, including complexes of these metals. Chrolorplatinic acid has been disclosed as an useful catalyst in U.S. Pat No. 4,803,244 and U.S. Pat. No. 5,597,867. The use of hydrosilylation crosslinking to dynamically vulcanize EPDM to produce TPV's was disclosed in U.S. Pat. No. 6,251,998 (Medsker, et al., June 26, 2001).

Generally, the thermoplastic elastomers in the TPVs are fully cured. Such fully cured vulcanizates are processable as thermoplastics although they are cross-linked to a point where the rubber portions are almost entirely insoluble in the usual solvents. Where the determination of extractables is an appropriate measure of the state of cure, the thermoplastic vulcanizates are produced by vulcanizing the blends to the extent that the vulcanizates contains no more than about three percent by weight of rubber extractable in cyclohexane at 23 °C and preferably to the extent that the vulcanizates contains less than two percent by weight extractable in cyclohexane at 23 °C. In general, the less extractables the better are the properties and still more preferable are vulcanizates having essentially no extractable rubber (less

than 0.5 weight percent) in cyclohexane at 23 °C. Gel content reported as percent gel is determined by the procedure of U.S. Pat. No. 3,203,937 which comprises determining the amount of insoluble polymer by soaking the specimen for 48 hours in cyclohexane at 23 °C and weighing the dried residue, making suitable corrections based upon knowledge of the composition. Thus, corrected initial and final weights are used by subtracting from the initial weight the weight of the components soluble in cyclohexane, other than the rubber, such as extender oils, plasticizers and components of the resin soluble in cyclohexane. Any insoluble pigments, fillers, etc., are subtracted from both the initial and final weights.

**Additives**

The properties of a TPV may be modified, either before or after vulcanization, by addition of ingredients which are conventional in the compounding of EPDM rubber, thermoplastic polymer resin and blends thereof. Examples of such ingredients include particulate filler such as carbon black amorphous precipitated or fumed silica, titanium dioxide, colored pigments, clay, talc, calcium carbonate, wollastonite, mica, montmorillonite, glass beads, hollow glass spheres, glass fibers, zinc oxide and stearic acid, stabilizers, antidegradants, frame retardants, processing aids, adhesives, tackifiers, plasticizers, wax, discontinuous fibers, such as wood cellulose fibers and extender oils. The addition of carbon black, extender oil or both, preferably prior to dynamic curing, are particularly recommended. Carbon black improves the tensile strength and tends to promote the phenolic curative. Extender oil can improve the resistance to oil swell, heat stability, hysteresis, cost and permanent set of the elastoplastic composition. Aromatic, naphthenic and paraffinic extender oils are satisfactory. The addition of extender oil can also improve processability. For suitable extender oils, refer to Rubber World Blue Book, supra, pages 145-190. The quantity of extender oil added depends upon the properties desired, with the upper limit depending upon the compatibility of the particular oil and blend ingredients which limit is exceeded when excessive exuding of extender oil occurs. Typically, from 5 to 300 parts by weight extender oil are added per 100 parts by weight blend of olefin rubber and thermoplastic polymer resin. Commonly, from 30 to 250 parts by weight of extender oil are added per 100 parts by weight of rubber present in the blend with quantities of from 70 to 200 parts by weight of extender oil per 100 parts by weight of rubber being preferred. The amount of extender oil depends, at least in part, upon the type of rubber. High viscosity rubbers are more highly oil extendable.

Colorable compositions are prepared by incorporation of non-black fillers instead of carbon black. Colorless, off-white or white pigments (fillers, extenders, or reinforcing pigments) such as amorphous precipitated or fumed silica, aluminum silicate, magnesium silicate, kaolin clay, montmorillonite, wollastonite, and titanium dioxide are suitable for such purposes. Preferably, a coupling agent such as titanates or silanes are used with non-black fillers especially with kaolin clay. Typically, from 5 to 100 parts by weight non-black pigment are added per 100 parts by weight of rubber in the blend. Typical additions of fillers either carbon black or non-black fillers comprise from 40 to 250 parts by weight of carbon black per 100 parts by weight of EPDM rubber and usually from 10 to 100 parts by weight filler per 100 parts total weight of EPDM rubber and extender oil. The amount of filler which can be used depends, at least in part, upon the type of filler and the amount of extender oil to be used.

**Method of Making TPVs**

Thermoplastic vulcanizates are typically prepared by blending plastic and cured rubbers by dynamic vulcanization. The compositions can be prepared by any suitable method for mixing of rubbery polymers including mixing on a rubber mill or in internal mixers such as a Banbury mixer. In the compounding procedure, the conventional compounding ingredients are incorporated. Such compounding ingredients may include one or more types of carbon black, additional extender oil, other fillers such as clay, silica, and the like, tackifiers, waxes, bonding resins and the like, zinc oxide, antioxidants, antiozonants, processing aids, and the cure active agents. Generally, it is preferred to add the cure active agents in a second stage of compounding which may be on a rubber mill or in an internal mixer operated at a temperature formally not in excess of about 60 °C. The cure active agents may include sulfur and the various sulfur containing accelerators. The compounds are cured in a conventional manner by heating for from 5 to 60 minutes at temperatures of from 150 °C to 200 °C to form novel elastomeric vulcanizates having useful properties as described herein. Specific embodiments of the invention are hereinafter described, by way of illustration only.

Dynamic vulcanization is a process whereby a blend of plastic, rubber and rubber curative is masticated while curing the rubber. The term "dynamic" indicates the mixture is subjected to shear forces during the vulcanization step as contrasted with "static" vulcanization wherein the vulcanizable composition is immobile (in fixed relative space) during the vulcanization step. One advantage of dynamic vulcanization is that elastoplastic (thermoplastic elastomeric) compositions may be obtained when the blend contains the proper proportions of plastic and rubber. Examples of dynamic vulcanization are described in U.S. Pat Nos. 3,037,954; 3,806,558; 4,104,210; 4,116,914; 4,130,535; 4,141,863; 4,141,878; 4,173,556; 4,207,404; 4,271,049 4,287,324; 4,289,570; 4,299,931; 4,311,628 and 4,338,413.

Any mixer capable of generating a shear rate of 2000 $sec^{-1}$ or higher is suitable for carrying out the process. Generally, this requires a high speed internal mixer having a narrow clearance between the tips of the kneading elements

and the wall. Shear rate is the velocity gradient in the space between the tip and the wall. Depending upon the clearance between the tip and the wall, rotation of the kneading elements from about 100 to about 500 revolutions per minute (rpm) is generally adequate to develop a sufficient shear rate. Depending upon the number of tips on a given kneading element and the rate of rotation, the number of times the composition is kneaded by each element is from about 1 to about 30 times per second, preferably from about 5 to about 30 times per second, and more preferably from about 10 to about 30 times per second. This means that material typically is kneaded from about 200 to about 1800 times during vulcanization. For example, in a typical process with a rotor with three tips rotating at about 400 rpm in a mixer having a residence time of about 30 seconds, the material is kneaded about 600 times.

A mixer satisfactory for carrying out the process is a high shear mixing extruder produced by Wemer & Pfleiderer, Germany. The Werner & Pfleiderer (W&P) extruder is a twin-shaft screw extruder in which two intermeshing screws rotate in the same direction. Details of such extruders are described in U.S. Pat. Nos. 3,963,679 and 4,250,292; and German Pat Nos. 2,302,546; 2,473,764 and 2,549,372.

Screw diameters vary from about 53 mm to about 300 mm; barrel lengths vary but generally the maximum barrel length is the length necessary to maintain a length over diameter ratio of about 42. The shaft screws of these extruders normally are made-up of alternating series of conveying sections and kneading sections. The conveying sections cause material to move forward from each kneading section of the extruder. Typically there are about an equal number of conveying and kneading sections fairly evenly distributed along the length of the barrel. Kneading elements containing one, two, three or four tips are suitable, however, kneading elements from about 5 to about 30 mm wide having three tips are preferred. At recommended screw speeds of from about 100 to about 600 rpm and radial clearance of from about 0.1 to about 0.4 mm, these mixing extruders provide shear rates of at least from about 2000 $sec^{-1}$ to about 7500 $sec^{-1}$ or more. The net mixing power expended in the process including homogenization and dynamic vulcanization is usually from about 100 to about 500 watt hours per kilogram of product produced; with from about 300 to about 400 watt hours per kilogram being typical.

The process is illustrated by the use of W&P twin screw extruders, models ZSK-53 or ZSK-83. Unless specified otherwise, all of the plastic, rubber and other compounding ingredients except the cure activator are fed into the entry port of the extruder. In the first third of the extruder, the composition is masticated to melt the plastic and to form an essentially homogeneous blend. The cure activator (vulcanization accelerator) is added through another entry port located about one-third of the length of the barrel downstream from the initial entry port. The last two-thirds of the extruder (from the cure activator entry port to the outlet of the extruder) is regarded as the dynamic vulcanization zone. A vent operated under reduced pressure is located near the outlet to remove any volatile by-products. Sometimes, additional extender oil or plasticizer and colorants are added at another entry port located about the middle of the vulcanization zone.

The residence time within the vulcanization zone is the time a given quantity of material is within the aforesaid vulcanization zone. Since the extruders are typically operated under a starved condition, usually from about 60 to about 80 percent full, residence time is essentially directly proportional to feed rate. Thus, residence time in the vulcanization zone is calculated by multiplying the total volume of the dynamic vulcanization zone times the fill factor divided by the volume flow rate. Shear rate is calculated by dividing the product of the circumference of the circle generated by the screw tip times the revolutions of the screw per second by the tip clearance. In other words, shear rate is the tip velocity divided by the tip clearance.

Methods other than the dynamic curing of rubber/thermoplastic polymer resin blends can be utilized to prepare compositions. For example, the rubber can be fully cured in the absence of the thermoplastic polymer resin, either dynamically or statically, powdered, and mixed with the thermoplastic polymer resin at a temperature above the melting or softening point of the resin. If the cross-linked rubber particles are small, well dispersed and in an appropriate concentration, the compositions are easily obtained by blending cross-linked rubber and thermoplastic polymer resin. It is preferred that a mixture comprising well dispersed small particles of cross-linked rubber is obtained. A mixture which contains poor dispersed or too large rubber particles can be comminuted by cold milling, to reduce particle size to below about 50 μm, preferably below about 20 μm and more preferably to below about 5 μm. After sufficient comminution or pulverization, a TPV composition is obtained. Frequently, poor dispersion or too large rubber particles is obvious to the naked eye and observable in a molded sheet. This is especially true in the absence of pigments and fillers. In such a case, pulverization and remolding gives a sheet in which aggregates of rubber particles or large particles are not obvious or are far less obvious to the naked eye and mechanical properties are greatly improved.

In some embodiments, the TPV is made using a one step or two or more step compounding process, wherein the thermoplastic polymer is branched in conjunction with the production of the TPV. In one-step compounding using phenolic curatives, the compounding temperature preferably is maintained below 220 °C to avoid breaking down the phenolic curative agent. In two-step compounding, the phenolic curative agent is typically added during the second step and the temperature during the second step is maintained below 220°C.

Following are three brief exemplifications of processes for on-line branching of the thermoplastic polymer in combination with dynamic vulcanization:

Single Step: Charge a mixture of polypropylene (homopolymer or copolymer (either random polymer or impact

copolymer), EPDM, stabilizer, processing aid, and ZnO, and halogen donator, such as tin dichloride. Add oil or meter in oil. The phenolic curative (such as SP1055 or SP1045) is fed via side arm feeder at a point along the extruder barrel such that all other ingredients have been intimately mixed.. Alternatively, non halogenated phenolic curatives (such as SP1045) may be added in place of the halogen donator with the other ingredients. The halogen donator is then added downstream to the extruder via side feeder. Optionally, 50 ppm - 450 ppm of DPO-BSA Concentrate Master Batch may be added with the polypropylene and/or EPDM to add long chain branching. Typical formulations to be used are described in Table 1. The extruder or mixer should be operated so that the temperature profile within the zones of the extruder preferably does not exceed 220°C. Proper mixing screw needs to be employed to allow homogeneous mixing in case of the extruder approach. Finally the melt is cooled and pelletized

Two-Step In An Extruder: In this aspect a screw compounding extruder with a high aspect ratio and having two feed hoppers is utilized. Polypropylene (homopolymer or copolymer (random or impact copolyer)) and, optionally, 0-450 ppm of DPO-BSA Master Batch is added through the first feeder. The temperature in the first section is maintained between 200 - 2500°C till the second feed hopper is reached. The temperature in the extruder adjacent the second feed hopper is lowered to between 190°C - 2200°C. At the second feed hopper EPDM, stabilizer, processing aid, filler and halogen donor are added. Subsequently, oil is metered in phenolic curative (SP1055 or SP1045) is added via side arm feeder. Again, non-halogenated phenolic curative can be exchanged for the halogen donator and the halogen donator exchanged for the non halogenated phenolic curative during the mixing process. Typical formulations are described in Table 1. The final melt exiting the extruder is cooled and pelletized.

Single Step in a Mixer: In a mixer (for example a Brabender batch mixer) charge PP (homopolymer or copolymer (random or impact copolymer),EPDM, stabilizer and processing aid, and halogen donator. Add oil to the formulation and as torque increases and continue to mix for another 2 minutes Mix for approximately 2 minutes and add phenolic curative. Typical formulations are described in Table 1. Finally cool the melt and granulate.

Two-Step In A Mixer: In a mixer (for example a Brabender batch mixer) charge PP (homopolymer or copolymer (random or impact copolymer) and 0-450 ppm of DPO-BSA and mix to a homogeneous melt at temperatures between 20°C-250°C. Cool the mixture down to approximately to 190°C and add EPDM, stabilizer and processing aid. Add oil to the formulation and as torque increases and continue to mix for another 2 minutes. Mix for approximately 2 minutes and add phenolic curative. Typical formulations are described in Table 1. Finally cool the melt and granulate.

The TPV mixtures made using the one-step and two-step processes described above will have similar properties to those exemplied in the earlier examples.

In some embodiments, a thermoplastic vulcanizate composition comprises a mixture or reaction product of (1) a branched polypropylene having a branching index of less than 1.0; (2) an EPDM elastomer having ethylenic unsaturation; (3) an ethylene/α-olefin block interpolymer disclosed herein; and a phenolic resin, wherein the branched polypropylene has a weight-average molecular weight in the range from 100,000 to 1,000,000 and has a melt strength which is at least 50% higher than that of a linear polypropylene having the same weight-average molecular weight.

Table 1 Typical Ingredient Ranges for Thermoplastic Vulcanizate Formulations

| Ingredient | phr |
|---|---|
| EPDM# | 100 |
| Polypropylene | 50 - 200 |
| Napthenic Extender Oil | 10 - 150 |
| Non halogenated phenolic resin (SP1045) | 4 - 12 |
| Halogen donator (Stannous chloride) | 0.2 - 2 |
| Silane treated kaolin clay | 5 - 20 |
| Process Aid | 0.1 - 1 |
| Antioxidant | 0.1 - 2 |
| * The inventive polymer is used here in part or in whole (i.e., it can account about 1% to by weight of the EPDM) | |

Applications of TPVs

Thermoplastic vulcanizate compositions are useful for making a variety of articles such as tires, hoses, belts, gaskets, moldings and molded parts. They are particularly useful for applications that require high melt strength such as large part blow molding, foams, and wire cables. They also are useful for modifying thermoplastic resins, in particular,

thermoplastic polymer resins. The compositions can be blended with thermoplastic resins using conventional mixing equipment making a rubber modified thermoplastic resin. The properties of the modified thermoplastic resin depend upon the amount of thermoplastic elastomer composition blended.

Thermoplastic vulcanizate compositions can also be used to make microcellular TPV foams using supercritical fluids (e.g., CO or $N_2$). Such techniques are taught in U.S. Patents No. 5,158,986; 5,160,674; 5,334,356; 5,866,053; 6,169,122; 6,284,810; and 6,294,115. The methods disclosed therein can be used to prepare embodiments of the invention with or without modifications.

Additional TPV applications are disclosed in the following U.S. patents: 6,329,463 entitled "High temperature, oil resistant thermoplastic vulcanizates made from polar plastics and acrylate or ethylene-acrylate elastomers;" 6,288,171 entitled "Modification of thermoplastic vulcanizates using random propylene copolymers;" 6,277,916 entitled "Process for preparing thermoplastic vulcanizates;" 6,270,896 entitled "Elastic fiber;" 6,235,166 entitled "Sealing means for electrically driven water purification units;" 6,221,451 entitled "Synthetic closure;" 6,207,752 entitled "Thermoplastic vulcanizates of carboxylated nitrile rubber and thermoplastic polyurethanes;" 6,174,962 entitled "Free radically cured thermoplastic vulcanizates of a polyolefin and a acrylate modified paraalkylstyrene/isoolefin copolymer;" 6,169,145 entitled "Vulcanization of carboxyl containing elastomers using reductive hydrosilylation with extension into dynamic vulcanization;" 6,150,464 entitled "Preferred process for silicon hydride addition and preferred degree of polymerization for silicon hydride for thermoplastic vulcanizates;" 6,147,160 entitled "Organosilane cured butyl rubber/polypropylene TPV;" 6,100,334 entitled "Thermoplastic vulcanizates from a cyclic olefin rubber, a polyolefin, and a compatiblizer;" 6,084,031 entitled "TPV from hydrosilylation crosslinking of acrylic modified bromo XP-50 butyl rubber;" 6,069,202 entitled "Thermoplastic elastomer triblend from an engineering thermoplastic, functionalized ethylene and or diene polymer, and brominated isobutylene p-methylstyrene copolymer;" 6,066,697 entitled "Thermoplastic compositions containing elastomers and fluorine containing thermoplastics;" 6,028,137 entitled "Elastomeric compounds incorporating silicon-treated carbon blacks;" 6,020,427 entitled "Thermoplastic vulcanizates of carboxylated nitrile rubber and polyester thermoplastics;" 5,977,271 entitled "Process for preparing thermoset interpolymers and foams;" 5,960,977 entitled "Corrugated polymeric filler neck tubing;" 5,957,164 entitled "Refrigerant hose;" 5,952,425 entitled "Preferred structure of phenolic resin curative for thermoplastic vulcanizate;" 5,939,464 entitled "High elasticity foams;" 5,936,038 entitled "Vulcanizable elastomeric composition and thermoplastic vulcanizate employing the same;" 5,869,591 entitled "Thermoset interpolymers and foams;" 5,750,625 entitled "Phenolic resin curatives which form nonstaining thermoplastic elastomers;" 5,744,238 entitled "Dimensionally stable sheet handling shaft assembly and method of making same;" 5,621,045 entitled "Thermoplastic vulcanizates from isobutylene rubber and either EPDM or a conjugated diene rubber," and 4,783,579 entitled "Flat multi-conductor power cable with two insulating layers."

Profile extrusion molding is a popular method for producing continuous uniform thermoplastic items having often complex cross sections for use as, for example, automobile exterior trim. The profile assumes the shape of the extrusion die of choice, and is cut and end-capped to form such articles as body side moldings. A single profile may be designed to fit many models of cars, making profile extrusion a popular after market process. A wide processing range of thermoplastic materials permits high outputs in profile extrusion. Continuous operation of an extruder permits uniform production of plastic products. The temperature required along the extruder barrel, adapter and die depend upon the specific extrusion process being conducted and the nature of the plastic used.

The following examples are presented to exemplify embodiments of the invention. All numerical values are approximate. When numerical ranges are given, it should be understood that embodiments outside the stated ranges may still fall within the scope of the invention. Specific details described in each example should not be construed as necessary features of the invention.

EXAMPLES

Testing Methods

In the examples that follow, the following analytical techniques are employed:

**GPC Method for Samples 1-4 and A-C**

An automated liquid-handling robot equipped with a heated needle set to 160°C is used to add enough 1,2,4-trichlorobenzene stabilized with 300 ppm Ionol to each dried polymer sample to give a final concentration of 30 mg/mL. A small glass stir rod is placed into each tube and the samples are heated to 160°C for 2 hours on a heated, orbital-shaker rotating at 250 rpm. The concentrated polymer solution is then diluted to 1 mg/ml using the automated liquid-handling robot and the heated needle set to 160°C.

A Symyx Rapid GPC system is used to determine the molecular weight data for each sample. A Gilson 350 pump set at 2.0 ml/min flow rate is used to pump helium-purged 1,2-dichlorobenzene stabilized with 300 ppm Ionol as

the mobile phase through three Plgel 10 micrometer (μm) Mixed B 300mm x 7.5mm columns placed in series and heated to 160°C. A Polymer Labs ELS 1000 Detector is used with the Evaporator set to 250°C, the Nebulizer set to 165°C, and the nitrogen flow rate set to 1.8 SLM at a pressure of 60-80 psi (400-600 kPa) $N_2$. The polymer samples are heated to 160°C and each sample injected into a 250 μl loop using the liquid-handling robot and a heated needle. Serial analysis of the polymer samples using two switched loops and overlapping injections are used. The sample data is collected and analyzed using Symyx Epoch™ software. Peaks are manually integrated and the molecular weight information reported uncorrected against a polystyrene standard calibration curve.

**Standard CRYSTAF Method**

Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.

**DSC Standard Method (Excluding Samples 1-4 and A-C)**

Differential Scanning Calorimetry results are determined using a TAI model Q1000 DSC equipped with an RCS cooling accessory and an autosampler. A nitrogen purge gas flow of 50 ml/min is used. The sample is pressed into a thin film and melted in the press at about 175°C and then air-cooled to room temperature (25°C). 3-10 mg Of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180°C and held isothermal for 3 minutes in order to remove any previous thermal history. The sample is then cooled to -40°C at 10°C/min cooling rate and held at -40°C for 3 minutes. The sample is then heated to 150 °C at 10°C/min. heating rate. The cooling and second heating curves are recorded.

The DSC melting peak is measured as the maximum in heat flow rate (W/g) with respect to the linear baseline drawn between -30°C and end of melting. The heat of fusion is measured as the area under the melting curve between -30°C and the end of melting using a linear baseline.

**GPC Method (Excluding Samples 1-4 and A-C)**

The gel permeation chromatographic system consists of either a Polymer Laboratories Model Pal-210 or a Polymer Laboratories Model PL-220 instrument. The column and carousel compartments are operated at 140 °C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene} = 0.431(M_{polystyrene})$.

Polyethylene equivalent molecular weight calculations are performed using Viscotek TriSEC software Version 3.0.

**Compression Set**

Compression set is measured according to ASTM D 395. The sample is prepared by stacking 25.4 mm diameter round discs of 3.2 mm, 2.0 mm, and 0.25 mm thickness until a total thickness of 12.7 mm is reached. The discs are cut from 12.7 cm x 12.7 cm compression molded plaques molded with a hot press under the following conditions: zero pressure for 3 min at 190°C, followed by 86 MPa for 2 min at 190°.C, followed by cooling inside the press with cold running water at 86 MPa.

**Density**

Samples for density measurement are prepared according to ASTM D 1928. Measurements are made within one hour of sample pressing using ASTM D792, Method B.

**Flexural/Secant Modulus/ Storage Modulus**

Samples are compression molded using ASTM D 1928. Flexural and 2 percent secant moduli are measured according to ASTM D-790. Storage modulus is measured according to ASTM D 5026-01 or equivalent technique.

**Optical properties**

Films of 0.4 mm thickness are compression molded using a hot press (Carver Model #4095-4PR1001R). The pellets are placed between polytetrafluoroethylene sheets, heated at 190 °C at 55 psi (380 kPa) for 3 min, followed by 1.3 MPa for 3 min, and then 2.6 MPa for 3 min. The film is then cooled in the press with running cold water at 1.3 MPa for 1 min. The compression molded films are used for optical measurements, tensile behavior, recovery, and stress relaxation.

Clarity is measured using BYK Gardner Haze-gard as specified in ASTM D 1746.

45° gloss is measured using BYK Gardner Glossmeter Microgloss 45° as specified in ASTM D-2457

Internal haze is measured using BYK Gardner Haze-gard based on ASTM D 1003 Procedure A. Mineral oil is applied to the film surface to remove surface scratches.

**Mechanical Properties - Tensile, Hysteresis, and Tear**

Stress-strain behavior in uniaxial tension is measured using ASTM D 1708 microtensile specimens. Samples are stretched with an Instron at 500 % $min^{-1}$ at 21 °C. Tensile strength and elongation at break are reported from an average of 5 specimens.

100% and 300% Hysteresis is determined from cyclic loading to 100% and 300% strains using ASTM D 1708 microtensile specimens with an Instron™ instrument. The sample is loaded and unloaded at 267 % $min^{-1}$ for 3 cycles at 21°C. Cyclic experiments at 300% and 80°C are conducted using an environmental chamber. In the 80 °C experiment, the sample is allowed to equilibrate for 45 minutes at the test temperature before testing. In the 21 °C, 300% strain cyclic experiment, the retractive stress at 150% strain from the first unloading cycle is recorded. Percent recovery for all experiments are calculated from the first unloading cycle using the strain at which the load returned to the base line. The percent recovery is defined as:

$$\%\mathrm{Recovery} = \frac{\varepsilon_f - \varepsilon_s}{\varepsilon_f} \times 100$$

where $\varepsilon_f$ is the strain taken for cyclic loading and $\varepsilon_s$ is the strain where the load returns to the baseline during the $1^{st}$ unloading cycle.

Stress relaxation is measured at 50 percent strain and 37 °C for 12 hours using an Instron™ instrument equipped with an environmental chamber. The gauge geometry was 76 mm x 25 mm x 0.4 mm. After equilibrating at 37°C for 45 min in the environmental chamber, the sample was stretched to 50% strain at 333% $min^{-1}$. Stress was recorded as a function of time for 12 hours. The percent stress relaxation after 12 hours was calculated using the formula:

$$\% \, Stress \, Relaxation = \frac{L_0 - L_{12}}{L_0} \times 100$$

where Lo is the load at 50% strain at 0 time and $L_{12}$ is the load at 50 percent strain after 12 hours.

Tensile notched tear experiments are carried out on samples having a density of 0.88 g/cc or less using an Instron™ instrument. The geometry consists of a gauge section of 76 mm x 13 mm x 0.4 mm with a 2 mm notch cut into the sample at half the specimen length. The sample is stretched at 508 mm $min^{-1}$ at 21 °C until it breaks. The tear energy is calculated as the area under the stress-elongation curve up to strain at maximum load. An average of at least 3 specimens are reported.

### TMA

Thermal Mechanical Analysis (Penetration Temperature) is conducted on 30mm diameter x 3.3 mm thick, compression molded discs, formed at 180°C and 10 MPa molding pressure for 5 minutes and then air quenched. The instrument used is a TMA 7, brand available from Perkin-Elmer. In the test, a probe with. 1.5 mm radius tip (P/N N519-0416) is applied to the surface of the sample disc with IN force. The temperature is raised at 5°C/min from 25°C. The probe penetration distance is measured as a function of temperature. The experiment ends when the probe has penetrated 1 mm into the sample.

### DMA

Dynamic Mechanical Analysis (DMA) is measured on compression molded disks formed in a hot press at 180°C at 10 MPa pressure for 5 minutes and then water cooled in the press at 90°C / min. Testing is conducted using an ARES controlled strain rheometer (TA instruments) equipped with dual cantilever fixtures for torsion testing.

A 1.5mm plaque is pressed and cut in a bar of dimensions 32x12mm. The sample is clamped at both ends between fixtures separated by 10mem (grip separation ΔL) and subjected to successive temperature steps from -100°C to 200°C (5°C per step). At each temperature the torsion modulus G' is measured at an angular frequency of 10 rad/s, the strain amplitude being maintained between 0.1 percent and 4 percent to ensure that the torque is sufficient and that the measurement remains in the linear regime.

An initial static force of 10 g is maintained (auto-tension mode) to prevent slack in the sample when thermal expansion occurs. As a consequence, the grip separation ΔL increases with the temperature, particularly above the melting or softening point of the polymer sample. The test stops at the maximum temperature or when the gap between the fixtures reaches 65 mm.

### Melt Index

Melt index, or $I_2$, is measured in accordance with ASTM D 1238, Condition 190°C/2.16 kg. Melt index, or $I_{10}$ is also measured in accordance with ASTM D 1238, Condition 190°C/10 kg.

### ATREF

Analytical temperature rising elution fractionation (ATREF) analysis is conducted according to the method described in U.S. Patent No. 4,798,081 and Wilde, L.; Ryle, T.R.; Knobeloch, D.C.; Peat, I.R; Determination of Branching Distributions in Polyethylene and Ethylene Copolymers, J. Polym. Sci., 20, 441-455 (1982). The composition to be analyzed is dissolved in trichlorobenzene and allowed to crystallize in a column containing an inert support (stainless steel shot) by slowly reducing the temperature to 20°C at a cooling rate of 0.1°C/min. The column is equipped with an infrared detector. An ATREF chromatogram curve is then generated by eluting the crystallized polymer sample from the column by slowly increasing the temperature of the eluting solvent (trichlorobenzene) from 20 to 120°C at a rate of 1.5°C/min.

### $^{13}C$ NMR Analysis

The samples are prepared by adding approximately 3g of a 50/50 mixture of tetrachloroethane-$d^2$/orthodichlorobenzene to 0.4 g sample in a 10 mm NMR tube. The samples are dissolved and homogenized by heating the tube and its contents to 150°C. The data are collected using a JEOL Eclipse™ 400MHz spectrometer or a Varian Unity Plus™ 400MHz spectrometer, corresponding to a $^{13}C$ resonance frequency of 100.5 MHz. The data are acquired using 4000

transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 130 °C in a 10 mm broad band probe. The comonomer incorporation is determined using Randall's triad method (Randall, J.C.; JMS-Rev. Macromol. Chem. Phys., C29, 201-317 (1989)).

**Polymer Fractionation by TREF**

Large-scale TREF fractionation is carried by dissolving 15-20 g of polymer in 2 liters of 1,2,4-trichlorobenzene (TCB)by stirring for 4 hours at 160°C. The polymer solution is forced by 15 psig (100 kPa) nitrogen onto a 3 inch by 4 foot (7.6 cm x 12 cm) steel column packed with a 60:40 (v:v) mix of 30-40 mesh (600-425 μm) spherical, technical quality glass beads (available from Potters Industries, HC 30 Box 20, Brownwood, TX, 76801) and stainless steel, 0.028" (0.7mm) diameter cut wire shot (available form Pellets, Inc. 63 Industrial Drive, North Tonawanda, NY, 14120). The column is immersed in a thermally controlled oil jacket, set initially to 160 °C. The column is first cooled ballistically to 125 °C, then slow cooled to 20 °C at 0.04 °C per minute and held for one hour. Fresh TCB is introduced at about 65 ml/min while the temperature is increased at 0.167 °C per minute.

Approximately 2000 ml portions of eluant from the preparative TREF column are collected in a 16 station, heated fraction collector. The polymer is concentrated in each fraction using a rotary evaporator until about 50 to 100 ml of the polymer solution remains. The concentrated solutions are allowed to stand overnight before adding excess methanol, filtering, and rinsing (approx. 300-500 ml of methanol including the final rinse). The filtration step is performed on a 3 position vacuum assisted filtering station using 5.0 μm polytetraftuoroethylene coated filter paper (available from Osmonics Inc., Cat# Z50WP04750). The filtrated fractions are dried overnight in a vacuum oven at 60 °C and weighed on an analytical balance before further testing.

**Melt Strength**

Melt Strength (MS) is measured by using a capillary rheometer fitted with a 2.1 mm diameter, 20:1 die with an entrance angle of approximately 45 degrees. After equilibrating the samples at 190°C for 10 minutes, the piston is run at a speed of 1 inch/minute (2.54 cm/minute). The standard test temperature is 190°C. The sample is drawn uniaxially to a set of accelerating nips located 100 mm below the die with an acceleration of 2.4 $mm/sec^2$. The required tensile force is recorded as a function of the take-up speed of the nip rolls. The maximum tensile force attained during the test is defined as the melt strength. In the case of polymer melt exhibiting draw resonance,
the tensile force before the onset of draw resonance was taken as melt strength. The melt strength is recorded in centiNewtons ("cN").

Catalysts

The term "overnight", if used, refers to a time of approximately 16-18 hours, the term "room temperature", refers to a temperature of 20-25 °C, and the term "mixed alkanes" refers to a commercially obtained mixture of $C_{6-9}$ aliphatic hydrocarbons available under the trade designation Isopar E®, from Exxon Mobil Chemical Company. In the event the name of a compound herein does not conform to the structural representation thereof, the structural representation shall control. The synthesis of all metal complexes and the preparation of all screening experiments were carried out in a dry nitrogen atmosphere using dry box techniques. All solvents used were HPLC grade and were dried before their use.

**MMAO** refers to modified methylalumoxane, a triisobutylaluminum modified methylalumoxane available commercially from Akzo-Noble Corporation.

The preparation of catalyst (B 1) is conducted as follows.

a) Preparation of (1-methyllethyl)(2-hydroxy-3,5-di(t-butyl)phenyl)methylimine

3,5-Di-t-butylsalicylaldehyde (3.00 g) is added to 10 mL of isopropylamine. The solution rapidly turns bright yellow. After stirring at ambient temperature for 3 hours, volatiles are removed under vacuum to yield a bright yellow, crystalline solid (97 percent yield).

b) Preparation of 1,2-bis-(3,5-di-t-butylphenylene)(1-(N-(1-methylethyl)immino)methyl)-(2-oxoyl) zirconium dibenzyl

A solution of (1-methylethyl)(2-hydroxy-3,5-di(t-butyl)phenyl)imine (605 mg, 2.2 mmol) in 5 mL toluene is slowly added to a solution of $Zr(CH_2Ph)_4$(500 mg, 1.1 mmol) in 50 mL toluene. The resulting dark yellow solution is stirred for 30 min. Solvent is removed under reduced pressure to yield the desired product as a reddish-brown solid.

The preparation of catalyst (B2) is conducted as follows.

a) Preparation of (1-(2-methylcyclohexyl)ethyl)(2-oxoyl-3,5-di(t-butyl)phenyl)imine

2-Methylcyclohexylamine (8.44 mL, 64.0 mmol) is dissolved in methanol (90 mL), and di-t-butylsalicaldehyde (10.00 g, 42.67 mmol) is added. The reaction mixture is stirred for three hours and then cooled to -25°C for 12 hrs. The resulting yellow solid precipitate is collected by filtration and washed with cold methanol (2 x 15 mL), and then dried under reduced pressure. The yield is 11.17 g of a yellow solid. $^1$H NMR is consistent with the desired product as a mixture of isomers.

b) Preparation of bis-(1-(2-methylcyclohexyl)ethyl)(2-oxoyl-3.5-di(t-butyl)phenyl) immino)zirconium dibenzyl

A solution of (1-(2-methylcyclohexyl)ethyl)(2-oxoyl-3,5-di(t-butyl)phenyl)imine (7.63 g, 23.2 mmol) in 200 mL toluene is slowly added to a solution of $Zr(CH_2Ph)_4$ (5.28 g, 11.6 mmol) in 600 mL toluene. The resulting dark yellow solution is stirred for 1 hour at 25°C. The solution is diluted further with 680 mL toluene to give a solution having a concentration of 0.00783 M.

**Cocatalyst 1** A mixture of methyldi($C_{14-18}$ alkyl)ammonium salts of tetrakis(pentafluorophenyl)borate (herein-after armeenium borate), prepared by reaction of a long chain trialkylamine (Armeen™ M2HT, available from Akzo-Nobel, Inc.), HCl and $Li[B(C_6F_5)_4]$, substantially as disclosed in USP 5,919,9883, Ex. 2.

**Cocatatyst 2** Mixed $C_{14-18}$ alkyldimethylammonium salt of bis(tris(pentafluorophenyl)-alumane)-2-undecylimidazolide, prepared according to USP 6,395,671, Ex. 16.

**Shuttling Agents** The shuttling agents employed include diethylzinc (DEZ, SA1), di(i-butyl)zinc (SA2), di(n-hexyl)zinc (SA3), triethylaluminum (TEA, SA4), trioctylaluminum (SA5), triethylgallium (SA6), i-butylaluminum bis(dimethyl(t-butyl)siloxane) (SA7), i-butylaluminum bis(di(trimethylsilyl)amide) (SA8), n-octylaluminum di(pyridine-2-methoxide) (SA9), bis(n-octadecyl)i-butylaluminum (SA10), i-butylaluminum bis(di(n-pentyl)amide) (SA11), n-octylaluminum bis(2,6-di-t-butylphenoxide) (SA12), n-octylaluminum di(ethyl(1-naphthyl)amide) (SA13), ethylaluminum bis(t-butyldimethylsiloxide) (SA14), ethylaluminum di(bis(trimethylsilyl)amide) (SA15), ethylaluminum bis(2,3,6,7-dibenzo-1-azacycloheptaneamide) (SA16), n-octylaluminum bis(2,3,6,7-dibenzo-l-azacycloheptaneamide) (SA17), n-octylaluminum bis (dimethyl(t-butyl)siloxide(SA18), ethylzinc (2,6-dipheaylphenoxide) (SA19), and ethylzinc (t-butoxide) (SA20).

Examples 1-4, Comparative A-C

General High Througthput Parallel Polymerization Conditions

Polymerizations are conducted using a high throughput, parallel polymerization reactor (PPR) available from Symyx technologies, Inc. and operated substantially according to USP's 6,248,540, 6,030,917, 6,362,309, 6,306,658, and 6,316,663. Ethylene copolymerizations are conducted at 130°C and 200 psi (1.4 MPa) with ethylene on demand using 1.2 equivalents of cocatalyst 1 based on total catalyst used (1.1 equivalents when MMAO is present). A series of polymerizations are conducted in a parallel pressure reactor (PPR) comprised of 48 individual reactor cells in a 6 x 8 array that are fitted with a pre-weighed glass tube. The working volume in each reactor cell is 6000 μL. Each cell is temperature and pressure controlled with stirring provided by individual stirring paddles. The monomer gas and quench gas are plumbed directly into the PPR unit and controlled by automatic valves. Liquid reagents are robotically added to each reactor cell by syringes and the reservoir solvent is mixed alkanes. The order of addition is mixed alkanes solvent (4 ml), ethylene, 1-octene comonomer (1 ml), cocatalyst 1 or cocatalyst 1/MMAO mixture, shuttling agent, and catalyst or catalyst mixture. When a mixture of cocatalyst 1 and MMAO or a mixture of two catalysts is used, the reagents are premixed in a small vial immediately prior to addition to the reactor. When a reagent is omitted in an experiment, the above order of addition is otherwise maintained. Polymerizations are conducted for approximately 1-2 minutes, until predetermined ethylene consumptions are reached. After quenching with CO, the reactors are cooled and the glass tubes are unloaded. The tubes are transferred to a centrifuge/vacuum drying unit, and dried for 12 hours at 60 °C. The tubes containing dried polymer are weighed and the difference between this weight and the tare weight gives the net yield of polymer. Results are contained in Table 2. In Table 2 and elsewhere in the application, comparative compounds are indicated by an asterisk (*).

Examples 1-4 demonstrate the synthesis of linear block copolymers suitable for use in the present invention as evidenced by the formation of a very narrow MWD, essentially monomodal copolymer when DEZ is present and a bimodal, broad molecular weight distribution product (a mixture of separately produced polymers) in the absence of DEZ. Due to the fact that Catalyst (A1) is known to incorporate more octene than Catalyst (B1), the different blocks or segments of the resulting inventive copolymers are distinguishable based on branching or density.

Table 2

| Ex. | Cat. (A1) (μmol) | Cat (B1) (μmol) | Cocat (μmol) | MMAO (μmol) | shuttling agent (μmol) | Yield (g) | Mn | Mw/Mn | hexyls[1] |
|---|---|---|---|---|---|---|---|---|---|
| A* | 0.06 | - | 0.066 | 0.3 | - | 0.1363 | 300502 | 3.32 | - |
| B* | - | 0.1 | 0.110 | 0.5 | - | 0.1581 | 36957 | 1.22 | 2.5 |
| C* | 0.06 | 0.1 | 0.176 | 0.8 | - | 0.2038 | 45526 | 5.30[2] | 5.5 |
| 1 | 0.06 | 0.1 | 0.192 | - | DEZ (8.0) | 0.1974 | 28715 | 1.19 | 4.8 |
| 2 | 0.06 | 0.1 | 0.192 | - | DEZ (80.0) | 0.1468 | 2161 | 1.12 | 14.4 |
| 3 | 0.06 | 0.1 | 0.192 | - | TEA (8.0) | 0.208 | 22675 | 1.71 | 4.6 |
| 4 | 0.06 | 0.1 | 0.192 | - | TEA (80.0) | 0.1879 | 3338 | 1.54 | 9.4 |

[1] $C_6$ or higher chain content per 1000 carbons
[2] Bimodal molecular weight distribution

It may be seen the polymers produced according to Examples 1-4 have a relatively narrow polydispersity (Mw/Mn) and larger block-copolymer content (trimer, tetramer, or larger) than polymers prepared in the absence of the shuttling agent.

Further characterizing data for the polymers of Table 2 are determined by reference to the figures. More specifically DSC and ATREFF results show the following:

The DSC curve for the polymer of example 1 shows a 115.7°C melting point (Tm) with a heat of fusion of 158.1 J/g. The corresponding CRYSTAF curve shows the tallest peak at 34.5°C with a peak area of 52.9 percent. The difference between the DSC Tm and the Tcrystaf is 81.2°C.

The DSC curve for the polymer of example 2 shows a peak with a 109.7°C. melting point (Tm) with a heat of fusion of 214.0 J/g. The corresponding CRYSTAF curve shows the-tallest peak at 46.2°C with a peak area of 57.0 percent. The difference between the DSC Tm and the Tcrystaf is 63.5°C.

The DSC curve for the polymer of example 3 shows a peak with a 120.7°C. melting point (Tm) with a heat of fusion of 160.1 J/g. The corresponding CRYSTAF curve shows the tallest peak at 66.1°C with a peak area of 71.8 percent. The difference between the DSC Tm and the Tcrystaf is 54.6°C.

The DSC curve for the polymer of example 4 shows a peak with a 104.5°C melting point (Tm) with a heat of fusion of 170.7 J/g. The corresponding CRYSTAF curve shows the tallest peak at 30°C with a peak area of 18.2 percent. The difference between the DSC Tm and the Tcrystaf is 74.5°C.

The DSC curve for comparative A shows a 90.0°C melting point (Tm) with a heat of fusion of 86.7 J/g. The corresponding CRYSTAF curve shows the tallest peak at 48.5°C with a peak area of 29.4 percent. Both of these values are consistent with a resin that is low in density. The difference between the DSC Tm and the Tcrystaf is 41.8°C.

The DSC curve for Comparative B shows a 129.8°C melting point (Tm) with a heat of fusion of 237.0 J/g. The corresponding CRYSTAF curve shows the tallest peak at 82.4°C with a peak area of 83.7 percent. Both of these values are consistent with a resin that is high in density. The difference between the DSC Tm and the Tcrystaf is 47.4°C.

The DSC curve for Comparative C shows a 125.3°C melting point (Tm) with a heat of fusion of 143.0 J/g. The corresponding CRYSTAF curve shows the tallest peak at 81.8 °C with a peak area of 34.7 percent as well as a lower crystalline peak at 52.4 °C. The separation between the two peaks is consistent with the presence of a high crystalline and a low crystalline polymer. The difference between the DSC Tm and the Tcrystaf is 43.5°C.

<u>Examples 5-19, Comparatives D-F, Continuous Solution Polymerization, Catalyst A1/B2 + DEZ</u>

Continuous solution polymerizations are carried out in a computer controlled autoclave reactor equipped with an internal stirrer. Purified mixed alkanes solvent (Isopar™ E available from ExxonMobil Chemical Company), ethylene at 2.70 lbs/hour (1.22 kg/hour), 1-octene, and hydrogen (where used) are supplied to a 3.8 L reactor equipped with a jacket for temperature control and an internal thermocouple. The solvent feed to the reactor is measured by a mass-flow controller. A variable speed diaphragm pump controls the solvent flow rate and pressure to the reactor. At the discharge of the pump, a side stream is taken to provide flush flows for the catalyst and cocatalyst 1 injection lines and the reactor agitator. These flows are measured by Micro-Motion mass flow meters and controlled by control valves or by the manual adjustment of needle valves. The remaining solvent is combined with 1-octene, ethylene, and hydrogen (where used) and fed to the reactor. A mass flow controller is used to deliver hydrogen to the reactor as needed. The temperature of the solvent/monomer solution is controlled by use of a heat exchanger before entering the reactor. This

stream enters the bottom of the reactor. The catalyst component solutions are metered using pumps and mass flow meters and are combined with the catalyst flush solvent and introduced into the bottom of the reactor. The reactor is run liquid-full at 500 psig (3.45 MPa) with vigorous stirring. Product is removed through exit lines at the top of the reactor. All exit lines from the reactor are steam traced and insulated. Polymerization is stopped by the addition of a small amount of water into the exit line along with any stabilizers or other additives and passing the mixture through a static mixer. The product stream is then heated by passing through a heat exchanger before devolatilization. The polymer product is recovered by extrusion using a devolatilizing extruder and water cooled pelletizer. Process details and results are contained in Table 3. Selected polymer properties are provided in Table 4.

Table 3

| Ex. | $C_8H_{16}$ kg/hr | Solv. kg/hr | $H_2$ sccm[1] | T °C | Cat A1[2] ppm | Cat A1 Flow kg/hr | Cat B2[3] ppm | B2 Flow kg/hr | DEZ Conc % | DEZ Flow kg/hr | Cocat Conc. ppm | Cocat Flow kg/hr | $[C_2H_4]/[DEZ]$[4] | Poly Rate[5] kg/hr | Conv %[6] | Solids % | Eff.[7] |
|---|---|---|---|---|---|---|---|---|---|---|---|---|---|---|---|---|---|
| D* | 1.63 | 12.7 | 29.90 | 120 | 142.2 | 0.14 | - | - | 0.19 | 032 | 820 | 0.17 | 536 | 1.81 | 88.8 | 11.2 | 95.2 |
| E* | " | 9.5 | 5.00 | " | - | - | 109 | 0.10 | 0.19 | " | 1743 | 0.40 | 485 | 1.47 | 89.9 | 11.3 | 126.8 |
| F* | " | 113 | 251.6 | " | 71.7 | 0.06 | 30.8 | 0.06 | - | - | " | 0.11 | - | 155 | 88.5 | 103 | 257.7 |
| 5 | " | " | - | " | " | 0.14 | 30.8 | 0.13 | 0.17 | 0.43 | " | 0.26 | 419 | 1.64 | 89.6 | 11.1 | 118.3 |
| 6 | " | " | 4.92 | " | " | 0.10 | 30.4 | 0.08 | 0.17 | 0.32 | " | 0.18 | 570 | 1.65 | 89.3 | 11.1 | 172.7 |
| 7 | " | " | 21.70 | " | " | 0.07 | 30.8 | 0.06 | 0.17 | 0.25 | " | 0.13 | 718 | 1.60 | 89.2 | 10.6 | 244.1 |
| 8 | " | " | 36.90 | " | " | 0.06 | " | " | " | 0.10 | " | 0.12 | 1778 | 1.62 | 90.0 | 10.8 | 261.1 |
| 9 | " | " | 78.43 | " | " | " | " | " | " | 0.04 | " | " | 4596 | 1.63 | 90.2 | 10.8 | 267.9 |
| 10 | " | " | 0.00 | 123 | 71.1 | 0.12 | 303 | 0.14 | 0.34 | 0.19 | 1743 | 0.08 | 415 | 1.67 | 90.31 | 11.1 | 131.1 |
| 11 | " | " | " | 120 | 71.1 | 0.16 | " | 0.17 | 0.80 | 0.15 | 1743 | 0.10 | 249 | 1.68 | 89.56 | 11.1 | 100.6 |
| 12 | " | " | " | 121 | 71.1 | 0.15 | " | 0.07 | " | 0.09 | 1743 | 0.07 | 396 | 1.70 | 90.02 | 11.3 | 137.0 |
| 13 | " | " | " | 122 | 71.1 | 0.12 | " | 0.06 | " | 0.05 | 1743 | 0.05 | 653 | 1.69 | 89.64 | 11.2 | 161.9 |
| 14 | " | " | " | 120 | 71.1 | 0.05 | " | 0.29 | " | 0.10 | 1743 | 0.10 | 395 | 1.41 | 89.42 | 9.3 | 114.1 |
| 15 | 2.45 | " | " | " | 71.1 | 0.14 | " | 0.17 | " | 0.14 | 1743 | 0.09 | 282 | 1.80 | 89.33 | 11.3 | 121.3 |
| 16 | " | " | " | 122 | 71.1 | 0.10 | " | 0.13 | " | 0.07 | 1743 | 0.07 | 485 | 1.78 | 90.11 | 11.2 | 159.7 |
| 17 | " | " | " | 121 | 71.1 | 0.10 | " | 0.14 | " | 0.08 | 1743 | " | 506 | 1.75 | 89.08 | 11.0 | 155.6 |
| 18 | 0.69 | " | " | 121 | 71.1 | " | " | 0.22 | " | 0.11 | 1743 | 0.10 | 331 | 1.25 | 89.93 | 8.8 | 902 |
| 19 | 032 | " | " | 122 | 71.1 | 0.06 | " | " | " | 0.09 | 1743 | 0.08 | 367 | 1.16 | 90.74 | 8.4 | 106.0 |

* Comparative, not an example of the inventive polymer

1 standard $cm^3$/min

2. [N-(2,6-di(1-methylethyl)phenyl)amido)(2-isopropylphenyl)(α-naphthalen-2-diyl(6-pyridin-2diyl)methane)]hafnium dimethyl

3. bis-(1-(2-methylcyclohexyl)ethyl)2-oxoyl-3,5-di(t-butyl)phenyl)immino)zirconium dibenzyl

4. molar ratio in reactor

5. polymer production rate

6. percent ethylene conversion in reactor

7. efficiency, kg polymer/g M where g M = g Hf + g Zr

Table 4

| Ex. | Density ($g/cm^3$) | $I_2$ | $I_{10}$ | $I_{10}/I_2$ | Mw (g/mol) | Mn (g/mol) | Mw/Mn | Heat of Fusion (J/g) | $T_m$ (°C) | $T_c$ (°C) | $T_{CRYSTAF}$ (°C) | Tm-$T_{CRYSTAF}$ (°C) | CRYSTAF peak Area (percent) |
|---|---|---|---|---|---|---|---|---|---|---|---|---|---|
| D* | 0.8627 | 1.5 | 10.0 | 6.5 | 110,000 | 55,800 | 2.0 | 32 | 37 | 45 | 30 | 7 | 99 |
| E* | 0.9378 | 7.0 | 39.0 | 5.6 | 65,000 | 33,300 | 2.0 | 183 | 124 | 113 | 79 | 45 | 95 |
| F* | 0.8895 | 0.9 | 12.5 | 13.4 | 137,300 | 9,980 | 13.8 | 90 | 125 | 111 | 78 | 47 | 20 |
| 5 | 0.8786 | 1.5 | 9.8 | 6.7 | 104,600 | 53,200 | 2.0 | 55 | 120 | 101 | 48 | 72 | 60 |
| 6 | 0.8785 | 1.1 | 7.5 | 6.5 | 109600 | 53300 | 2.1 | 55 | 115 | 94 | 44 | 71 | 63 |
| 7 | 0.8825 | 1.0 | 7.2 | 7.1 | 118,500 | 53,100 | 2.2 | 69 | 121 | 103 | 49 | 72 | 29 |
| 8 | 0.8828 | 0.9 | 6.8 | 7.7 | 129,000 | 40,100 | 3.2 | 68 | 124 | 106 | 80 | 43 | 13 |
| 9 | 0.8836 | 1.1 | 9.7 | 9.1 | 129600 | 28700 | 4.5 | 74 | 125 | 109 | 81 | 44 | 16 |
| 10 | 0.8784 | 1.2 | 7.5 | 6.5 | 113,100 | 58,200 | 1.9 | 54 | 116 | 92 | 41 | 75 | 52 |
| 11 | 0.8818 | 9.1 | 59.2 | 6.5 | 66,200 | 36,500 | 1.8 | 63 | 114 | 93 | 40 | 74 | 25 |
| 12 | 0.8700 | 2.1 | 13.2 | 6.4 | 101,500 | 55,100 | 1.8 | 40 | 113 | 80 | 30 | 83 | 91 |
| 13 | 0.8718 | 0.7 | 4.4 | 6.5 | 132,100 | 63,600 | 2.1 | 42 | 114 | 80 | 30 | 81 | 8 |
| 14 | 0.9116 | 2.6 | 15.6 | 6.0 | 81,900 | 43,600 | 1.9 | 123 | 121 | 106 | 73 | 48 | 92 |
| 15 | 0.8719 | 6.0 | 41.6 | 6.9 | 79,900 | 40,100 | 2.0 | 33 | 114 | 91 | 32 | 82 | 10 |
| 16 | 0.8758 | 0.5 | 3.4 | 7.1 | 148,500 | 74,900 | 2.0 | 43 | 117 | 96 | 48 | 69 | 65 |
| 17 | 0.8757 | 1.7 | 11.3 | 6.8 | 107,500 | 54,000 | 2.0 | 43 | 116 | 96 | 43 | 73 | 57 |
| 18 | 0.9192 | 4.1 | 24.9 | 6.1 | 72,000 | 37,900 | 1.9 | 136 | 120 | 106 | 70 | 50 | 94 |
| 19 | 0.9344 | 3.4 | 20.3 | 6.0 | 76,800 | 39,400 | 1.9 | 169 | 125 | 112 | 80 | 45 | 88 |

* Comparative Example, not an example of the inventive polymer

The resulting polymers are tested by DSC and ATREFF as with previous examples. Results are as follows:

The DSC curve for the polymer of example 5 shows a peak with a 119.6 °C melting point (Tm) with a heat of fusion of 60.0 J/g. The corresponding CRYSTAF curve shows the tallest peak at 47.6°C with a peak area of 59.5 percent. The delta between the DSC Tm and the Tcrystaf is 72.0°C.

The DSC curve for the polymer of example 6 shows a peak with a 115.2 °C melting point (Tm) with a heat of fusion of 60.4 J/g. The corresponding CRYSTAF curve shows the tallest peak at 44.2°C with a peak area of 62.7 percent. The delta between the DSC Tm and the Tcrystaf is 71.0°C.

The DSC curve for the polymer of example 7 shows a peak with a 121.3 °C melting point with a heat of fusion of 69.1 J/g. The corresponding CRYSTAF curve shows the tallest peak at 49.2°C with a peak area of 29.4 percent. The delta between the DSC Tm and the Tcrystaf is 72.1°C.

The DSC curve for the polymer of example 8 shows a peak with a 123.5 °C melting point (Tm) with a heat of fusion of 67.9 J/g. The corresponding CRYSTAF curve shows the tallest peak at 80.1 °C with a peak area of 12.7 percent. The delta between the DSC Tm and the Tcrystaf is 43.4°C.

The DSC curve for the polymer of example 9 shows a peak with a 124.6 °C melting point (Tm) with a heat of fusion of 73.5 J/g. The corresponding CRYSTAF curve shows the tallest peak at 80.8°C with a peak area of 16.0 percent. The delta between the DSC Tm and the Tcrystaf is 43.8°C.

The DSC curve for the polymer of example 10 shows a peak with a 115.6 °C melting point (Tm) with a heat of fusion of 60.7 J/g. The corresponding CRYSTAF curve shows the tallest peak at 40.9°C with a peak area of 52.4 percent. The delta between the DSC Tm and the Tcrystaf is 74.7°C.

The DSC curve for the polymer of example 11 shows a peak with a 113.6 °C melting point (Tm) with a heat of fusion of 70.4 J/g. The corresponding CRYSTAF curve shows the tallest peak at 39.6°C with a peak area of 25.2 percent. The delta between the DSC Tm and the Tcrystaf is 74.1°C.

The DSC curve for the polymer of example 12 shows a peak with a 113.2 °C melting point (Tm) with a heat of fusion of 48.9 J/g. The corresponding CRYSTAF curve shows no peak equal to or above 30°C. (Tcrystaf for purposes of further calculation is therefore set at 30°C). The delta between the DSC Tm and the Tcrystaf is 83.2°C.

The DSC curve for the polymer of example 13 shows a peak with a 114.4 °C melting point (Tm) with a heat of fusion of 49.4 J/g. The corresponding CRYSTAF curve shows the tallest peak at 33.8 °C with a peak area of 7.7 percent. The delta between the DSC Tm and the Tcrystaf is 84.4°C.

The DSC for the polymer of example 14 shows a peak with a 120.8 °C melting point (Tm) with a heat of fusion of 127.9 J/g. The corresponding CRYSTAF curve shows the tallest peak at 72.9 °C with a peak area of 92.2 percent. The delta between the DSC Tm and the Tcrystaf is 47.9°C.

The DSC curve for the polymer of example 15 shows a peak with a 114.3 °C melting point (Tm) with a heat of fusion of 36.2 J/g. The corresponding CRYSTAF curve shows the tallest peak at 32.3 °C with a peak area of 9.8 percent. The delta between the DSC Tm and the Tcrystaf is 82.0°C.

The DSC curve for the polymer of example 16 shows a peak with a 116.6 °C melting point (Tm) with a heat of fusion of 44.9 J/g. The corresponding CRYSTAF curve shows the tallest peak at 48.0 °C with a peak area of 65.0 percent. The delta between the DSC Tm and the Tcrystaf is 68.6°C.

The DSC curve for the polymer of example 17 shows a peak with a 116.0 °C melting point (Tm) with a heat of fusion of 47.0 J/g. The corresponding CRYSTAF curve shows the tallest peak at 43.1 °C with a peak area of 56.8 percent. The delta between the DSC Tm and the Tcrystaf is 72.9°C.

The DSC curve for the polymer of example 18 shows a peak with a 120.5 °C melting point (Tm) with a heat of fusion of 141.8 J/g. The corresponding CRYSTAF curve shows the tallest peak at 70.0 °C with a peak area of 94.0 percent. The delta between the DSC Tm and the Tcrystaf is 50.5 °C.

The DSC curve for the polymer of example 19 shows a peak with a 124.8 °C melting point (Tm) with a heat of fusion of 174.8 J/g. The corresponding CRYSTAF curve shows the tallest peak at 79.9 °C with a peak area of 87.9 percent. The delta between the DSC Tm and the Tcrystaf is 45.0 °C.

The DSC curve for the polymer of comparative D shows a peak with a 37.3°C melting point (Tm) with a heat of fusion of 31.6 J/g. The corresponding CRYSTAF curve shows no peak equal to and above 30°C. Both of these values are consistent with a resin that is low in density. The delta between the DSC Tm and the Tcrystaf is 7.3°C.

The DSC curve for the polymer of comparative E shows a peak with a 124.0 °C melting point (Tm) with a heat of fusion of 179.3 J/g. The corresponding CRYSTAF curve shows the tallest peak at 79.3°C with a peak area of 94.6 percent. Both of these values are consistent with a resin that is high in density. The delta between the DSC Tm and the Tcrystaf is 44.6°C.

The DSC curve for the polymer of comparative F shows a peak with a 124.8 °C melting point (Tm) with a heat of fusion of 90.4 J/g. The corresponding CRYSTAF curve shows the tallest peak at 77.6°C with a peak area of 19.5 percent. The separation between the two peaks is consistent with the presence of both a high crystalline and a low crystalline polymer. The delta between the DSC Tm and the Tcrystaf is 47.2°C.

**Physical Property Testing**

Polymer samples are evaluated for physical properties such as high temperature resistance properties, as evidenced by TMA temperature testing, pellet blocking strength, high temperature recovery, high temperature compression set and storage modulus ratio, G'(25°C)/G'(100°C). Several commercially available polymers are included in the tests: Comparative Example G* is a substantially linear ethylene/1-octene copolymer (AFFINITY™ KC88520, available from The Dow Chemical Company), Comparative Example H* is an elastomeric, substantially linear ethylene/ 1-octene copolymer (AFFINITY™ EG8100, available from The Dow Chemical Company), Comparative Example I* is a substantially linear ethylene/1-octene copolymer (AFFINITY™ PL1840, available from The Dow Chemical Company), Comparative Example J* is a hydrogenated styrene/butadiene/styrene triblock copolymer (KRATON™ G1652, available from KRATON™ Polymers), Comparative Example K* is a thermoplastic vulcanizate (TPV, a polyolefin blend containing dispersed therein a crosslinked elastomer). Results are presented in Table 5.

Table 5 High Temperature Mechanical Properties

| Ex. | TMA-1mm penetration (°C) | Pellet Blocking Strength lb/$ft^2$ (kPa) | G'(25°C)/ G' (100°C) | 300 % Strain Recovery (80°C) (percent) | Compression Set (70°C) (percent) |
|---|---|---|---|---|---|
| D* | 51 | - | 9 | Failed | - |
| B* | 130 | - | 18 | - | - |
| F* | 70 | 141 (6.8) | 9 | Failed | 100 |
| 5 | 104 | 0(0) | 6 | 81 | 49 |
| 6 | 110 | - | 5 | - | 52 |
| 7 | 113 | - | 4 | 84 | 43 |
| 8 | 111 | - | 4 | Failed | 41 |
| 9 | 97 | - | 4 | - | 66 |
| 10 | 108 | - | 5 | 81 | 55 |
| 11 | 100 | - | 8 | - | 68 |
| 12 | 88 | - | 8 | - | 79 |
| 13 | 95 | - | 6 | 84 | 71 |
| 14 | 125 | - | 7 | - | - |
| 15 | 96 | - | 5 | - | 58 |
| 16 | 113 | - | 4 | - | 42 |
| 17 | 108 | 0(0) | 4 | 82 | 47 |
| 18 | 125 | - | 10 | - | - |
| 19 | 133 | - | 9 | - | - |
| G* | 75 | 463 (22.2) | 89 | Failed | 100 |
| H* | 70 | 213 (102) | 29 | Failed | 100 |
| I* | 111 | - | 11 | - | - |
| J* | 107 | - | 5 | Failed | 100 |
| 152 | 152 | - | 3 | - | 40 |

In Table 5, Comparative Example F* (which is a physical blend of the two polymers resulting from simultaneous polymerizations using catalyst A1 and B1) has a 1 mm penetration temperature of about 70°C, while Examples 5-9 have a 1 mm penetration temperature of 100°C or greater. Further, examples 10-19 all have a 1 mm penetration temperature of greater than 85°C, with most having 1 mm TMA temperature of greater than 90°C or even greater than 100°C. This shows that the inventive polymers have better dimensional stability at higher temperatures compared to a physical blend. Comparative Example J* (a commercial SEBS) has a good 1 mm TMA temperature of about 107°C, but it has very poor

(high temperature 70°C) compression set of about 100 percent and it also failed to recover (sample broke) during a high temperature (80°C) 300 percent strain recovery. Thus the exemplified polymers have a unique combination of properties unavailable even in some commercially available, high performance thermoplastic elastomers.

Similarly, Table 5 shows a low (good) storage modulus ratio, G'(25°C)/G'(100°C), for the inventive polymers of 6 or less, whereas a physical blend (Comparative Example F*) has a storage modulus ratio of 9 and a random ethylene/octene copolymer (Comparative Example G*) of similar density has a storage modulus ratio an order of magnitude greater (89). It is desirable that the storage modulus ratio of a polymer be as close to 1 as possible. Such polymers will be relatively unaffected by temperature, and fabricated articles made from such polymers can be usefully employed over a broad temperature range. This feature of low storage modulus ratio and temperature independence is particularly useful in elastomer applications such as in pressure sensitive adhesive formulations.

The data in Table 5 also demonstrate that the inventive polymers possess improved pellet blocking strength. In particular, Example 5 has a pellet blocking strength of 0 MPa, meaning it is free flowing under the conditions tested, compared to Comparatives F* and G* which show considerable blocking. Blocking strength is important since bulk shipment of polymers having large blocking strengths can result in product clumping or sticking together upon storage or shipping, resulting in poor handling properties.

High temperature (70°C) compression set for the inventive polymers is generally good, meaning generally less than 80 percent, preferably less than 70 percent and especially less than 60 percent. In contrast, Comparatives F*, G*, H* and J* all have a 70°C compression set of 100 percent (the maximum possible value, indicating no recovery). Good high temperature compression set (low numerical values) is especially needed for applications such as gaskets, window profiles, o-rings, and the like.

Table 6 Ambient Temperature Mechanical Properties

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (percent) | Stress Relaxation at 50 % Strain[2] |
|---|---|---|---|---|---|---|---|---|---|---|---|---|---|
| D* | 12 | 5 | - | - | 10 | 1074 | - | - | 91 | 83 | 760 | - | - |
| E* | 895 | 589 | | - | 31 | 1029 | - | - | - | - | - | - | - |
| F* | 57 | 46 | - | - | 12 | 824 | 93 | 339 | 78 | 65 | 400 | 42 | - |
| 5 | 30 | 24 | 14 | 951 | 16 | 1116 | 48 | - | 87 | 74 | 790 | 14 | 33 |
| 6 | 33 | 29 | - | - | 14 | 938 | - | - | - | 75 | 861 | 13 | - |
| 7 | 44 | 37 | 15 | 846 | 14 | 854 | 39 | - | 82 | 73 | 810 | 20 | - |
| 8 | 41 | 35 | 13 | 785 | 14 | 810 | 45 | 461 | 82 | 74 | 760 | 22 | - |
| 9 | 43 | 38 | - | - | 12 | 823 | - | - | - | - | - | 25 | - |
| 10 | 23 | 23 | - | - | 14 | 902 | - | - | 86 | 75 | 860 | 12 | - |
| 11 | 30 | 26 | - | - | 16 | 1090 | - | 976 | 89 | 66 | 510 | 14 | 30 |
| 12 | 20 | 17 | 12 | 961 | 13 | 931 | - | 1274 | 91 | 75 | 700 | 17 | - |
| 13 | 16 | 14 | - | - | 13 | 814 | - | 691 | 91 | - | - | 21 | - |
| 14 | 212 | 160 | - | - | 29 | 857 | - | - | - | - | - | - | - |
| 15 | 18 | 14 | 12 | 1127 | 10 | 1573 | - | 2074 | 89 | 83 | 770 | 14 | - |
| 16 | 23 | 20 | - | - | 12 | 968 | - | - | 88 | 83 | 1040 | 13 | - |

(continued)

| Ex. | Flex Modulus (MPa) | Tensile Modulus (MPa) | Tensile Strength (MPa)[1] | Elongation at Break[1] (%) | Tensile Strength (MPa) | Elongation at Break (%) | Abrasion: Volume Loss ($mm^3$) | Tensile Notched Tear Strength (mJ) | 100 % Strain Recovery 21°C (percent) | 300 % Strain Recovery 21°C (percent) | Retractive Stress at 150 % Strain (kPa) | Compression Set 21°C (percent) | Stress Relaxation at 50 % Strain[2] |
|---|---|---|---|---|---|---|---|---|---|---|---|---|---|
| 17 | 20 | 18 | - | - | 13 | 1252 | - | 1274 | 13 | 83 | 920 | 4 | - |
| 18 | 323 | 239 | - | - | 30 | 808 | - | - | - | - | - | - | - |
| 19 | 706 | 483 | - | - | 36 | 871 | - | - | - | - | - | - | - |
| G* | 15 | 15 | - | - | 17 | 1000 | - | 746 | 86 | 53 | 110 | 27 | 50 |
| H* | 16 | 15 | - | - | 15 | 829 | - | 569 | 87 | 60 | 380 | 23 | - |
| I* | 210 | 147 | - | - | 29 | 697 | - | - | - | - | - | - | - |
| J* | - | - | - | - | 32 | 609 | - | - | 93 | 96 | 1900 | 25 | - |
| K* | - | - | - | - | - | - | - | - | - | - | - | 30 | - |

1. Tested at 51 cm/minute
2. measured at 38°C for 12 hours

Table 6 shows results for mechanical properties for the new polymers as well as for various comparison polymers at ambient temperatures. It may be seen that the inventive polymers have very good abrasion resistance when tested according to ISO 4649, generally showing a volume loss of less than about 90 $mm^3$, preferably less than about 80 $mm^3$, and especially less than about 50 $mm^3$. In this test, higher numbers indicate higher volume loss and consequently lower abrasion resistance.

Tear strength as measured by tensile notched tear strength of the inventive polymers is generally 1000 mJ or higher, as shown in Table 6. Tear strength for the inventive polymers can be as high as 3000 mJ, or even as high as 5000 mJ. Comparative polymers generally have tear strengths no higher than 750 mJ.

Table 6 also shows that the inventive polymers have better retractive stress at 150 percent strain (demonstrated by higher retractive stress values) than some of the comparative samples. Comparative Examples F*, G* and H* have retractive stress value at 150 percent strain of 400 kPa or less, while the inventive polymers have retractive stress values at 150 percent strain of 500 kPa (Ex. 11) to as high as about 1100 kPa (Ex. 17). Polymers having higher than 150 percent retractive stress values would be quite useful for elastic applications, such as elastic fibers and fabrics, especially nonwoven fabrics. Other applications include diaper, hygiene, and medical garment waistband applications, such as tabs and elastic bands.

Table 6 also shows that stress relaxation (at 50 percent strain) is also improved (less) for the inventive polymers as compared to, for example, Comparative Example G*. Lower stress relaxation means that the polymer retains its force better in applications such as diapers and other garments where retention of elastic properties over long time periods at body temperatures is desired.

Optical Testing

Table 7 Polymer Optical Properties

| Ex. | Internal Haze (percent) | Clarity (percent) | 45° Gloss (percent) |
|---|---|---|---|
| F* | 84 | 22 | 49 |
| G* | 5 | 73 | 56 |
| 5 | 13 | 72 | 60 |
| 6 | 33 | 69 | 53 |
| 7 | 28 | 57 | 59 |
| 8 | 20 | 65 | 62 |
| 9 | 61 | 38 | 49 |
| 10 | 15 | 73 | 67 |
| 11 | 13 | 69 | 67 |
| 12 | 8 | 75 | 72 |
| 13 | 7 | 74 | 69 |
| 14 | 59 | 15 | 62 |
| 15 | 11 | 74 | 66 |
| 16 | 39 | 70 | 65 |
| 17 | 29 | 73 | 66 |
| 18 | 61 | 22 | 60 |
| 19 | 74 | 11 | 52 |
| G* | 5 | 73 | 56 |
| H* | 12 | 76 | 59 |
| I* | 20 | 75 | 59 |

The optical properties reported in Table 7 are based on compression molded films substantially lacking in

orientation. Optical properties of the polymers may be varied over wide ranges, due to variation in crystallite size, resulting from variation in the quantity of chain shuttling agent employed in the polymerization.

Extractions of Multi-Block Copolymers

Extraction studies of the polymers of examples 5, 7 and Comparative Example E* are conducted. In the experiments, the polymer sample is weighed into a glass fritted extraction thimble and fitted into a Kumagawa type extractor. The extractor with sample is purged with nitrogen, and a 500mL round bottom flask is charged with 350 mL of diethyl ether. The flask is then fitted to the extractor. The ether is heated while being stirred. Time is noted when the ether begins to condense into the thimble, and the extraction is allowed to proceed under nitrogen for 24 hours. At this time, heating is stopped and the solution is allowed to cool. Any ether remaining in the extractor is returned to the flask. The ether in the flask is evaporated under vacuum at ambient temperature, and the resulting solids are purged dry with nitrogen. Any residue is transferred to a weighed bottle using successive washes of hexane. The combined hexane washes are then evaporated with another nitrogen purge, and the residue dried under vacuum overnight at 40°C. Any remaining ether in the extractor is purged dry with nitrogen.

A second clean round bottom flask charged with 350 mL of hexane is then connected to the extractor. The hexane is heated to reflux with stirring and maintained at reflux for 24 hours after hexane is first noticed condensing into the thimble. Heating is then stopped and the flask is allowed to cool. Any hexane remaining in the extractor is transferred back to the flask. The hexane is removed by evaporation under vacuum at ambient temperature, and any residue remaining in the flask is transferred to a weighed bottle using successive hexane washes. The hexane in the flask is evaporated by a nitrogen purge, and the residue is vacuum dried overnight at 40°C.

The polymer sample remaining in the thimble after the extractions is transferred from the thimble to a weighed bottle and vacuum dried overnight at 40°C. Results are contained in Table 8.

Table 8

| Sample | wt. (g) | ether soluble (g) | ether soluble (percent) | $C_8$ mole percent[1] | hexane soluble (g) | hexane soluble (percent) | $C_8$ mole percent[1] | residue $C_8$ mole percent[1] |
|---|---|---|---|---|---|---|---|---|
| Comp. F* | 1.097 | 0.063 | 5.69 | 12.2 | 0.245 | 22.35 | 13.6 | 6.5 |
| Ex. 5 | 1.006 | 0.041 | 4.08 | - | 0.040 | 3.98 | 14.2 | 11.6 |
| Ex.7 | 1.092 | 0.017 | 1.59 | 13.3 | 0.012 | 1.10 | 11.7 | 9.9 |

1. Determined by $^{13}$CNMR

**Additional Polymer Examples 19 A-F, Continuous Solution Polymerization, Catalyst A1/B2 + DEZ**

Continuous solution polymerizations are carried out in a computer controlled well-mixed reactor. Purified mixed alkanes solvent (Isopar™ E available from ExxonMobil Chemical Company), ethylene, 1-octene, and hydrogen (where used) are combined and fed to a 102 l (27 gallon) reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 3.8 MPa (550 psig) pressure. Upon exiting the reactor, water and additive are injected in the polymer solution. The water hydrolyzes the catalysts, and terminates the polymerization reactions. The post reactor solution is then heated in preparation for a two-stage devolatization. The solvent and unreacted monomers are removed during the devolatization process. The polymer melt is pumped to a die for underwater pellet cutting.

Process details and results are contained in Table 8a. Selected polymer properties are provided in Table 9a.

**Table 8a Polymerization Conditions for Polymers 19A-J**

| Ex. | $C_2H_4$ lb/hr[8] | $C_6H_{16}$ lb/hr[8] | Solv. lb/hr[8] | $H_2$ sccm[1] | T °C | Cat Al[2] Conc. ppm | Cat Al Flow lb/hr[8] | Cat B2[3] Conc . ppm | Cat82 Flow lb/hr[8] | DEZ Conc wt% | DEZ Flow lb/hr[8] | Coca t1 Conc . ppm | Cocnt 1 Flow lb/hr[8] | Cocnt 2 Conc ppm | Coca t2 flow lb/hr[8] | [Zn][4] in polyme r ppm | Poly Rate[5] lb/hr[8] | Conv [6] wt% | Poly mer wt% | Eff.[7] |
|---|---|---|---|---|---|---|---|---|---|---|---|---|---|---|---|---|---|---|---|---|
| 19A | 55.29 | 32.03 | 323.03 | 101 | 120 | 600 | 0.25 | 200 | 0.42 | 3.0 | 0.70 | 4500 | 0.65 | 525 | 0.33 | 248 | 83.94 | 88.0 | 17.28 | 297 |
| 19B | 53.95 | 28.96 | 325.3 | 577 | 120 | 600 | 0.25 | 200 | 0.55 | 3.0 | 0.24 | 4500 | 0.63 | 515 | 0.11 | 90 | 80.72 | 88.1 | 17.2 | 295 |
| 19C | 55.53 | 30.97 | -34.37 | 550 | 120 | 600 | 0.216 | 200 | 0.609 | 3.0 | 0.69 | 4500 | 0.61 | 525 | 0.33 | 246 | 84.13 | 88.9 | 17.16 | 293 |
| 19D | 54.83 | 30.58 | 326.33 | 60 | 120 | 600 | 0.22 | 200 | 0.63 | 3.0 | 1.39 | 4500 | 0.66 | 525 | 0.66 | 491 | 82.56 | 88.1 | 17.07 | 280 |
| 19E | 54.95 | 31.73 | 326.75 | 251 | 120 | 600 | 0.21 | 200 | 0.61 | 3.0 | 1.04 | 4500 | 0.64 | 525 | 0.49 | 368 | 84.11 | 88.4 | 17.43 | 288 |
| 19F | 50.43 | 34.80 | 330.33 | 124 | 120 | 600 | 0.20 | 200 | 0.60 | 3.0 | 0.74 | 4500 | 0.52 | 525 | 0.35 | 257 | 85.31 | 87.5 | 17.09 | 319 |
| 19G | 50.25 | 33.08 | 325.61 | 188 | 120 | 600 | 0.19 | 200 | 0.59 | 3.0 | 0.54 | 4500 | 0.51 | 525 | 0.16 | 194 | 83.72 | 87.5 | 17.34 | 333 |
| 19H | 50.15 | 34.87 | 318.17 | 58 | 120 | 600 | 0.21 | 200 | 0.66 | 3.0 | 0.70 | 4500 | 0.52 | 525 | 0.70 | 259 | 83.21 | 88.0 | 17.46 | 312 |
| 19I | 55.02 | 34.02 | 323.59 | 53 | 120 | 600 | 0.44 | 200 | 0.74 | 3.0 | 1.72 | 4500 | 0.70 | 525 | 1.65 | 600 | 86.63 | 88.0 | 17.6 | 275 |
| 19J | 7.46 | 9.04 | 50.6 | 47 | 120 | 150 | 0.22 | 76.7 | 0.36 | 0.5 | 0.19 | - | - | - | - | - | - | - | - | - |

[1] standard $cm^3$/min
[2] [N-(2,6-di(1-methylethyl)phenyl)amido)(2-isopropylphenyl)(α-naphthalen-2-diyl(6-pyridin-2-diyl)methane)]hafnium dimethyl
[3] bis-(1-(2-methylcyclohexyl)ethyl)(2-oxoyl-3,5-di(t-butyl)phenyl)amino)zirconium dimethyl
[4] ppm in final product calculated by mass balance
[5] polymer production rate
[6] weight percent ethylene conversion in reactor
[7] efficiency, kg polymer/g M where g M=g Hf + g Z
[8] 1 lb/hr. =0,45 kg/hr.

**Table 9a Polymer Physical Properties**

| Polymer Ex. No. | Density (g/cc) | I2 | I10 | I10/I2 | Mw (g/mol) | Mn (g/mol) | Mw/Mn | Heat of Fusion (J/g) | Tm (°C) | Tc (°C) | TCRYSTAF (°C) | Tm-TCRYSTAF (°C) | CRYSTAF Peak Area (wt%) |
|---|---|---|---|---|---|---|---|---|---|---|---|---|---|
| 19G | 0.8649 | 0.9 | 6.4 | 7.1 | 135000 | 64800 | 2.1 | 26 | 120 | 92 | 30 | 90 | 90 |
| 19H | 0.8654 | 1.0 | 7.0 | 7.1 | 131600 | 66900 | 2.0 | 26 | 118 | 88 | - | - | - |

**Table 9b Average Block Index for Exemplary Polymers[1]**

| Example | $Zn/C_2$[2] | Average BI |
|---|---|---|
| Polymer F | 0 | 0 |
| Polymer 8 | 0.56 | 0.59 |
| Polymer 19a | 1.3 | 0.62 |
| Polymer 5 | 2.4 | 0.52 |
| Polymer 19b | 0.56 | 0.54 |
| Polymer 19h | 3.15 | 0.59 |

1. Additional information regarding the calculation of the block indices for various polymers is disclosed in U.S. Patent Application Serial No. 60/199,930, entitled "Ethylene/α-Olefin Block Interpolymers", filed on March 15,2006, in the name of Collin L.P. Shan, Lonnie Hazlitt, et al. and assigned to Dow Global Technologies Inc.
2. $Zn/C_2$ *1000 = (Zn feed flow*Zn concentration/ 1000000/Mw of Zn)/(Total Ethylene feed flow* (1-fractional ethylene conversion rate)/Mw of Ethylene)*1000. Please note that "Zn" in "$Zn/C_2$*1000" refers to the amount of zinc in diethyl zinc ("DEZ") used in the polymerization process. and "C2" refers to the amount of ethylene used in the polymerization process.

Inventive Example 1 is a thermoplastic vulcanizate (TPV) compound which contains inventive ethylene/α-olefin block interpolymer (EAO1). The ingredients and amounts are listed in Table 10. Comparative Example A is a TPV compound which does not contain inventive ethylene/α-olefin block interpolymer. Its ingredients and amounts are also listed in Table 10.

Table 10 TPV Formulation

| Ingredient | Inventive Example 1 | Comparative Example A |
|---|---|---|
| | Parts | Parts |
| EPDM | 95 | 100 |
| Inventive EAO1 | 5 | 0 |
| Polypropylene | 50 | 50 |
| Extender Oil | 130 | 130 |
| Mercaptosilane coupled clay | 37 | 37 |
| Titantium dioxide | 5 | 5 |
| Oxidized polyethylene wax | 5 | 5 |
| Antioxidant | 1 | 1 |
| Methylol phenolic curing resin | 10 | 10 |
| Stannous Chloride | 1.5 | 1.5 |

The inventive EAO is an ethylene/1-octene olefin block copolymer having a composite 1-octene content of 77 wt. %, a density of 0.854 g/cc, a DSC peak melting point of 105°C, a heat of fusion of 10.6 J/g, an ATREF crystallization temperature of 73°C, a number average molecular weight of 188,254 g/mole, a weight average molecular weight of 329,600 g/mole a melt index at 190°C, 2.16 Kg of 1.0 dg/min and a melt index at 190°C, 10 Kg of 37.0 dg/min.

The EPDM is an ethylene/propylene/ethylidene norbornene terpolymer having a Mooney viscosity (ML 1+4) at 125°C of 70, an ethylene content of 70 wt.% and an ethylidene norbornene content of 5 wt%. The polypropylene is a general purpose homopolymer having a melt flow index at 230°C, 2.16 Kg, of 1.0 dg/min. The extender oil is a paraffinic refined petroleum based process oil. The antioxidant is a 1:1 blend of a high molecular weight phenolic primary antioxidant

and a phosphite secondary antioxidant.

The thermoplastic vulcanizates are produced by charging a 310 cc capacity batch mixer heated to 190°C with the EPDM, EAO1, and polypropylene. The rotor speed is set to 30 rpm. After two minutes, the antioxidant and oxidized polyethylene wax are added. The oil is then slowly added to the mixture. The methylol phenolic curing resin is then added to the mixture and allowed to mix into the batch. The rotor speed is then increased to 75 rpm and the stannous chloride is then added. The rubber portion now undergoes crosslinking. The mixture is then allowed to mix for another five months. The rotors are then stopped; the mixture is removed from the mixer and cooled via compression molding into a crude plaque. A finished plaque is produced by compression molding into a 15 cm X 25 cm x 1.5mm at 190°C, then cooling under compression.

The TPV's are tested for tensile properties according to ASTM D412. The tensile properties of the Inventive Example 1 are significantly higher than the Comparative Example A.

As described above, embodiments of the invention provide various TPV composition suitable for extrusion and molding to make useful articles. The manufactured articles have good compression set, tensile set, increased service temperatures, increased tensile strength, elongation, tear resistance, scratch/mar, abrasion, better dynamic loading properties, and/or oil resistance. Additional advantages and characteristics are apparent to those skilled in the art.

While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein. Variations and modifications from the described embodiments exist. Finally, any number disclosed herein should be construed to mean approximate, regardless of whether the word "about" or "approximately" is used in describing the number. The appended claims intend to cover all those modifications and variations as falling within the scope of the invention.

## Claims

**1.** A thermoplastic vulcanizate comprising or obtainable from a reaction mixture comprising:

(i) a vulcanizable elastomer
(ii) a thermoplastic polyolefin;
(iii) a crosslinking agent; and
(iv) an ethylene/α-olefin block interpolymer, wherein the ethylene/α-olefin interpolymer has an ethylene content of at least 60 weight percent based on the total weight of the interpolymer and :

(a) has a Mw/Mn from 1.7 to 3.5, at least one melting point, $T_m$ in degrees Celsius, and a density, d, in grams/cubinc centimeter, wherein the numerical values of Tm and d correspond to the relationship:

$$T_m > -2002.9 + 4538.5(d) - 2422.2(d)^2;$$

or

(b) has a $M_w/M_n$ from 1.7 to 3.8, and is **characterized by** a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > 0.1299(\Delta H) + 62.81 \text{ for } \Delta H \text{ greater than zero and up to } 130 \text{ J/g},$$

$$\Delta T \geq 48\ ^\circ C \text{ for } \Delta H \text{ greater than } 130 \text{ J/g},$$

wherein the CRYSTAF peak is determined using at least 6 percent of the cumulative polymer, and if less than 5 percent of the polymer has an identifiable CRYSTAF peak, then the CRYSTAF temperature is 30 °C; or

(c) is **characterized by** an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when the ethylene/α-olefin interpolymer is substantially free of a cross-linked phase:

$$Re > 1481-1629(d);$$

or
(d) has a comonomer content of a TREF fraction which elutes between 40 °C and 130 °C greater than or equal to the quantity (-0.2013) T+21.07, wherein T is the numerical value of the peak elution temperature measured in °C; or
(e) is **characterized by** a storage modulus at 26 °C, G' (25 °C), and a storage modulus at 100 °C, G' (100 °C), wherein the ratio of G'(25 °C) to G'(100°C) is from 1:1 to 10:1.

**2.** A thermoplastic vulcanizate comprising or obtainable from a reaction mixture comprising:

(i) a vulcanizable elastomer;
(ii) a thermoplastic Polyolefin;
(iii) a crosslinking agent; and
(iv) an ethylene/α-olefin block interpolymer, wherein the ethylene/α-olefin block interpolymer has an ethylene content of at least 50 weight percent based on the total weight of the interpolymer and is **characterized by** an average block index from 0.1-0.3 and a molecular weight distribution, $M_w/M_n$, greater than 1.3.

**3.** A thermoplastic vulcanizate comprising obtainable from a reaction mixture comprising:

(i) a thermoplastic polyolefin;
(ii) a crosslinking agent; and
(iii) a vulcanizable elastomer which is an ethylene/α-olefin/diene block interpolymer, wherein the ethylene/α-olefin/diene block interpolymer is **characterized by** (b) an average block index from 0.1-0.2 and a a molecular weight distribution $M_w/M_n$ greater than 1.3.

**4.** A thermoplastic vulcanizate comprising or obtainable from a reaction mixture comprising:

(i) a thermoplastic polyolefin;
(ii) a crosslinking agent; and
(iii) a vulcanizable elastomer whch is an ethylene/α-olefindiene block interpolymer, wherein the ethylene/α-olefin/diene block interpolymer:

(a) has a $M_w/M_n$ from 1.7 to 3.5, at at least one melting point, $T_m$ in degrees Celsius, and a density, d, in grama/cubinc centimeter, wherein the numerical values of $T_m$ and d correspond to the relationship:

$$T_m > -2002.9 + 4538.5(d)-2422.2(d)^2;$$

or
(b) has a $M_w/M_n$ from 1.7 to 3.5, and is **characterized by** a beat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$$\Delta T > 0.1299(\Delta H) + 62.81 \text{ for } \Delta H \text{ greater than zero and up to } 130 \text{ J/g,}$$

$$\Delta T \geq 48 \text{ °C for } \Delta H \text{ greater than } 130 \text{ J/g,}$$

wherein the CRYSTAF peak is determined using at least 5 percent of the cumulative polymers, and if less than 5 percent of the polymer has an identifiable CRYSTAF peak, then the CRYSTAF temperature is 30°C; or
(c) is **characterized by** an elastic recovery, Re, in percent at 300 percent strain and 1 cycle measured with a compression-molded film of the ethylene/α-olefin interpolymer, and has a density, d, in grams/cubic

centimeter, wherein the numerical values of Re and d satisfy the following relationship when the ethylene/α-olefin interpolymer is substantially free of a cross-linked phase:

$$Re > 1481-1629(d);$$

or

(d) has a comonomer content of a TREF fraction which elutes between 40 °C and 130 °C greater than or equal to the quantity (-0.2013) T+21.07, wherein T is the numerical value of the peak elution temperature measured in °C; or

(e) is **characterized by** a storage modulus at 26 °C, G' (25 °C), and a storage modulus at 100 °C, G' (100 °C), wherein the ratio of G' (25 °C) to G'(100°C) is from 1:1 to 10:1.

**5.** The thermoplastic vulcanizate of claim 1, 2, 3, or 4, wherein the block interpolymer has a $M_w/M_n$ from 1.7 to 3.5, at least one melting point, $T_m$, in degrees Celsius, and a density, d, in grams/cubic centimeter, wherein the numerical values of Tm and d correspond to the relationship:

$$T_m > -2002.9 + 4538.5(d) - 2422.2(d)^2.$$

**6.** The thermoplastic vulcanizate of claim 1, 2, 3, or 4, wherein the block interpolymer has a $M_wIM_n$ from 1.7 to 3.5 and is **characterized by** a heat of fusion, ΔH in J/g, and a delta quantity, ΔT in degrees Celsius defined as the temperature difference between the tallest DSC peak and the tallest CRYSTAF peak, wherein the numerical values of ΔT and ΔH have the following relationships:

$$\Delta T > -0.1299(\Delta H) + 62.81 \text{ for } \Delta H \text{ greater than zero and up to } 130 \text{ J/g},$$

$$\Delta T \geq 48\ ^\circ C \text{ for } \Delta H \text{ greater than } 130 \text{ J/g},$$

wherein the CRYSTAF peak is determined using at least 5 percent of the cumulative polymer, and if less than 5 percent of the polymer has an identifiable CRYSTAF peak, then the CRYSTAF temperature is 30 °C.

**7.** The thermoplastic vulcanizate of claim 1, 2, 3, or 4, wherein the block interpolymer is **characterized by** an elastic recovery, Re, in percent at 300 percent strain and 1 cycle measured with a compression-molded film of the interpolymer, and has a density, d, in grams/cubic centimetre, wherein the numerical values of Re and d satisfy the following relationship when the interpolymer is substantially free of a cross-linked phase:

$$Re > 1481 - 1629(d).$$

**8.** The thermoplastic vulcanizate of claim 7, wherein the numerical values of Re and d satisfy the following relationship:

$$Re > 1491 - 1629(d).$$

**9.** The thermoplastic vulcanizate of claim 7, wherein the numerical values of Re and d satisfy the following relationship;

$$Re > 1501 - 1629(d).$$

**10.** The thermoplastic vulcanizate of claim 7, wherein the numerical values of Re and d satisfy the following relationship:

$$Re > 1511 - 1629(d).$$

11. The thermoplastic vulcanizate of claim 1, 2, 3 or 4, wherein the block interpolymer is **characterized by** a storage modulus at 25 °C, G'(25 °C), and a storage modulus at 100 °C, G' (100 °C), wherein the ratio of G'(25 °C) to G' (100°C) is from 1:1 to 10:1.

12. The thermoplastic vulcanizate of claim 1 or 2, wherein the α-olefin is styrene, propylene, 1-butene, 1-hexene, 1-octene, 4-methyl-1-pentene, 1-decene, or a combination thereof.

13. The thermoplastic vulcanizate of claim 3 or 4, wherein the ethylene/α-olefin/diene interpolymer is an ethylene/propylene/diene (EPDM) copolymer.

14. The thermoplastic vulcanizate of claim 13, wherein the diene is 5-ethylidene-2-norbornene, 1,4-hexadiene, or a combincation thereof.

15. The thermoplastic vulcanizate of claim 1, 2, 3 or 4, wherein the interpolymer has a melt index in the range of 6 to 500 g/10 minutes measured according to ASTM D-1238, Condition 190 °C/2.16 kg.

16. The thermoplastic vulcanizate of claim 1, 2, 3 or 4, wherein the interpolymers is present in the range from 5% to 95% by weight of the total composition.

17. The thermoplastic vulcanizate of claim 1, 2, 3 or 4, wherein the interpolymer is present in the range from 5% to 45% by weight of the total composition.

18. The thermoplastic vulcanizate of claim 1, 2, 3 or 4, wherein the polyolefin is a homopolymer.

19. The thermoplastic vulcanizate of claim 1, 2, 3 or 4, wherein the polyolefin is a polypropylene.

20. The thermoplastic vulcanizate of claim 1, 2, 3 or 4, wherein the polyolefin is a polyethylene.

21. The thermoplastic vulcanizate of claim 1, 2, 3 or 4, wherein the vulcanizable elastomer is an ethylene-higher-alpha-olefin copolymers or a terpolymer.

22. A manufactured article made from the thermoplastic vulcanizate of any of claims 1-21.

## Patentansprüche

1. Thermoplastisches Vulkanisat mit oder aus einem Reaktionsgemisch, das Folgendes umfasst:

(i) ein vulkanisierbares Elastomer;
(ii) ein thermoplastisches Polyolefin;
(iii) ein Vernetzungsmittel; und
(iv) ein Ethylen/α-Olefin-Blockinterpolymer, wobei das Ethylen/α-Olefin-Blockinterpolymer einen Ethylengehalt von mindestens 50 Gew.-% bezogen auf das Gesamtgewicht des Interpolymers hat; und:

(a) ein $M_w/M_n$ von 1,7 bis 3,5 hat, mindestens einen Schmelzpunkt, $T_m$, in Grad Celsius und eine Dichte, d, in Gramm/Kubikzentimeter, wobei die Zahlenwerte von $T_m$ und d der folgenden Beziehung entsprechen:

$$T_m > -2002{,}9 + 4538{,}5(d) - 2422{,}2(d)^2;$$

oder
(b) ein $M_w/M_n$ von 1,7 bis 3,5 hat und **gekennzeichnet ist durch** eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > 0{,}1299(\Delta H) + 62{,}81 \text{ für } \Delta H \text{ größer als null und bis 130 J/g,}$$

$$\Delta T \geq 48°C \text{ für } \Delta H \text{ größer als 130 J/g,}$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak hat, dann beträgt die CRYSTAF-Temperatur 30°C; oder

(c) **gekennzeichnet ist durch** eine elastische Rückstellung, Re, in Prozent bei 300 Prozent Dehnung und 1 Zyklus, gemessen mit einer formgepressten Folie des Ethylen/α-Olefin-Interpolymers, und eine Dichte, d, in Gramm/Kubikzentimeter hat, wobei die Zahlenwerte von Re und d der folgenden Beziehung genügen, wenn das Ethylen/α-Olefin-Interpolymer im Wesentlichen frei ist von einer vernetzten Phase:

$$Re > 1481 - 1629(d);$$

oder

(d) einen Comonomergehalt einer TREF-Fraktion, die zwischen 40°C und 130°C eluiert, von größer oder gleich der Menge (-0,2013)T + 21,07 hat, wobei T der Zahlenwert der in °C gemessenen höchsten Elutionstemperatur ist; oder

(e) **gekennzeichnet ist durch** einen Speichermodul bei 25°C, G' (25°C), und einen Speichermodul bei 100°C, G' (100°C), wobei das Verhältnis von G' (25°C) zu G' (100°C) von 1:1 bis 10:1 beträgt.

**2.** Thermoplastisches Vulkanisat mit oder aus einem Reaktionsgemisch, das Folgendes umfasst:

(i) ein vulkanisierbares Elastomer;
(ii) ein thermoplastisches Polyolefin;
(iii) ein Vernetzungsmittel; und
(iv) ein Ethylen/α-Olefin-Blockinterpolymer, wobei das Ethylen/α-Olefin-Blockinterpolymer einen Ethylengehalt von mindestens 50 Gew.-% bezogen auf das Gesamtgewicht des Interpolymers hat und **gekennzeichnet ist durch** einen durchschnittlichen Blockindex von 0,1-0,3 und eine Molekulargewichtsverteilung, $M_w/M_n$, größer als 1,3.

**3.** Thermoplastisches Vulkanisat mit oder aus einem Reaktionsgemisch, das Folgendes umfasst:

(i) ein thermoplastisches Polyolefin;
(ii) ein Vernetzungsmittel; und
(iii) ein vulkanisierbares Elastomer, das ein Ethylen/α-Olefin/Dien-Blockinterpolymer ist, wobei das Ethylen/α-Olefin/Dien-Blockinterpolymer **gekennzeichnet ist durch** einen durchschnittlichen Blockindex von 0,1-03, und eine Molekulargewichtsverteilung $M_w/M_n$ größer als 1,3.

**4.** Thermoplastisches Vulkanisat mit oder aus einem Reaktionsgemisch, das Folgendes umfasst:

(i) ein thermoplastisches Polyolefin;
(ii) ein Vernetzungsmittel; und
(iii) ein vulkanisierbares Elastomer, das ein Ethylen/α-Olefin/Dien-Blockinterpolymer ist, wobei das Ethylen/α-Olefin/Dien-Blockinterpolymer:

(a) ein $M_w/M_n$ von 1,7 bis 3,5 hat, mindestens einen Schmelzpunkt, $T_m$, in Grad Celsius und eine Dichte, d, in Gramm/Kubikzentimeter, wobei die Zahlenwerte von $T_m$ und d der folgenden Beziehung entsprechen:

$$T_m > -2002{,}9 + 4538{,}5(d) - 2422{,}2(d)^2;$$

oder

(b) ein $M_w/M_n$ von 1,7 bis 3,5 hat und **gekennzeichnet ist durch** eine Schmelzwärme, ΔH in J/g, und ein Delta Menge, ΔT, in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > 0{,}1299(\Delta H) + 62{,}81 \text{ für } \Delta H \text{ größer als null und bis } 130 \text{ J/g},$$

$$\Delta T \geq 48°C \text{ für } \Delta H \text{ größer als } 130 \text{ J/g},$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C; oder

(c) **gekennzeichnet ist durch** eine elastische Rückstellung, Re, in Prozent bei 300 Prozent Dehnung und 1 Zyklus, gemessen mit einer formgepressten Folie des Ethylen/α-Olefin-Interpolymers, und eine Dichte, d, in Gramm/Kubikzentimeter hat, wobei die Zahlenwerte von Re und d der folgenden Beziehung genügen, wenn das Ethylen/α-Olefin-Interpolymer im Wesentlichen frei ist von einer vernetzten Phase:

$$Re > 1481 - 1629(d);$$

oder

(d) einen Comonomergehalt einer TREF-Fraktion, die zwischen 40°C und 130°C eluiert, von größer oder gleich der Menge (-0,2013)T + 21,07 hat, wobei T der Zahlenwert der in °C gemessenen höchsten Elutionstemperatur ist; oder

(e) **gekennzeichnet ist durch** einen Speichermodul bei 25°C, G' (25°C), und einen Speichermodul bei 100°C, G' (100°C), wobei das Verhältnis von G' (25°C) zu G' (100°C.) von 1:1 bis 10:1 beträgt.

**5.** Thermoplastisches Vulkanisat nach Anspruch 1, 2, 3 oder 4, wobei das Blockinterpolymer ein $M_w/M_n$ von 1,7 bis 3,5, mindestens einen Schmelzpunkt, $T_m$, in Grad Celsius, und eine Dichte, d, in Gramm/Kubikzentimeter hat, wobei die Zahlenwerte von $T_m$ und d der folgenden Beziehung entsprechen:

$$T_m > -2002{,}9 + 4538{,}5(d) - 2422{,}2(d)^2.$$

**6.** Thermoplastisches Vulkanisat nach Anspruch 1, 2, 3 oder 4, wobei das Blockinterpolymer ein $M_w/M_n$ von 1,7 bis 3,5 hat und **gekennzeichnet ist durch** eine Schmelzwärme, ΔH in J/g, und ein Delta Menge, ΔT in Grad Celsius, definiert als Temperaturunterschied zwischen dem höchsten DSK-Peak und dem höchsten CRYSTAF-Peak, wobei die Zahlenwerte von ΔT und ΔH die folgenden Beziehungen haben:

$$\Delta T > 0{,}1299(\Delta H) + 62{,}81 \text{ für } \Delta H \text{ größer als null und bis } 130 \text{ J/g},$$

$$\Delta T \geq 48°C \text{ für } \Delta H \text{ größer als } 130 \text{ J/g},$$

wobei der CRYSTAF-Peak unter Verwendung von mindestens 5 Prozent des kumulativen Polymers ermittelt wird, und wenn weniger als 5 Prozent des Polymers einen nachweisbaren CRYSTAF-Peak haben, dann beträgt die CRYSTAF-Temperatur 30°C.

**7.** Thermoplastisches Vulkanisat nach Anspruch 1, 2, 3 oder 4, wobei das Blockinterpolymer **gekennzeichnet ist durch** eine elastische Rückstellung, Re, in Prozent bei 300 Prozent Dehnung und 1 Zyklus, gemessen mit einer formgepressten Folie des Interpolymers, und eine Dichte, d, in Gramm/Kubikzentimeter hat, wobei die Zahlenwerte von Re und d der folgenden Beziehung genügen, wenn das Interpolymer im Wesentlichen frei ist von einer vernetzten Phase:

$$Re > 1481 - 1629(d).$$

**8.** Thermoplastisches Vulkanisat nach Anspruch 7, wobei die Zahlenwerte von Re und d der folgenden Beziehung genügen:

$$Re > 1491 - 1629(d).$$

**9.** Thermoplastisches Vulkanisat nach Anspruch 7, wobei die Zahlenwerte von Re und d der folgenden Beziehung genügen:

$$Re > 1501 - 1629(d).$$

**10.** Thermoplastisches Vulkanisat nach Anspruch 7, wobei die Zahlenwerte von Re und d der folgenden Beziehung genügen:

$$Re > 1511 - 1629(d).$$

**11.** Thermoplastisches Vulkanisat nach Anspruch 1, 2, 3 oder 4, wobei das Blockinterpolymer **gekennzeichnet ist durch** einen Speichermodul bei 25°C, G' (25°C) und einen Speichermodul bei 100°C, G' (100°C), wobei das Verhältnis von G' (25°C) zu G' (100°C) von 1:1 bis 10:1 beträgt.

**12.** Thermoplastisches Vulkanisat nach Anspruch 1 oder 2, wobei das α-Olefin Styrol, Propylen, 1-bauten, 1-Hexen, 1-Octen, 4-Methyl-1-penten, 1-Decen oder eine Kombination davon ist.

**13.** Thermoplastisches Vulkanisat nach Anspruch 3 oder 4, wobei das Ethylen/α-Olefin/Dien-Interpolymer ein Ethylen/Propylen/Dien-Copolymer (EPDM-Copolymer) ist.

**14.** Thermoplastisches Vulkanisat nach Anspruch 13, wobei das Dien 5-Ethyliden-2-norbornen, 1,4-Hexadien oder eine Kombination davon ist.

**15.** Thermoplastisches Vulkanisat nach Anspruch 1, 2, 3 oder 4, wobei das Interpolymer einen Schmelzindex im Bereich von 5 bis 500 g/10 Minuten hat, gemessen nach ASTM D-1238, Bedingung 190°C/2,16 kg.

**16.** Thermoplastisches Vulkanisat nach Anspruch 1, 2, 3 oder 4, wobei das Interpolymer im Bereich von 5 Gew.-% bis 95 Gew.-% der gesamten Zusammensetzung vorliegt.

**17.** Thermoplastisches Vulkanisat nach Anspruch 1, 2, 3 oder 4, wobei das Interpolymer im Bereich von 5 Gew.-% bis 45 Gew.-% der gesamten Zusammensetzung vorliegt.

**18.** Thermoplastisches Vulkanisat nach Anspruch 1, 2, 3 oder 4, wobei das Polyolefin ein Homopolymer ist.

**19.** Thermoplastisches Vulkanisat nach Anspruch 1, 2, 3 oder 4, wobei das Polyolefin ein Polypropylen ist.

**20.** Thermoplastisches Vulkanisat nach Anspruch 1, 2, 3 oder 4, wobei das Polyolefin ein Polyethylen ist.

**21.** Thermoplastisches Vulkanisat nach Anspruch 1, 2, 3 oder 4, wobei das vulkanisierbare Elastomer ein Ethylen-höheres-α-Olefin-Copolymer oder ein Terpolymer ist.

**22.** Fertigungsgegenstand aus dem thermoplastischen Vulkanisat nach einem der Ansprüche 1 bis 21.

**Revendications**

**1.** Vulcanisat thermoplastique qui comprend, ou qui est accessible à partir d'un mélange réactionnel comprenant :

i) un élastomère vulcanisable,
ii) une polyoléfine thermoplastique,
iii) un agent de réticulation,
iv) et un interpolymère à blocs d'éthylène et d'alpha-oléfine,

lequel interpolymère d'éthylène et d'alpha-oléfine comporte des motifs dérivés de l'éthylène en une quantité représentant au moins 50 % du poids total de cet interpolymère, et :

a) présente un indice Mw/Mn valant de 1,7 à 3,5, et au moins un point de fusion Tm et une masse volumique d dont les valeurs numériques, exprimées respectivement en degrés Celsius et en grammes par centimètre-cube, vérifient l'inégalité suivante :

$$Tm > -2002{,}9 + 4538{,}5(d) - 2422{,}2(d)^2 \;;$$

b) ou présente un indice Mw/Mn valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour 0

$$< \Delta H \leq 130 \text{ J/g}, \ \Delta T > -0{,}1299(\Delta H) + 62{,}81$$

et pour

$$\Delta H > 130 \text{ J/g}, \ \Delta T \geq 48 \text{ °C},$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable ;

c) ou se **caractérise par** une recouvrance élastique Re pour une déformation de 300 % et 1 cycle, exprimée en pourcentage et mesurée sur un film d'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d) \;;$$

d) ou présente, dans la fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction ;
e) ou se **caractérise par** un module de conservation à 25 °C $G'_{25}$ et un module de conservation à 100 °C $G'_{100}$ qui ont des valeurs telles que le rapport $G'_{25}/G'_{100}$ vaut de 1/1 à 10/1.

**2.** Vulcanisat thermoplastique qui comprend, ou qui est accessible à partir d'un mélange réactionnel comprenant :

i) un élastomère vulcanisable,
ii) une polyoléfine thermoplastique,

iii) un agent de réticulation,
iv) et un interpolymère à blocs d'éthylène et d'alpha-oléfine,

lequel interpolymère à blocs d'éthylène et d'alpha-oléfine comporte des motifs dérivés de l'éthylène en une quantité représentant au moins 50 % du poids total de cet interpolymère, et se caractérisepar un indice de bloc moyen de 0,1 à 0,3 et un indice Mw/Mn de distribution des masses moléculaires supérieur à 1,3.

**3.** Vulcanisat thermoplastique qui comprend, ou qui est accessible à partir d'un mélange réactionnel comprenant :

i) une polyoléfine thermoplastique,
ii) un agent de réticulation,
iii) et un élastomère vulcanisable, qui est un interpolymère à blocs d'éthylène, d'alpha-oléfine et de diène,

lequel interpolymère à blocs d'éthylène, d'alpha-oléfine et de diène se **caractérise par** un indice de bloc moyen de 0,1 à 0,3 et un indice Mw/Mn de distribution des masses moléculaires supérieur à 1,3.

**4.** Vulcanisat thermoplastique qui comprend, ou qui est accessible à partir d'un mélange réactionnel comprenant :

i) une polyoléfine thermoplastique,
ii) un agent de réticulation,
iii) et un élastomère vulcanisable, qui est un interpolymère à blocs d'éthylène, d'alpha-oléfine et de diène,

lequel interpolymère à blocs d'éthylène, d'alpha-oléfine et de diène

a) présente un indice Mw/Mn valant de 1,7 à 3,5, et au moins un point de fusion Tm et une masse volumique d dont les valeurs numériques, exprimées respectivement en degrés Celsius et en grammes par centimètre-cube, vérifient l'inégalité suivante :

$$Tm > -2002,9 + 4538,5(d) - 2422,2(d)^2 \;;$$

b) ou présente un indice Mw/Mn valant de 1,7 à 3,5, et se **caractérise par** une chaleur de fusion ΔH, exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour

$$0 < \Delta H \leq 130 \text{ J/g}, \ \Delta T > -0,1299(\Delta H) + 62,81$$

et pour

$$\Delta H > 130 \text{ J/g}, \ \Delta T \geq 48 \text{ °C},$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable ;

c) ou se **caractérise par** une recouvrance élastique Re pour une déformation de 300 % et 1 cycle, exprimée en pourcentage et mesurée sur un film d'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d)\ ;$$

d) ou présente, dans la fraction éluée entre 40 et 130 °C en fractionnement TREF, une teneur en comonomère qui est supérieure ou égale à la valeur de l'expression -0,2013(T) + 21,07 où T représente la valeur numérique, en °C, de la température du pic d'élution de cette fraction ;
e) ou se **caractérise par** un module de conservation à 25 °C $G'_{25}$ et un module de conservation à 100 °C $G'_{100}$ qui ont des valeurs telles que le rapport $G'_{25}/G'_{100}$ vaut de 1/1 à 10/1.

**5.** Vulcanisat thermoplastique conforme à la revendication 1, 2, 3 ou 4, dans lequel l'interpolymère à blocs présente un indice Mw/Mn valant de 1,7 à 3,5, et au moins un point de fusion Tm et une masse volumique d dont les valeurs numériques, exprimées respectivement en degrés Celsius et en grammes par centimètre-cube, vérifient l'inégalité suivante :

$$Tm > -2002,9 + 4538,5(d) - 2422,2(d)^2.$$

**6.** Vulcanisat thermoplastique conforme à la revendication 1, 2, 3 ou 4, dans lequel l'interpolymère à blocs présente un indice Mw/Mn valant de 1,7 à 3,5, et se **caractérise par** une chaleur de fusion ΔH exprimée en J/g, et une quantité ΔT, exprimée en degrés Celsius et définie comme étant la différence de température entre le plus grand pic observé en analyse AED et le plus grand pic observé en analyse CRYSTAF, dont les valeurs numériques vérifient les inégalités suivantes :

pour

$$0 < \Delta H \leq 130\ J/g,\ \Delta T > -0,1299(\Delta H) + 62,81$$

et pour

$$\Delta H > 130\ J/g,\ \Delta T \geq 48\ °C,$$

étant entendu que le pic CRYSTAF est déterminé pour au moins 5 % de polymère en pourcentage cumulé, et que l'on prend la valeur de 30 °C pour la température du pic CRYSTAF si une fraction de moins de 5 % du polymère donne un pic CRYSTAF identifiable.

**7.** Vulcanisat thermoplastique conforme à la revendication 1, 2, 3 ou 4, dans lequel l'interpolymère à blocs se **caractérise par** une recouvrance élastique Re pour une déformation de 300 % et 1 cycle, exprimée en pourcentage et mesurée sur un film d'interpolymère d'éthylène et d'alpha-oléfine obtenu par moulage par compression, et présente une masse volumique d, exprimée en grammes par centimètre-cube, dont les valeurs numériques vérifient l'inégalité suivante quand l'interpolymère d'éthylène et d'alpha-oléfine ne contient pratiquement pas de phase réticulée :

$$Re > 1481 - 1629(d).$$

**8.** Vulcanisat thermoplastique conforme à la revendication 7, dans lequel les valeurs numériques de Re et d vérifient l'inégalité suivante :

$$Re > 1491 - 1629(d).$$

**9.** Vulcanisat thermoplastique conforme à la revendication 7, dans lequel les valeurs numériques de Re et d vérifient l'inégalité suivante :

$$Re > 1501 - 1629(d).$$

**10.** Vulcanisat thermoplastique conforme à la revendication 7, dans lequel les valeurs numériques de Re et d vérifient l'inégalité suivante :

$$Re > 1511 - 1629(d).$$

**11.** Vulcanisat thermoplastique conforme à la revendication 1, 2, 3 ou 4, dans lequel l'interpolymère à blocs se **caractérise par** un module de conservation à 25 °C $G'_{25}$ et un module de conservation à 100 °C $G'_{100}$ qui ont des valeurs telles que le rapport $G'_{25}/G'_{100}$ vaut de 1/1 à 10/1.

**12.** Vulcanisat thermoplastique conforme à la revendication 1 ou 2, dans lequel l'alpha-oléfine est du styrène, du propylène, du but-1-ène, de l'hex-1-ène, de l'oct-1-ène, du 4-méthyl-pent-1-ène ou du déc-1-ène, ou une combinaison de ces alpha-oléfines.

**13.** Vulcanisat thermoplastique conforme à la revendication 3 ou 4, dans lequel l'interpolymère à blocs d'éthylène, d'alpha-oléfine et de diène est un copolymère d'éthylène, de propylène et de diène (EPDM).

**14.** Vulcanisat thermoplastique conforme à la revendication 13, dans lequel le diène est du 5-éthylidène-2-norbornène ou du 1,4-hexadiène, ou une combinaison de ces diènes.

**15.** Vulcanisat thermoplastique conforme à la revendication 1, 2, 3 ou 4, dans lequel l'interpolymère présente un indice de fluidité à chaud, mesuré selon la norme ASTM D-1238, à 190 °C sous 2,16 kg, de 5 à 500 g par 10 minutes.

**16.** Vulcanisat thermoplastique conforme à la revendication 1, 2, 3 ou 4, dans lequel l'interpolymère se trouve présent en une quantité représentant de 5 à 95 % du poids total de la composition.

**17.** Vulcanisat thermoplastique conforme à la revendication 1, 2, 3 ou 4, dans lequel l'interpolymère se trouve présent en une quantité représentant de 5 à 45 % du poids total de la composition.

**18.** Vulcanisat thermoplastique conforme à la revendication 1, 2, 3 ou 4, dans lequel la polyoléfine est un homopolymère.

**19.** Vulcanisat thermoplastique conforme à la revendication 1, 2, 3 ou 4, dans lequel la polyoléfine est un polypropylène.

**20.** Vulcanisat thermoplastique conforme à la revendication 1, 2, 3 ou 4, dans lequel la polyoléfine est un polyéthylène.

**21.** Vulcanisat thermoplastique conforme à la revendication 1, 2, 3 ou 4, dans lequel l'élastomère vulcanisable est un copolymère éthylène et d'alpha-oléfine supérieure ou un terpolymère.

**22.** Article fabriqué à partir d'un vulcanisat thermoplastique conforme à l'une des revendications 1 à 21.

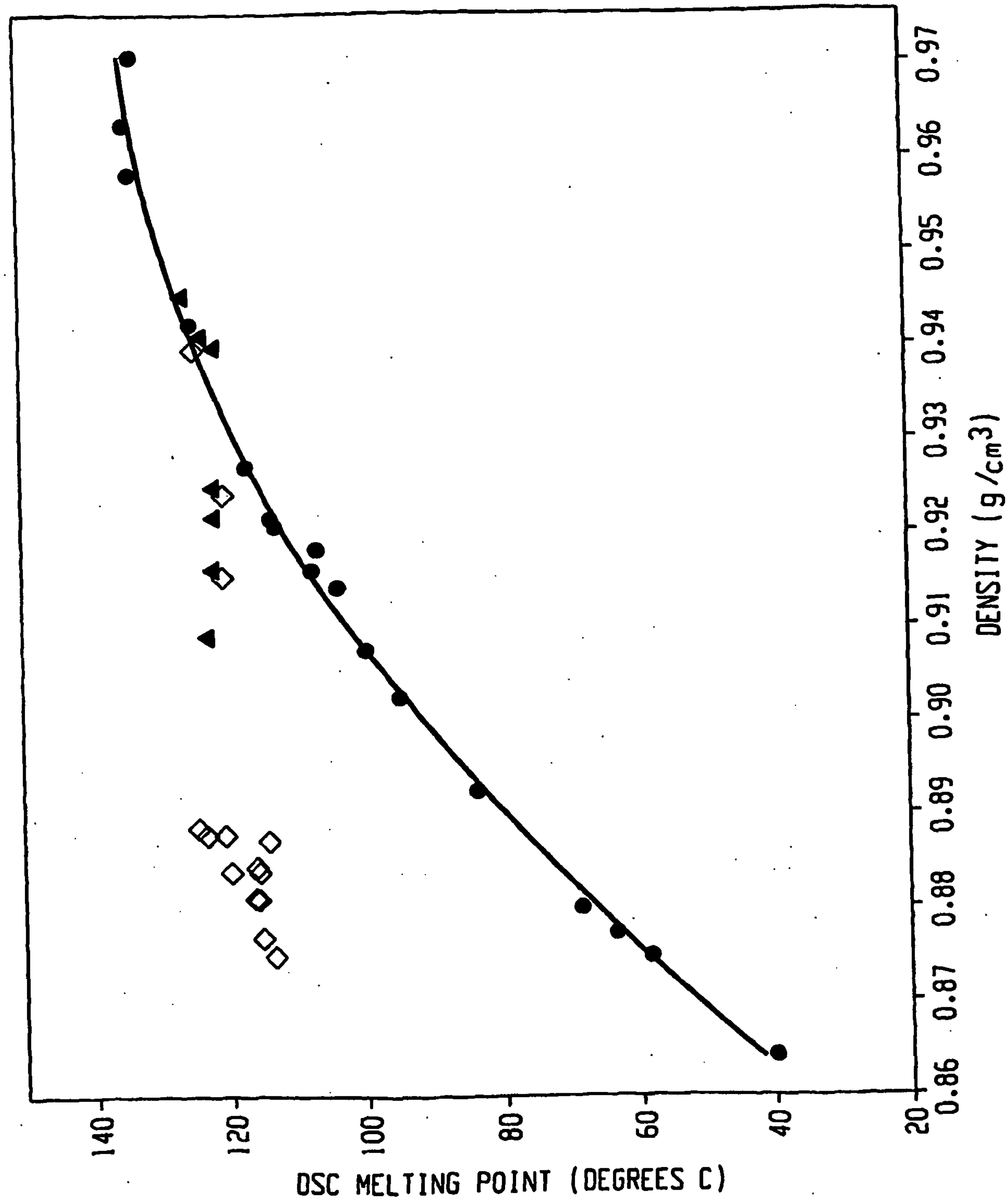
DSC MELTING POINT (DEGREES C)
DENSITY (g/cm3)
20
40
60
80
100
120
140
0.86
0.87
0.88
0.89
0.90
0.91
0.92
0.93
0.94
0.95
0.96
0.97

Fig. 1

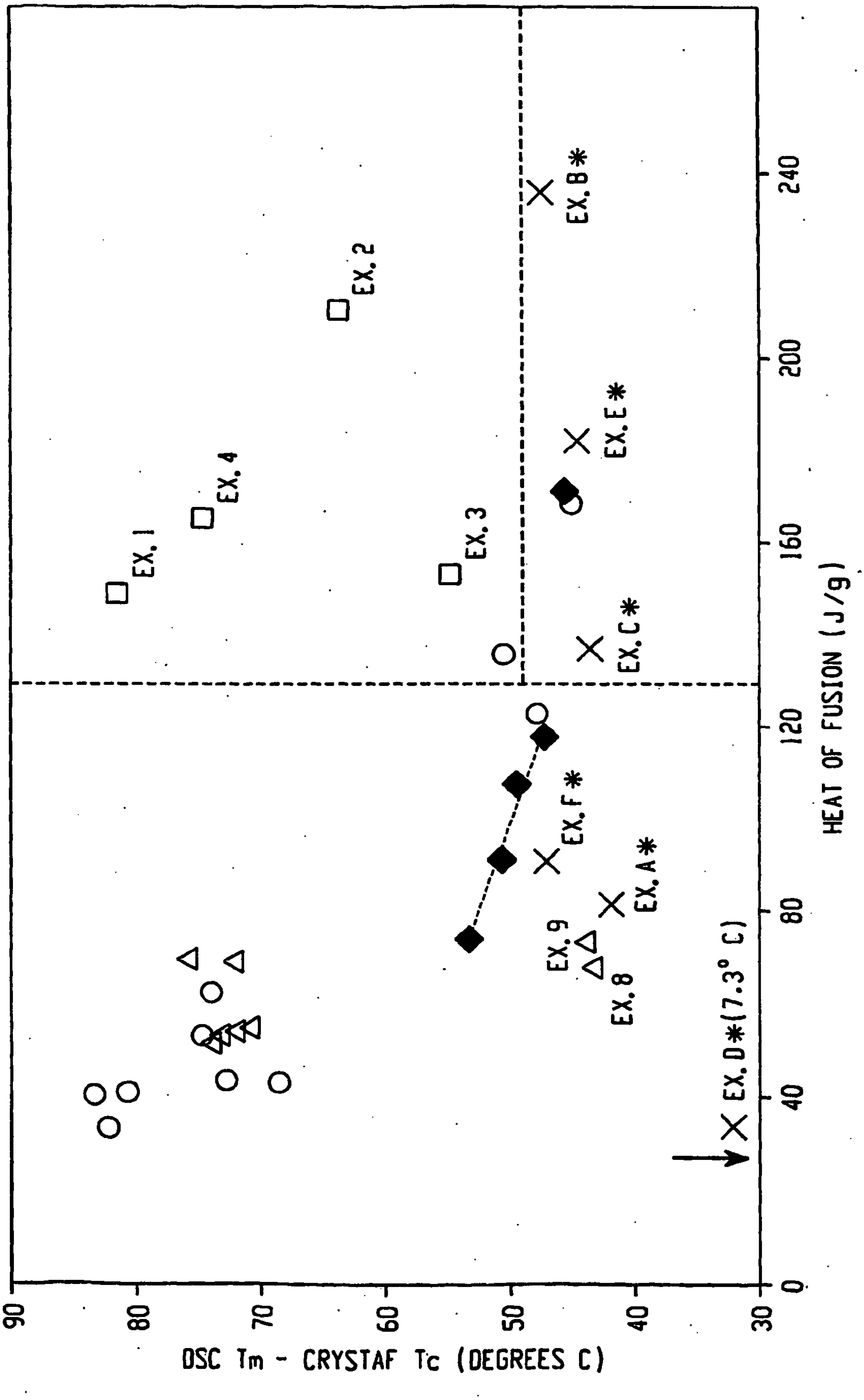
DSC Tm - CRYSTAF Tc (DEGREES C)
HEAT OF FUSION (J/g)
90
80
70
60
50
40
30
0
40
80
120
160
200
240
EX. 1
EX. 2
EX. 3
EX. 4
EX. 8
EX. 9
EX. A*
EX. B*
EX. C*
EX. D*(7.3° C)
EX. E*
EX. F*

Fig. 2

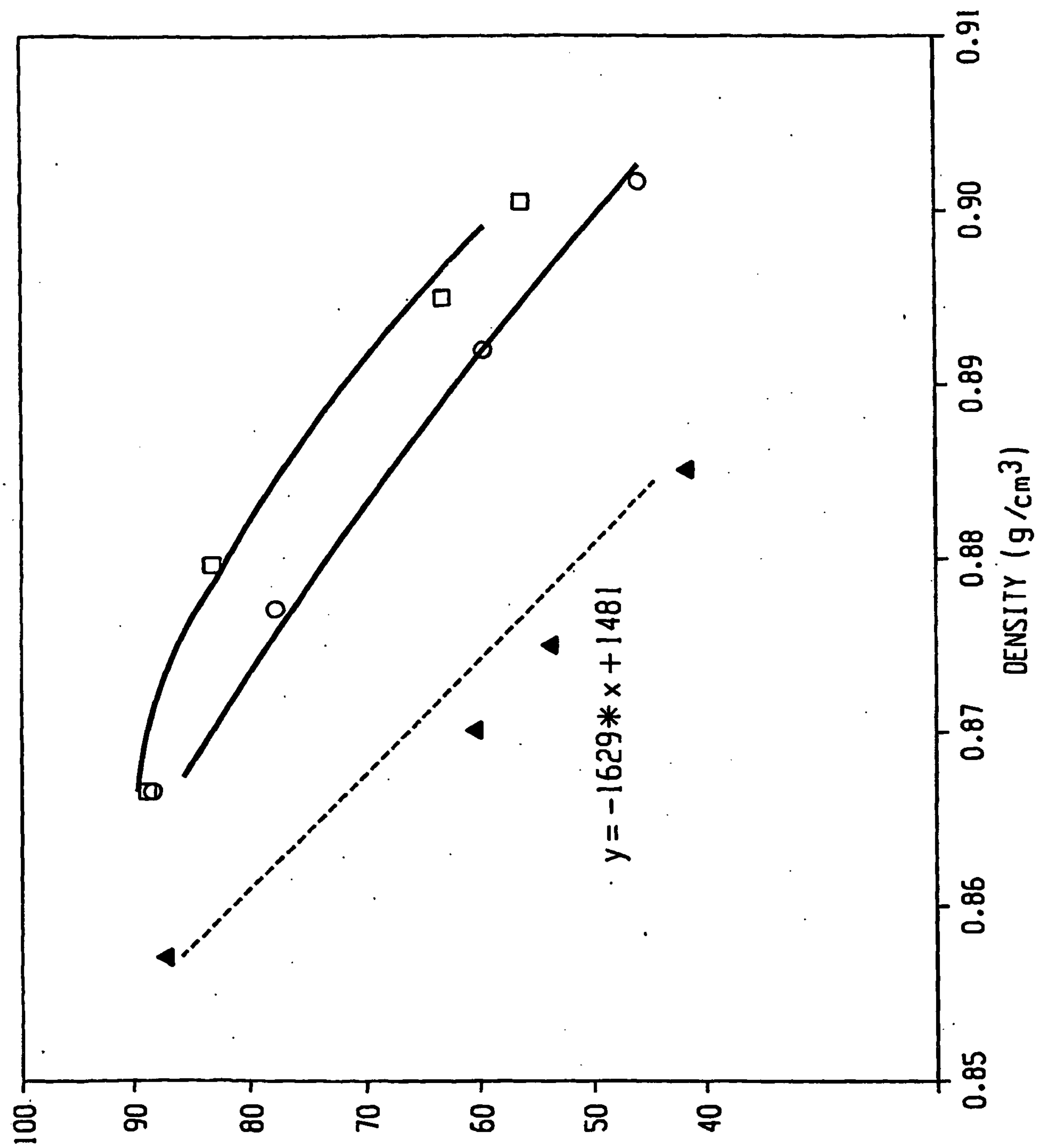
100
90
80
70
60
50
40
RECOVERY (PERCENT)
0.85
0.86
0.87
0.88
0.89
0.90
0.91
DENSITY (g/cm3)
y = -1629 * x + 1481

Fig. 3

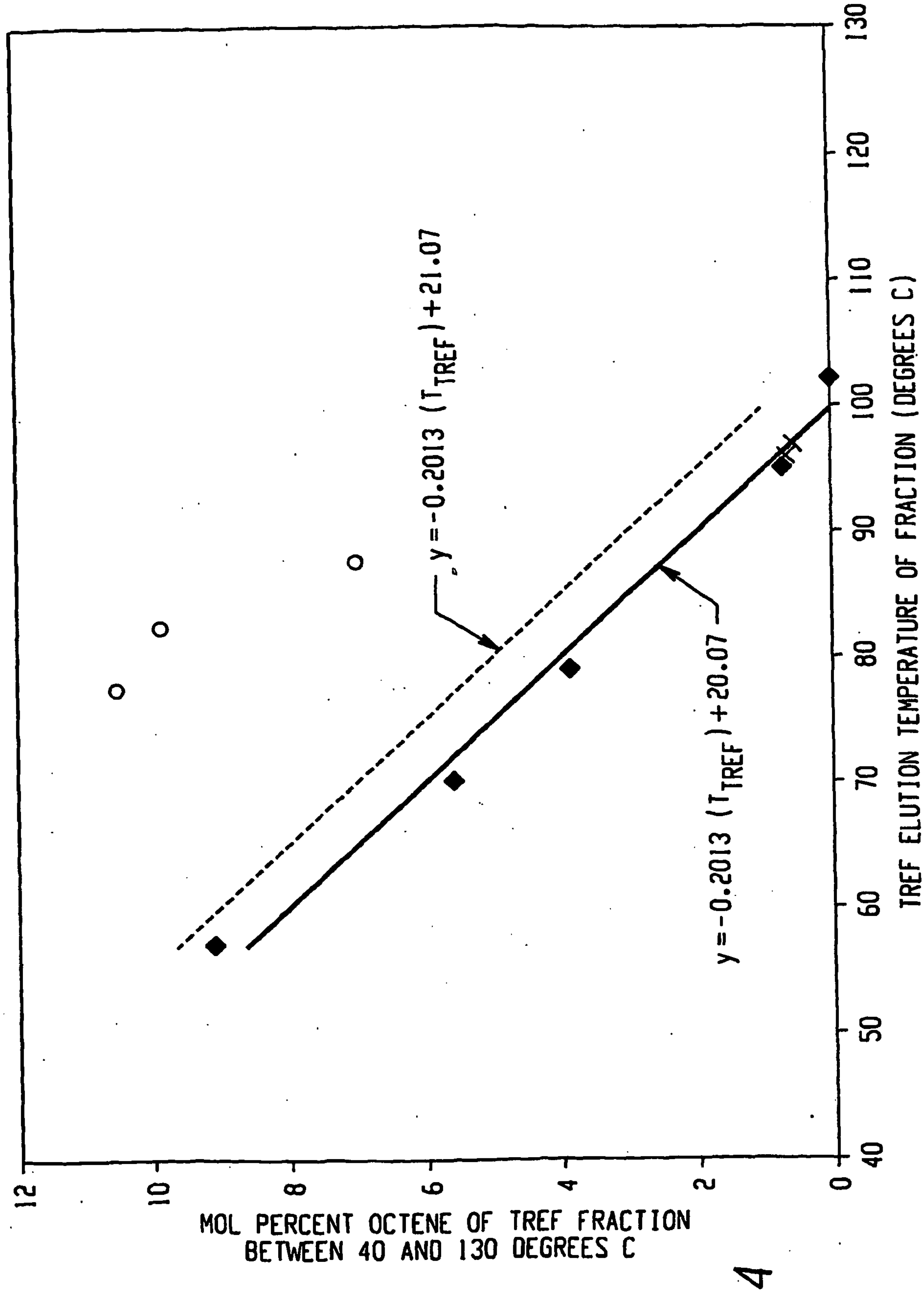

MOL PERCENT OCTENE OF TREF FRACTION BETWEEN 40 AND 130 DEGREES C
TREF ELUTION TEMPERATURE OF FRACTION (DEGREES C)
y = -0.2013 (T_TREF) + 21.07
y = -0.2013 (T_TREF) + 20.07
0
2
4
6
8
10
12
40
50
60
70
80
90
100
110
120
130


Fig. 4

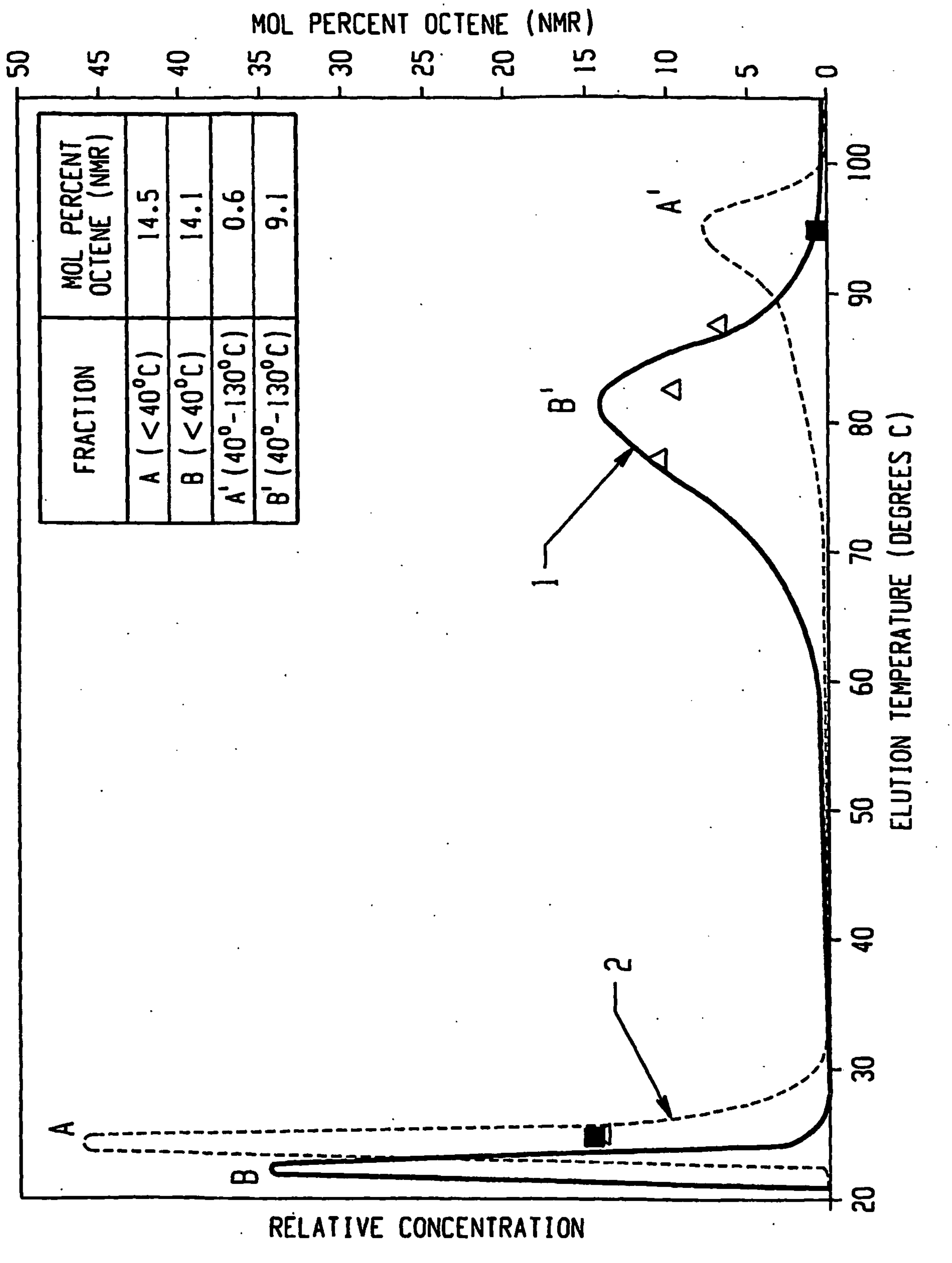
MOL PERCENT OCTENE (NMR)
50
45
40
35
30
25
20
15
10
5
0
FRACTION
MOL PERCENT OCTENE (NMR)
A (<40°C)
14.5
B (<40°C)
14.1
A' (40°-130°C)
0.6
B' (40°-130°C)
9.1
A
B
A'
B'
1
2
20
30
40
50
60
70
80
90
100
ELUTION TEMPERATURE (DEGREES C)
RELATIVE CONCENTRATION

Fig. 5

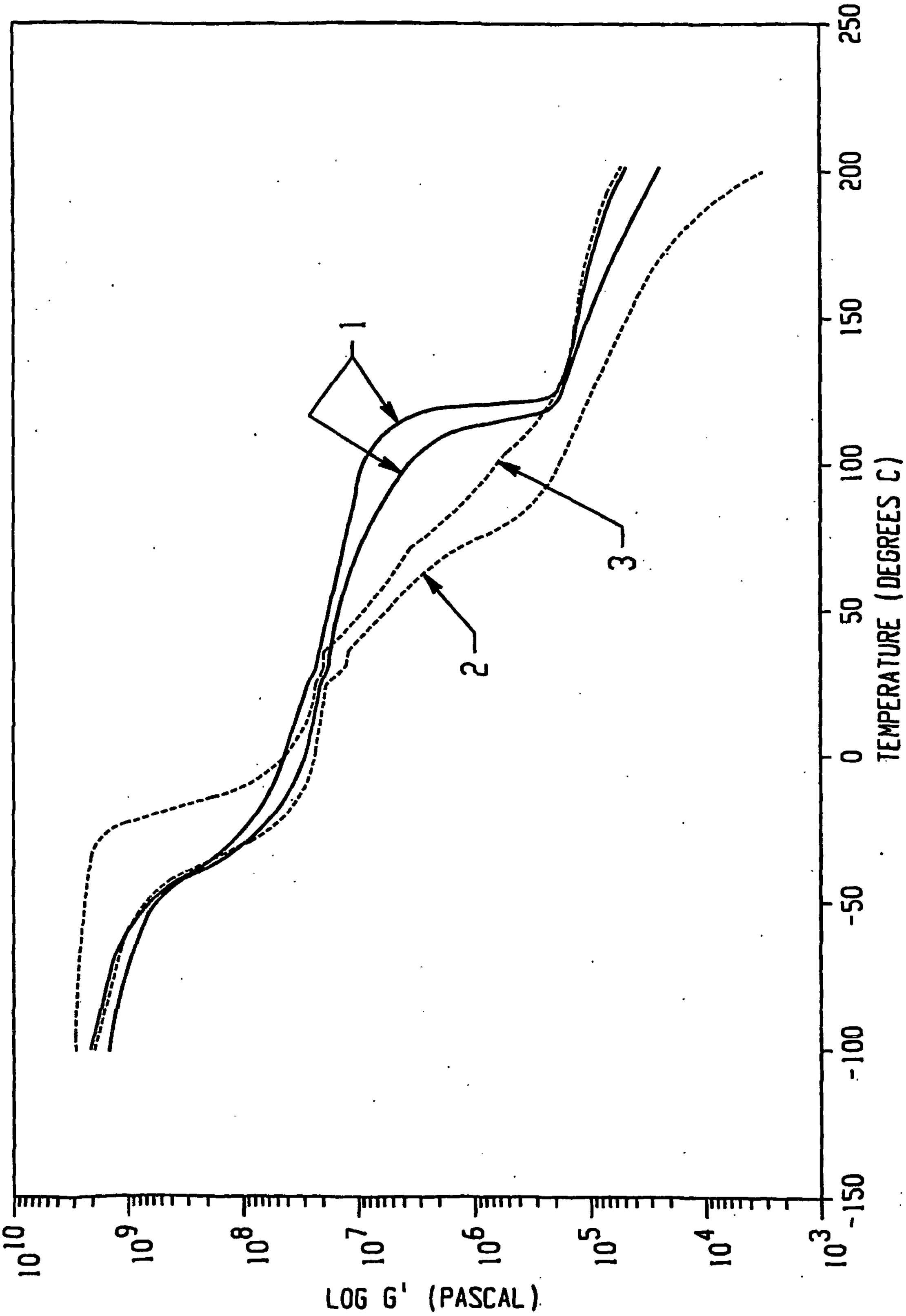

LOG G' (PASCAL)
$10^{10}$
$10^{9}$
$10^{8}$
$10^{7}$
$10^{6}$
$10^{5}$
$10^{4}$
$10^{3}$
TEMPERATURE (DEGREES C)
-150
-100
-50
0
50
100
150
200
250
1
2
3


Fig. 6

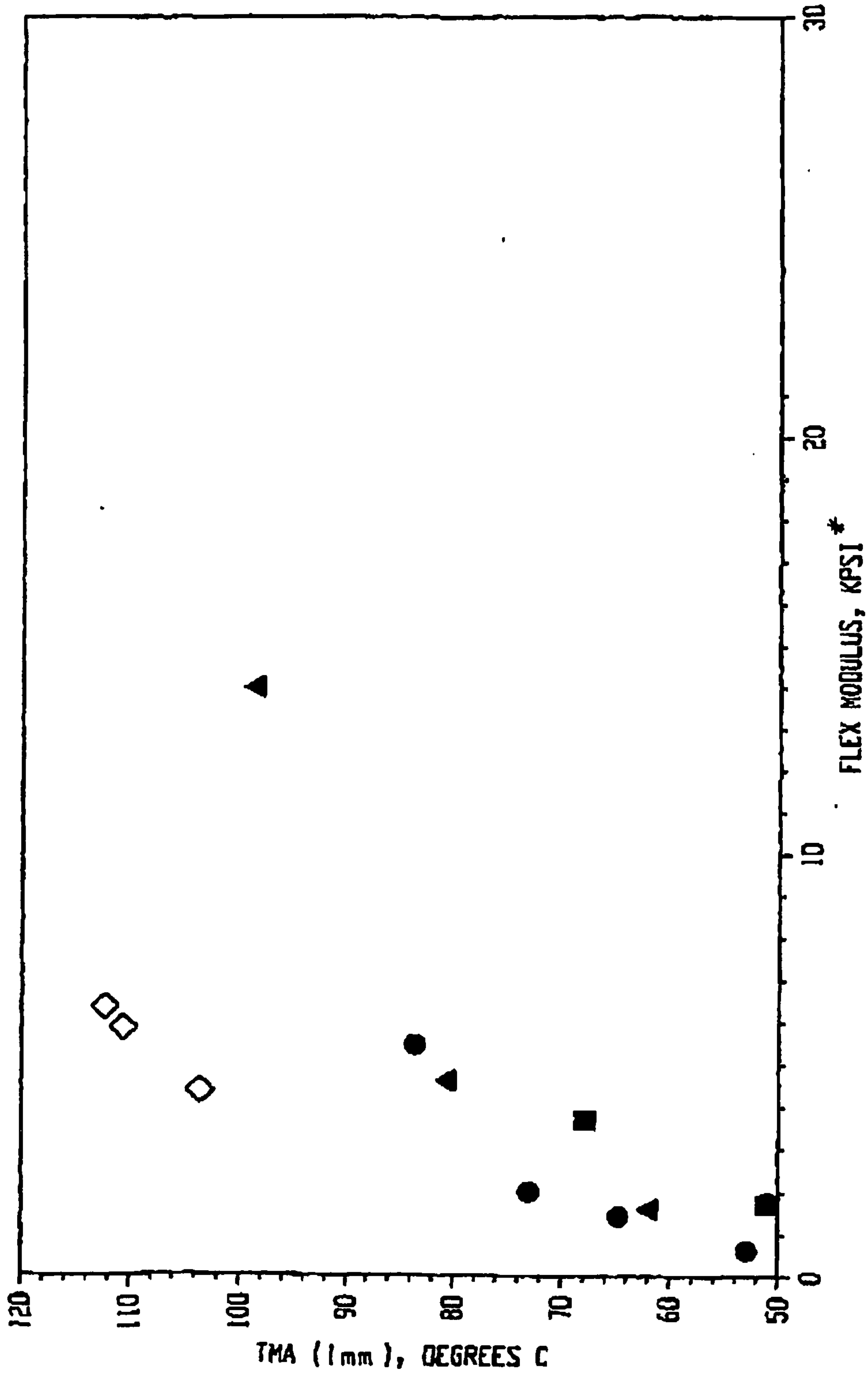


Fig. 7

* 1kpsi = 6.9MPa

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60199930 A
- US 55390604 P
- US 66293705 P
- US 66293905 P
- US 605662938 A
- US 2005008916 W
- US 2005008915 W
- US 2005008917 W
- WO 0340195 A
- WO 2003 A
- US 0204017 A
- US SN10429024 A
- WO 0424740 A
- US 20040010103 A
- US P6268444 B
- US 2003004286 A
- US 4762890 A
- US 4927888 A
- US 4950541 A
- US 3645992 A
- US 5272236 A
- US 5278272 A
- US 5665800 A
- US 5783638 A
- US 6359073 B
- US 01723000 A
- WO 0078858 A2
- US 13357698 A
- US 05771397 P
- US 3893989 A
- US 4113802 A
- US 4434264 A
- US 4459385 A
- US 4489195 A
- US 4493923 A
- US 4508872 A
- US 4535125 A
- US 4588775 A
- US 4843129 A
- US 4966944 A
- US 5011891 A
- US 5034449 A
- US 5066723 A
- US 5177147 A
- US 5314746 A
- US 5336721 A
- US 5367022 A
- US 6207754 B
- US 6268064 B
- WO 9910424 A
- US 4311628 A
- US 4521566 A
- US 4916198 A
- US 5047446 A
- US 5047485 A
- US 5414027 A
- US 5849409 A
- WO 0153078 A
- WO 9720888 A
- WO 9720889 A
- WO 9910423 A
- WO 9916797 A
- US 4130535 A
- US 4111897 A
- US 4594390 A
- US 4645793 A
- US 4808643 A
- US 4894408 A
- US 5393796 A
- US 5936038 A
- US 5985970 A
- US 6277916 A
- US 3287440 A, Giller
- US 3709840 A, Gerstin
- US 595242 A
- US 2972600 A
- US 3093613 A
- US 3284421 A, Breslow
- US 3297674 A, Breslow
- US 4803244 A
- US 5597867 A
- US 6251998 B, Medsker
- US 3203937 A
- US 3037954 A
- US 3806558 A
- US 4104210 A
- US 4116914 A
- US 4141863 A
- US 4141878 A
- US 4173556 A
- US 4207404 A
- US 4271049 A
- US 4287324 A
- US 4289570 A
- US 4299931 A
- US 4338413 A
- US 3963679 A
- US 4250292 A

- DE 2302546
- DE 2473764
- DE 2549372
- US 5158986 A
- US 5160674 A
- US 5334356 A
- US 5866053 A
- US 6169122 A
- US 6284810 A
- US 6294115 A
- US 6329463 B
- US 6288171 B
- US 6277916 B
- US 6270896 B
- US 6235166 B
- US 6221451 B
- US 6207752 B
- US 6174962 B
- US 6169145 B
- US 6150464 A
- US 6147160 A
- US 6100334 A
- US 6084031 A
- WO 6069202 A
- US 6066697 A
- US 6028137 A
- US 6020427 A
- US 5977271 A
- US 5960977 A
- US 5957164 A
- US 5952425 A
- US 5939464 A
- US 5869591 A
- US 5750625 A
- US 5744238 A
- US 5621045 A
- US 4783579 A
- US 4798081 A
- US P59199883 B
- US P6395671 B
- US PS6248540 A
- US 6030917 A
- US 6362309 B
- US 6306658 B
- US 6316663 B
- US 19993006 P

**Non-patent literature cited in the description**


- **Elliott et al.** *J. App. Poly. Sci.,* 1970, vol. 14, 2947-2963
- **Markovich ; Ronald P. ; Hazlitt, Lonnie G. ; Smith, Linley.** Development of gel-permeation chromatography-Fourier transform infrared spectroscopy for characterization of ethylene-based polyolefin copolymers. *Polymeric Materials Science and Engineering,* 1991, vol. 65, 98-100
- **Deslauriers, P.J. ; Rohlfing, D.C. ; Shieh, E.T.** Quantifying short chain branching microstructures in ethylene-1-olefin copolymers using size exclusion chromatography and Fourier transform infrared spectroscopy (SEC-FTIR). *Polymer,* 2002, vol. 43, 59-170
- **E.P. Moore, Jr.** Polypropylene Handbook. Hanser Publishers, 1996, 220-221
- Materials and Compounding Ingredients for Rubber. Rubber World Blue Book, 1975, 406-410
- Encyclopedia of Chemical Technology. Interscience Publishers, 1968, vol. 17
- Organic Peroxides. Wiley-Interscience, 1970, vol. 1
- **Williams ; Ward.** *J. Polym. Sci., Polym. Let.,* 1968, vol. 6, 621
- **Wilde, L. ; Ryle, T.R. ; Knobeloch, D.C. ; Peat, I.R.** Determination of Branching Distributions in Polyethylene and Ethylene Copolymers. *J. Polym. Sci.,* 1982, vol. 20, 441-455
- **Randall, J.C.** *JMS-Rev. Macromol. Chem. Phys.,* 1989, vol. C29, 201-317